(19) Europäisches Patentamt
European Patent Office
Office européen des brevets

(11) **EP 4 560 964 A1**

(12) **EUROPEAN PATENT APPLICATION**
published in accordance with Art. 153(4) EPC

(43) Date of publication:
**28.05.2025 Bulletin 2025/22**

(21) Application number: **23851573.8**

(22) Date of filing: **21.07.2023**

(51) International Patent Classification (IPC):
***H04L 5/00*** *(2006.01)*

(52) Cooperative Patent Classification (CPC):
**H04L 5/00**

(86) International application number:
**PCT/CN2023/108632**

(87) International publication number:
**WO 2024/032351 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210972325**

(71) Applicant: **Huawei Technologies Co., Ltd.**
**Shenzhen, Guangdong 518129 (CN)**

(72) Inventors:
- **GAO, Xiang**
  **Shenzhen, Guangdong 518129 (CN)**
- **DONG, Changzhao**
  **Shenzhen, Guangdong 518129 (CN)**
- **ZHANG, Zhening**
  **Shenzhen, Guangdong 518129 (CN)**
- **LIU, Xianda**
  **Shenzhen, Guangdong 518129 (CN)**
- **LIU, Kunpeng**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

# (54) DMRS PORT INDICATION METHOD AND APPARATUS, AND STORAGE MEDIUM

(57) This application discloses a DMRS port indication method and apparatus, and a storage medium. A dmrs-Type and a maxLength are obtained. A first relationship is determined, where the first relationship is associated with the dmrs-Type and the maxLength, the first relationship includes at least one candidate value of an antenna port field and candidate antenna ports corresponding to each of the at least one candidate value of the antenna port field, a quantity of candidate antenna ports corresponding to each candidate value is greater than or equal to N, N is greater than 4, and the candidate antenna ports corresponding to each candidate value are included in a first antenna port group and/or a second antenna port group. DCI is received, corresponding antenna ports are determined based on one value indicated by the antenna port field in the DCI, and DMRSs corresponding to the determined antenna ports are received, to implement an indication for DMRS antenna ports of more than four streams.

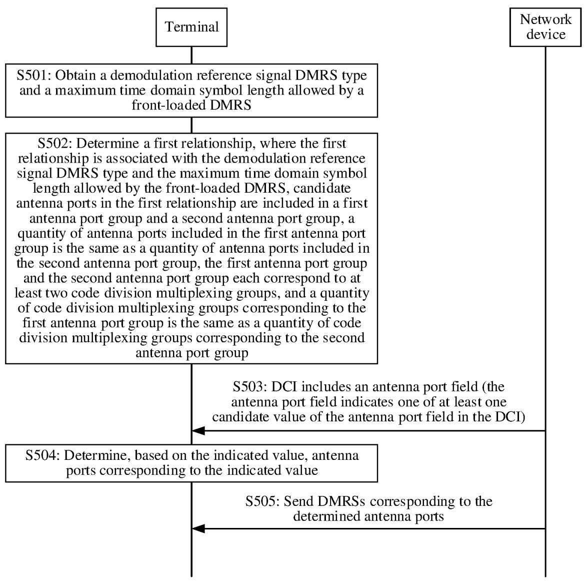


FIG. 5

EP 4 560 964 A1

Processed by Luminess, 75001 PARIS (FR)

## Description

This application claims priority to Chinese Patent Application No. 202210972325.0, filed with the China National Intellectual Property Administration on August 12, 2022 and entitled "DMRS PORT INDICATION METHOD AND APPARATUS, AND STORAGE MEDIUM", which is incorporated herein by reference in its entirety.

## TECHNICAL FIELD

This application relates to the field of communication technologies, and in particular, to a demodulation reference signal (demodulation reference signal, DMRS) port indication method and apparatus, and a storage medium.

## BACKGROUND

A DMRS is used to estimate an equivalent channel matrix undergone by a data channel or a control channel, and therefore is used for data detection and demodulation.

As wireless communication devices are deployed more densely in the future, a quantity of terminals further increases. This imposes a higher requirement on a quantity of transport streams (a rank) in a multi-input multi-output (multi-input multi-output, MIMO) system, and more DMRS ports are needed to support a larger quantity of transport streams (which is greater than 12 streams). Currently, a total quantity of orthogonal DMRS ports supported in the 3GPP NR protocol is up to 12, which cannot meet a development requirement of a future communication system. To support more DMRS ports without increasing an additional time-frequency resource, an orthogonal DMRS port or a DMRS port with low cross-correlation may be expanded in code domain or frequency domain by using a proper DMRS sequence design.

However, in currently designed uplink transmission, each user can support only transmission of up to four streams (rank 4). How to support an indication for a DMRS port of up to a rank 8 is a problem to be resolved. In addition, for downlink transmission, currently, indications for DMRS ports of a rank 5 to a rank 8 cannot indicate expanded DMRS ports, and an advantage of higher density of the expanded DMRS port in a limited time-frequency resource cannot be fully utilized. As a result, large DMRS resource overheads exist.

## SUMMARY

This application provides a DMRS port indication method and apparatus, and a storage medium, to implement an indication for DMRS antenna ports of more than four streams.

According to a first aspect, a DMRS port indication method is provided. The method includes: obtaining a demodulation reference signal DMRS type dmrs-Type and a maximum time domain symbol length maxLength allowed by a front-loaded DMRS; determining a first relationship, where the first relationship has an association relationship with the dmrs-Type and the maxLength, the first relationship includes at least one candidate value of an antenna port field and candidate antenna ports corresponding to each of the at least one candidate value of the antenna port field, a quantity of candidate antenna ports corresponding to each candidate value is greater than or equal to N, the candidate antenna ports corresponding to each candidate value are included in a first antenna port group and/or a second antenna port group, a quantity of antenna ports included in the first antenna port group is the same as a quantity of antenna ports included in the second antenna port group, the first antenna port group and the second antenna port group each correspond to at least two code division multiplexing groups, a quantity of code division multiplexing groups corresponding to the first antenna port group is the same as a quantity of code division multiplexing groups corresponding to the second antenna port group, and N is greater than 4; receiving downlink control information DCI, where the DCI includes the antenna port field, and the antenna port field indicates one of the at least one candidate value of the antenna port field in the DCI; determining, based on the indicated value, antenna ports corresponding to the indicated value; and receiving DMRSs corresponding to the determined antenna ports.

In this aspect, an indication for DMRS antenna ports of more than four streams is implemented.

The candidate antenna ports corresponding to each candidate value may be indexes of the candidate antenna ports.

The candidate antenna ports are relative to the antenna ports corresponding to the value indicated by the antenna port field in the DCI. The candidate antenna ports are antenna ports in a DMRS port index table. DMRSs may be sent on the antenna ports, or may not be sent on the antenna ports.

The code division multiplexing groups corresponding to the first antenna port group and the code division multiplexing groups corresponding to the second antenna port group are a plurality of identical code division multiplexing groups. DMRSs that correspond to the first antenna port group and the second antenna port group and that correspond to a same CDM group are multiplexed on a same time-frequency resource.

In a possible implementation, the obtaining a dmrs-Type and a maxLength includes: receiving first signaling, where the first signaling includes the dmrs-Type and the maxLength.

In this implementation, the dmrs-Type and the maxLength may be carried in the first signaling.

According to a second aspect, a DMRS port indication method is provided. The method includes: obtaining a demodulation reference signal DMRS type dmrs-Type and a maximum time domain symbol length maxLength allowed by a front-loaded DMRS; determining a first relationship, where the first relationship has an association relationship with the dmrs-Type and the maxLength, the first relationship includes at least one candidate value of an antenna port field and candidate antenna ports corresponding to each of the at least one candidate value of the antenna port field, a quantity of candidate antenna ports corresponding to each candidate value is greater than or equal to N, the candidate antenna ports corresponding to each candidate value are included in a first antenna port group and/or a second antenna port group, a quantity of antenna ports included in the first antenna port group is the same as a quantity of antenna ports included in the second antenna port group, the first antenna port group and the second antenna port group each correspond to at least two code division multiplexing groups, a quantity of code division multiplexing groups corresponding to the first antenna port group is the same as a quantity of code division multiplexing groups corresponding to the second antenna port group, and N is greater than 4; sending downlink control information DCI, where the DCI includes the antenna port field, and the antenna port field indicates one of the at least one candidate value of the antenna port field in the DCI; determining, based on the indicated value, antenna ports corresponding to the indicated value; and sending DMRSs corresponding to the determined antenna ports.

In this aspect, an indication for DMRS antenna ports of more than four streams is implemented.

In a possible implementation, the method further includes: sending first signaling, where the first signaling includes the dmrs-Type and the maxLength.

In this implementation, the dmrs-Type and the maxLength may be carried in the first signaling.

According to a third aspect, a DMRS port indication apparatus is provided. The DMRS port indication apparatus may implement the method in the first aspect. For example, the DMRS port indication apparatus may be a terminal or a chip system in the terminal. The method may be implemented by software, hardware, or hardware executing corresponding software.

In a possible implementation, the apparatus includes a transceiver unit and a processing unit. The processing unit is configured to obtain a demodulation reference signal DMRS type dmrs-Type and a maximum time domain symbol length maxLength allowed by a front-loaded DMRS; the processing unit is further configured to determine a first relationship, where the first relationship has an association relationship with the dmrs-Type and the maxLength, the first relationship includes at least one candidate value of an antenna port field and candidate antenna ports corresponding to each of the at least one candidate value of the antenna port field, a quantity of candidate antenna ports corresponding to each candidate value is greater than or equal to N, the candidate antenna ports corresponding to each candidate value are included in a first antenna port group and/or a second antenna port group, a quantity of antenna ports included in the first antenna port group is the same as a quantity of antenna ports included in the second antenna port group, the first antenna port group and the second antenna port group each correspond to at least two code division multiplexing groups, a quantity of code division multiplexing groups corresponding to the first antenna port group is the same as a quantity of code division multiplexing groups corresponding to the second antenna port group, and N is greater than 4; the transceiver unit is configured to receive downlink control information DCI, where the DCI includes the antenna port field, and the antenna port field indicates one of the at least one candidate value of the antenna port field in the DCI; the processing unit is further configured to determine, based on the indicated value, antenna ports corresponding to the indicated value; and the transceiver unit is further configured to receive DMRSs corresponding to the determined antenna ports.

Optionally, the transceiver unit is further configured to receive first signaling, where the first signaling includes the dmrs-Type and the maxLength.

According to a fourth aspect, a DMRS port indication apparatus is provided. The DMRS port indication apparatus may implement the method in the second aspect. For example, the DMRS port indication apparatus may be a network device or a chip system in the network device. The method may be implemented by software, hardware, or hardware executing corresponding software.

In a possible implementation, the apparatus includes a transceiver unit and a processing unit. The processing unit is configured to obtain a demodulation reference signal DMRS type dmrs-Type and a maximum time domain symbol length maxLength allowed by a front-loaded DMRS; the processing unit is further configured to determine a first relationship, where the first relationship has an association relationship with the dmrs-Type and the maxLength, the first relationship includes at least one candidate value of an antenna port field and candidate antenna ports corresponding to each of the at least one candidate value of the antenna port field, a quantity of candidate antenna ports corresponding to each candidate value is greater than or equal to N, the candidate antenna ports corresponding to each candidate value are included in a first antenna port group and/or a second antenna port group, a quantity of antenna ports included in the first antenna port group is the same as a quantity of antenna ports included in the second antenna port group, the first antenna port group and the second antenna port group each correspond to at least two code division multiplexing groups, a quantity of code division multiplexing groups corresponding to the first antenna port group is the same as a quantity of code division multiplexing groups corresponding to the second antenna port group, and N is greater than 4; the transceiver unit is further configured to send downlink control information DCI, where the DCI includes the antenna port field, and the antenna port field indicates one of the at least one candidate value of the antenna port field in the DCI; the processing unit is further configured to determine, based on the indicated value, antenna ports corresponding to the indicated value; and the transceiver unit is further configured to send DMRSs corresponding to the determined antenna ports.

Optionally, the transceiver unit is further configured to send first signaling, where the first signaling includes the dmrs-Type and the maxLength.

In another possible implementation, the DMRS port indication apparatus includes a processor coupled to a memory. The processor is configured to support the apparatus in performing a corresponding function in the DMRS port indication method. The memory is configured to be coupled to the processor, and stores a computer program (or computer-executable instructions) and/or data necessary for the apparatus. Optionally, the DMRS port indication apparatus may further include a communication interface, configured to support communication between the apparatus and another network element, for example, data and/or signal sending or receiving. For example, the communication interface may be a transceiver, a circuit, a bus, a module, or another type of communication interface. Optionally, the memory may be located inside the DMRS port indication apparatus and integrated with the processor, or may be located outside the DMRS port indication apparatus.

In still another possible implementation, the DMRS port indication apparatus includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, an interface circuit, or an input/output interface, and is configured to receive a signal from a DMRS port indication apparatus other than the DMRS port indication apparatus and transmit the signal to the processor or send a signal from the processor to a DMRS port indication apparatus other than the DMRS port indication apparatus. When the DMRS port indication apparatus is a chip, the transceiver apparatus is the transceiver circuit or the input/output interface.

When the DMRS port indication apparatus is a chip, a sending unit may be an output unit, for example, an output circuit or a communication interface; and a receiving unit may be an input unit, for example, an input circuit or a communication interface. When the DMRS port indication apparatus is a terminal, a sending unit may be a transmitter or a transmitter machine; and a receiving unit may be a receiver or a receiver machine.

With reference to the first aspect to the fourth aspect, in still another possible implementation, the quantity of candidate antenna ports corresponding to each candidate value is N.

With reference to the first aspect to the fourth aspect, in still another possible implementation, the first relationship further includes a quantity of DMRS code division multiplexing groups to which data is not mapped and that correspond to each of the at least one candidate value of the antenna port field in the DCI.

With reference to the first aspect to the fourth aspect, in still another possible implementation, DMRSs corresponding to candidate antenna ports corresponding to the at least one candidate value are mapped to one symbol, and the candidate antenna ports corresponding to the at least one candidate value belong to two DMRS code division multiplexing groups; or DMRSs corresponding to candidate antenna ports corresponding to the at least one candidate value are mapped to two symbols, and the candidate antenna ports corresponding to the at least one candidate value belong to one DMRS code division multiplexing group.

With reference to the first aspect to the fourth aspect, in still another possible implementation, DMRSs corresponding to candidate antenna ports corresponding to the at least one candidate value are mapped to one symbol, and the candidate antenna ports corresponding to the at least one candidate value belong to two DMRS code division multiplexing groups to which data is not mapped; or DMRSs corresponding to candidate antenna ports corresponding to the at least one candidate value are mapped to two symbols, and the candidate antenna ports corresponding to the at least one candidate value belong to one DMRS code division multiplexing group to which data is not mapped.

In this implementation, the DMRSs corresponding to the candidate antenna ports corresponding to the at least one candidate value are mapped to one symbol, to reduce symbol overheads; or the candidate antenna ports corresponding to the at least one candidate value belong to one DMRS code division multiplexing group to which data is not mapped, and time-frequency resources corresponding to remaining code division multiplexing groups may be used to map data, to reduce a resource requirement and improve resource usage.

With reference to the first aspect to the fourth aspect, in still another possible implementation, the DMRSs are mapped to one symbol, and the candidate antenna ports corresponding to the at least one candidate value belong to two DMRS code division multiplexing groups; or the DMRSs are mapped to two symbols, and the candidate antenna ports corresponding to the at least one candidate value belong to one DMRS code division multiplexing group.

With reference to the first aspect to the fourth aspect, in still another possible implementation, the dmrs-Type is 1, the maxLength is 1, and N is 5; and a value of the antenna port field is a first value, the quantity of DMRS code division multiplexing groups to which data is not mapped is 2, and the antenna ports are 0 to 4.

With reference to the first aspect to the fourth aspect, in still another possible implementation, the dmrs-Type is 1, the maxLength is 1, and N is 6; and a value of the antenna port field is a second value, the quantity of DMRS code division multiplexing groups to which data is not mapped is 2, and the antenna ports are 0, 1, 2, 3, 4, and 6.

With reference to the first aspect to the fourth aspect, in still another possible implementation, the dmrs-Type is 1, the maxLength is 1, and N is 7; and a value of the antenna port field is a third value, the quantity of DMRS code division multiplexing groups to which data is not mapped is 2, and the antenna ports are 0 to 6.

With reference to the first aspect to the fourth aspect, in still another possible implementation, the dmrs-Type is 1, the maxLength is 1, and N is 8; and a value of the antenna port field is a fourth value, the quantity of DMRS code division multiplexing groups to which data is not mapped is 2, and the antenna ports are 0 to 7.

With reference to the first aspect to the fourth aspect, in still another possible implementation, the dmrs-Type is 1, the maxLength is 1, and N is 5; and the value of the antenna port field is the first value, the quantity of DMRS code division multiplexing groups to which data is not mapped is 2, and the antenna ports are 0, 1, 2, 3, and 8.

With reference to the first aspect to the fourth aspect, in still another possible implementation, the dmrs-Type is 1, the maxLength is 1, and N is 6; and the value of the antenna port field is the second value, the quantity of DMRS code division multiplexing groups to which data is not mapped is 2, and the antenna ports are 0, 1, 2, 3, 8, and 10.

With reference to the first aspect to the fourth aspect, in still another possible implementation, the dmrs-Type is 1, the maxLength is 1, and N is 7; and the value of the antenna port field is the third value, the quantity of DMRS code division multiplexing groups to which data is not mapped is 2, and the antenna ports are 0, 1, 2, 3, 8, 9, and 10.

With reference to the first aspect to the fourth aspect, in still another possible implementation, the dmrs-Type is 1, the maxLength is 1, and N is 8; and the value of the antenna port field is the fourth value, the quantity of DMRS code division multiplexing groups to which data is not mapped is 2, and the antenna ports are 0, 1, 2, 3, 8, 9, 10, and 11.

With reference to the first aspect to the fourth aspect, in still another possible implementation, the first antenna port group and the second antenna port group each include four antenna ports, and the first antenna port group and the second antenna port group each correspond to two CDM groups.

With reference to the first aspect to the fourth aspect, in still another possible implementation, the first antenna port group and the second antenna port group include a total of eight antenna ports, which respectively correspond to antenna port indexes 0, 1, 2, 3, 4, 5, 6, and 7, or respectively correspond to antenna port indexes 0, 1, 2, 3, 8, 9, 10, and 11. The two CDM groups corresponding to each of the first antenna port group and the second antenna port group are a CDM group 0 and a CDM group 1. With reference to the first aspect to the fourth aspect, in still another possible implementation, the dmrs-Type is 1, the maxLength is 2, and N is 5; and a value of the antenna port field is a fifth value, the quantity of DMRS code division multiplexing groups to which data is not mapped is 1, the antenna ports are 0, 1, 4, 5, and 8, and the DMRSs are mapped to two symbols; and/or the value of the antenna port field is a sixth value, the quantity of DMRS code division multiplexing groups to which data is not mapped is 2, the antenna ports are 0 to 4, and the DMRSs are mapped to one symbol.

With reference to the first aspect to the fourth aspect, in still another possible implementation, the dmrs-Type is 1, the maxLength is 2, and N is 6; and a value of the antenna port field is a seventh value, the quantity of DMRS code division multiplexing groups to which data is not mapped is 1, the antenna ports are 0, 1, 4, 5, 8, and 9, and the DMRSs are mapped to two symbols; and/or the value of the antenna port field is an eighth value, the quantity of DMRS code division multiplexing groups to which data is not mapped is 2, the antenna ports are 0, 1, 2, 3, 4, and 6, and the DMRSs are mapped to one symbol.

With reference to the first aspect to the fourth aspect, in still another possible implementation, the dmrs-Type is 1, the maxLength is 2, and N is 7; and a value of the antenna port field is a ninth value, the quantity of DMRS code division multiplexing groups to which data is not mapped is 1, the antenna ports are 0, 1, 4, 5, 8, 9, and 12, and the DMRSs are mapped to two symbols; and/or the value of the antenna port field is a tenth value, the quantity of DMRS code division multiplexing groups to which data is not mapped is 2, the antenna ports are 0 to 6, and the DMRSs are mapped to one symbol.

With reference to the first aspect to the fourth aspect, in still another possible implementation, the dmrs-Type is 1, the maxLength is 2, and N is 8; and a value of the antenna port field is an eleventh value, the quantity of DMRS code division multiplexing groups to which data is not mapped is 1, the antenna ports are 0, 1, 4, 5, 8, 9, 12, and 13, and the DMRSs are mapped to two symbols; and/or the value of the antenna port field is a twelfth value, the quantity of DMRS code division multiplexing groups to which data is not mapped is 2, the antenna ports are 0 to 7, and the DMRSs are mapped to one symbol.

With reference to the first aspect to the fourth aspect, in still another possible implementation, the first antenna port group and the second antenna port group each include eight antenna ports, and the first antenna port group and the second antenna port group each correspond to two CDM groups.

With reference to the first aspect to the fourth aspect, in still another possible implementation, the first antenna port group and the second antenna port group include a total of 16 antenna ports, which respectively correspond to antenna port indexes 0, 1, 2, 3, 4, 5, 6, 7, 8, 9, 10, 11, 12, 13, 14, and 15. The two CDM groups corresponding to each of the first antenna port group and the second antenna port group are a CDM group 0 and a CDM group 1.

With reference to the first aspect to the fourth aspect, in still another possible implementation, the dmrs-Type is 2, the maxLength is 1, and N is 5; and a value of the antenna port field is a thirteenth value, the quantity of DMRS code division multiplexing groups to which data is not mapped is 3, and the antenna ports are 0 to 4; and/or the value of the antenna port field is a fourteenth value, the quantity of DMRS code division multiplexing groups to which data is not mapped is 2, and the antenna ports are 0, 1, 2, 3, and 6.

With reference to the first aspect to the fourth aspect, in still another possible implementation, the dmrs-Type is 2, the maxLength is 1, and N is 6; and a value of the antenna port field is a fifteenth value, the quantity of DMRS code division multiplexing groups to which data is not mapped is 3, and the antenna ports are 0 to 5; and/or the value of the antenna port field is a sixteenth value, the quantity of DMRS code division multiplexing groups to which data is not mapped is 2, and the antenna ports are 0, 1, 2, 3, 6, and 8.

With reference to the first aspect to the fourth aspect, in still another possible implementation, the dmrs-Type is 2, the maxLength is 1, and N is 7; and a value of the antenna port field is a seventeenth value, the quantity of DMRS code division multiplexing groups to which data is not mapped is 3, and the antenna ports are 0 to 6; and/or the value of the antenna port field is an eighteenth value, the quantity of DMRS code division multiplexing groups to which data is not mapped is 2, and the antenna ports are 0, 1, 2, 3, 6, 7, and 8.

With reference to the first aspect to the fourth aspect, in still another possible implementation, the dmrs-Type is 2, the maxLength is 1, and N is 8; and a value of the antenna port field is a nineteenth value, the quantity of DMRS code division multiplexing groups to which data is not mapped is 3, and the antenna ports are 0, 1, 2, 3, 4, 5, 6, and 8; and/or the value of the antenna port field is a twentieth value, the quantity of DMRS code division multiplexing groups to which data is not mapped is 2, and the antenna ports are 0, 1, 2, 3, 6, 7, 8, and 9.

With reference to the first aspect to the fourth aspect, in still another possible implementation, the dmrs-Type is 2, the maxLength is 1, and N is 5; and the value of the antenna port field is the thirteenth value, the quantity of DMRS code division multiplexing groups to which data is not mapped is 3, and the antenna ports are 0 to 4; and/or the value of the antenna port field is the fourteenth value, the quantity of DMRS code division multiplexing groups to which data is not mapped is 2, and the antenna ports are 0, 1, 2, 3, and 12.

With reference to the first aspect to the fourth aspect, in still another possible implementation, the dmrs-Type is 2, the maxLength is 1, and N is 6; and the value of the antenna port field is the fifteenth value, the quantity of DMRS code division multiplexing groups to which data is not mapped is 3, and the antenna ports are 0 to 5; and/or the value of the antenna port field is the sixteenth value, the quantity of DMRS code division multiplexing groups to which data is not mapped is 2, and the antenna ports are 0, 1, 2, 3, 12, and 14.

With reference to the first aspect to the fourth aspect, in still another possible implementation, the dmrs-Type is 2, the maxLength is 1, and N is 7; and the value of the antenna port field is the seventeenth value, the quantity of DMRS code division multiplexing groups to which data is not mapped is 3, and the antenna ports are 0, 1, 2, 3, 4, 5, and 12; and/or the value of the antenna port field is the eighteenth value, the quantity of DMRS code division multiplexing groups to which data is not mapped is 2, and the antenna ports are 0, 1, 2, 3, 12, 13, and 14.

With reference to the first aspect to the fourth aspect, in still another possible implementation, the dmrs-Type is 2, the maxLength is 1, and N is 8; and the value of the antenna port field is the nineteenth value, the quantity of DMRS code division multiplexing groups to which data is not mapped is 3, and the antenna ports are 0, 1, 2, 3, 4, 5, 12, and 14; and/or the value of the antenna port field is the twentieth value, the quantity of DMRS code division multiplexing groups to which data is not mapped is 2, and the antenna ports are 0, 1, 2, 3, 12, 13, 14, and 15.

With reference to the first aspect to the fourth aspect, in still another possible implementation, the first antenna port group and the second antenna port group each include six antenna ports, and the first antenna port group and the second antenna port group each correspond to three CDM groups.

With reference to the first aspect to the fourth aspect, in still another possible implementation, the first antenna port group and the second antenna port group include a total of 12 antenna ports, which respectively correspond to antenna port indexes 0, 1, 2, 3, 4, 5, 6, 7, 8, 9, 10, and 11, or respectively correspond to antenna port indexes 0, 1, 2, 3, 4, 5, 12, 13, 14, 15, 16, and 17. The three CDM groups corresponding to each of the first antenna port group and the second antenna port group are a CDM group 0, a CDM group 1, and a CDM group 2.

With reference to the first aspect to the fourth aspect, in still another possible implementation, the dmrs-Type is 2, the maxLength is 2, and N is 5; and a value of the antenna port field is a twenty-first value, the quantity of DMRS code division multiplexing groups to which data is not mapped is 3, the antenna ports are 0 to 4, and the DMRSs are mapped to one symbol; and/or the value of the antenna port field is a twenty-second value, the quantity of DMRS code division multiplexing groups to which data is not mapped is 2, the antenna ports are 0, 1, 2, 3, and 6, and the DMRSs are mapped to one symbol; and/or the value of the antenna port field is a twenty-third value, the quantity of DMRS code division multiplexing groups to which data is not mapped is 1, the antenna ports are 0, 1, 6, 7, and 12, and the DMRSs are mapped to two symbols.

With reference to the first aspect to the fourth aspect, in still another possible implementation, the dmrs-Type is 2, the maxLength is 2, and N is 6; and a value of the antenna port field is a twenty-fourth value, the quantity of DMRS code division multiplexing groups to which data is not mapped is 3, the antenna ports are 0 to 5, and the DMRSs are mapped to one symbol; and/or the value of the antenna port field is a twenty-fifth value, the quantity of DMRS code division multiplexing groups to which data is not mapped is 2, the antenna ports are 0, 1, 2, 3, 6, and 8, and the DMRSs are mapped to one symbol; and/or the value of the antenna port field is a twenty-sixth value, the quantity of DMRS code division multiplexing groups to which data is not mapped is 1, the antenna ports are 0, 1, 6, 7, 12, and 13, and the DMRSs are mapped to two symbols.

With reference to the first aspect to the fourth aspect, in still another possible implementation, the dmrs-Type is 2, the maxLength is 2, and N is 7; and a value of the antenna port field is a twenty-seventh value, the quantity of DMRS code division multiplexing groups to which data is not mapped is 2, the antenna ports are 0, 1, 2, 3, 6, 7, and 8, and the DMRSs are mapped to one symbol; and/or the value of the antenna port field is a twenty-eighth value, the quantity of DMRS code division multiplexing groups to which data is not mapped is 1, the antenna ports are 0, 1, 6, 7, 12, 13, and 18, and the DMRSs are mapped to two symbols.

With reference to the first aspect to the fourth aspect, in still another possible implementation, the dmrs-Type is 2, the maxLength is 2, and N is 8; and a value of the antenna port field is a twenty-ninth value, the quantity of DMRS code division multiplexing groups to which data is not mapped is 2, the antenna ports are 0, 1, 2, 3, 6, 7, and 8, and the DMRSs are mapped to one symbol; and/or a value of the antenna port field is a thirtieth value, the quantity of DMRS code division multiplexing groups to which data is not mapped is 1, the antenna ports are 0, 1, 6, 7, 12, 13, 18, and 19, and the DMRSs are mapped to two symbols.

With reference to the first aspect to the fourth aspect, in still another possible implementation, the first antenna port group and the second antenna port group each include 12 antenna ports, and the first antenna port group and the second antenna port group each correspond to three CDM groups.

With reference to the first aspect to the fourth aspect, in still another possible implementation, the first antenna port group and the second antenna port group include a total of 24 antenna ports, which respectively correspond to antenna port indexes 0, 1, 2, 3, 4, 5, 6, 7, 8, 9, 10, 11, 12, 13, 14, 15, 16, 17, 18, 19, 20, 21, 22, and 23. The three CDM groups corresponding to each of the first antenna port group and the second antenna port group are a CDM group 0, a CDM group 1, and a CDM group 2.

With reference to the first aspect to the fourth aspect, in still another possible implementation, the dmrs-Type is 1, the maxLength is 2, N is 5, a value of the antenna port field is a thirty-first value, the quantity of code division multiplexing groups is 2, the antenna ports are 0 to 4, and the DMRSs are mapped to two symbols; and/or the dmrs-Type is 1, the maxLength is 2, N is 6, the value of the antenna port field is a thirty-second value, the quantity of code division multiplexing groups is 2, the antenna ports are 0, 1, 2, 3, 4, and 6, and the DMRSs are mapped to two symbols; and/or the dmrs-Type is 1, the maxLength is 2, N is 7, the value of the antenna port field is a thirty-third value, the quantity of code division multiplexing groups is 2, the antenna ports are 0 to 6, and the DMRSs are mapped to two symbols; and/or the dmrs-Type is 1, the maxLength is 2, N is 8, the value of the antenna port field is a thirty-fourth value, the quantity of code division multiplexing groups is 2, the antenna ports are 0 to 7, and the DMRSs are mapped to two symbols; and/or the dmrs-Type is 2, the maxLength is 2, N is 5, the value of the antenna port field is a thirty-fifth value, the quantity of code division multiplexing groups is 2, the antenna ports are 0, 1, 2, 3, and 6, and the DMRSs are mapped to two symbols; and/or the dmrs-Type is 2, the maxLength is 2, N is 6, the value of the antenna port field is a thirty-sixth value, the quantity of code division multiplexing groups is 2, the antenna ports are 0, 1, 2, 3, 6, and 8, and the DMRSs are mapped to two symbols; and/or the dmrs-Type is 2, the maxLength is 2, N is 7, the value of the antenna port field is a thirty-seventh value, the quantity of code division multiplexing groups is 2, the antenna ports are 0, 1, 2, 3, 6, 7, and 8, and the DMRSs are mapped to two symbols; and/or the dmrs-Type is 2, the maxLength is 2, N is 8, the value of the antenna port field is a thirty-eighth value, the quantity of code division multiplexing groups is 2, the antenna ports are 0, 1, 2, 3, 6, 7, 8, and 9, and the DMRSs are mapped to two symbols.

According to a fifth aspect, a communication system is provided. The communication system includes the DMRS port indication apparatus according to the third aspect and the DMRS port indication apparatus according to the fourth aspect.

According to a sixth aspect, a computer-readable storage medium is provided. The computer-readable storage medium stores a computer program or instructions. When the program or the instructions are executed by a processor, the method according to any one of the first aspect, the second aspect, or the implementations of the first aspect or the second aspect is performed.

According to a seventh aspect, a computer program product is provided. When the computer program product is executed on a computing device, the method according to any one of the first aspect, the second aspect, or the implementations of the first aspect or the second aspect is performed.

According to an eighth aspect, a circuit is provided. The circuit is coupled to a memory, and the circuit is configured to perform the method according to any one of the first aspect, the second aspect, or the implementations of the first aspect or the second aspect. The circuit may include a chip circuit.

## BRIEF DESCRIPTION OF DRAWINGS

FIG. 1 is a diagram of a communication system according to this application;
FIG. 2 is a diagram of time-frequency resource mapping of a DMRS according to an embodiment of this application;
FIG. 3 is a diagram of DMRS port expansion according to an embodiment of this application;
FIG. 4 is another diagram of DMRS port expansion according to an embodiment of this application;
FIG. 5 is a schematic flowchart of a DMRS port indication method according to an embodiment of this application;
FIG. 6a is a diagram of time-frequency resource mapping of a single-symbol type 1 DMRS according to an embodiment of this application;
FIG. 6b is a diagram of time-frequency resource mapping of a double-symbol type 1 DMRS according to an embodiment of this application;
FIG. 7a is a diagram of time-frequency resource mapping of a single-symbol type 2 DMRS according to an embodiment of this application;
FIG. 7b is a diagram of time-frequency resource mapping of a double-symbol type 2 DMRS according to an embodiment of this application;
FIG. 8 is a diagram of a structure of a DMRS port indication apparatus according to an embodiment of this application;
FIG. 9 is a diagram of a structure of a simplified terminal according to an embodiment of this application;
FIG. 10 is a diagram of a structure of a simplified network device according to an embodiment of this application; and
FIG. 11 is a diagram of a structure of another DMRS port indication apparatus according to an embodiment of this application.

## DESCRIPTION OF EMBODIMENTS

The following describes embodiments of this application with reference to the accompanying drawings in embodiments of this application.

The technical solutions provided in this application may be applied to various communication systems, for example, a long term evolution (long term evolution, LTE) system, a 5th generation (5th generation, 5G) communication system (or referred to as a new radio (new radio, NR) system), and another future communication system such as a 6th generation (6th generation, 6G) communication system. Optionally, the technical solutions provided in this application may be further applied to an internet of things (internet of things, IoT) system, a narrowband internet of things (narrowband internet of things, NB-IoT) system, and the like.

FIG. 1 is a diagram of a communication system according to this application. The communication system includes at least one network device and at least one terminal. In FIG. 1, one network device and a plurality of terminals (user equipment (user equipment, UE) 1 to UE 5 in the figure) form the communication system. In the communication system, all the UE 1 to the UE 5 may communicate with the network device. A link environment of the communication system includes uplink, downlink, and side-line (side-link) transmission. Information transmitted on a link includes actually transmitted data information and control information for indicating or scheduling actual data. In addition, the UE 3, the UE 4, and the UE 5 may also form a communication system, and a link transmission environment of the communication system is consistent with that described above. Specific information exchange depends on a network configuration manner.

The network device may be a device that can communicate with the terminal. The network device may be any device having a wireless transceiver function. The network device includes but is not limited to: a base station such as a NodeB (NodeB), an evolved base station such as an evolved NodeB (eNodeB), a base station in a 5th generation (5th generation, 5G) communication system, a base station or a network device in a future communication system, and an access node, a wireless relay node, a wireless backhaul node in a Wi-Fi system, and the like. The network device may alternatively be a radio controller in a cloud radio access network (cloud radio access network, CRAN) scenario. The network device may alternatively be a small cell, a transmission node (transmission reference point, TRP), or the like. A specific technology and a specific device form used by the network device are not limited in embodiments of this application.

The network device may alternatively be an access node, a wireless relay node, a wireless backhaul node, or the like in a wireless local area network (wireless fidelity, Wi-Fi) system. The network device may alternatively be a radio controller in a cloud radio access network (cloud radio access network, CRAN) scenario.

For ease of description, the following uses a base station as an example to describe the network device and the like in this application. In some deployments of the base station, the base station may include a central unit (central unit, CU), a distributed unit (distributed unit, DU), and the like. In some other deployments of the base station, the CU may be further divided into a CU-control plane (control plane, CP), a CU-user plane (user plane, UP), and the like. In some other deployments of the base station, the base station may alternatively be an open radio access network (open radio access network, ORAN) architecture or the like. The specific deployment manner of the base station is not limited in this application.

The terminal is a device having a wireless transceiver function. The terminal may be deployed on land, and includes an indoor device, an outdoor device, a handheld device, a wearable device, or a vehicle-mounted device. The terminal may alternatively be deployed on water, for example, on a ship. The terminal may alternatively be deployed in air, for example, deployed on an airplane, a balloon, or a satellite. The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal device sometimes may also be referred to as user equipment, an access terminal device, a UE unit, a mobile station, a remote station, a remote terminal device, a mobile device, a terminal (terminal), a wireless communication device, a UE agent, a UE apparatus, or the like.

Optionally, in the communication system shown in FIG. 1, the terminals may further communicate with each other by using a technology such as device to device (device to device, D2D), vehicle-to-everything (vehicle-to-everything, V2X), or machine to machine (machine to machine, M2M). A DMRS port indication method between the terminals is not limited in this application.

For example, the terms "system" and "network" may be used interchangeably in embodiments of this application. The following describes concepts related to embodiments of this application.

DMRS:

The DMRS is used to estimate an equivalent channel matrix undergone by a data channel (for example, a physical uplink shared channel (physical uplink shared channel, PUSCH) or a physical downlink shared channel (physical downlink shared channel, PDSCH)) or a control channel (for example, a physical uplink control channel (physical uplink control channel, PUCCH) or a physical downlink control channel (physical downlink control channel, PDCCH)), and therefore is used for data detection and demodulation. The PUSCH is used as an example. The DMRS and a sent data signal are usually precoded in a same manner, to ensure that the DMRS and data undergo a same equivalent channel. It is assumed that a vector of a DMRS sent by a transmit end is s, a vector of a sent data symbol is x, a same precoding operation is performed on the DMRS and the data (multiplied by a same precoding matrix P), and vectors of corresponding received signals of a receive end may be represented as:

the data: $y = HPx + n = \tilde{H}x + n$; and
the DMRS: $r = HPs + n = \tilde{H}s + n$.

It can be learned that equivalent channels that both a data signal and a reference signal undergo are $\tilde{H}$. The receive end may obtain estimation of the equivalent channel $\tilde{H}$ based on the known vector s of the DMRS by using a channel estimation algorithm (for example, least squares (least squares, LS) channel estimation or minimum mean square error (minimum mean square error, MMSE) channel estimation). MIMO equalization and subsequent demodulation of the data signal can be completed based on the equivalent channel.

The DMRS is used to estimate the equivalent channel $\tilde{H}$, and a dimension of the equivalent channel is $N_R \times R$. $N_R$ is a quantity of receiving antennas, and $R$ is a quantity of transport streams (also referred to as a quantity of transport layers, a quantity of spatial layers, or a rank (rank)). Generally, one DMRS port corresponds to one spatial layer. One DMRS port corresponds to one group of DMRS symbols or one group of DMRS sequences. The DMRS symbol includes a plurality of DMRS symbol elements, which are correspondingly mapped to corresponding time-frequency resources for transmission. For MIMO transmission whose quantity of transport streams is $R$, a quantity of corresponding DMRS ports is $R$. To ensure channel estimation quality, different DMRS ports are usually orthogonal ports. DMRS symbols corresponding to the different DMRS ports are orthogonal in at least one of frequency domain, time-frequency domain, or code domain.

In some scenarios of this application, the "quantity of transport layers" and the "rank" represent a same meaning, and may be used interchangeably.

In some scenarios of this application, an antenna port and the DMRS port represent a same meaning, and may be used interchangeably.

There is a DMRS time-frequency resource mapping manner in an NR protocol.

Because the DMRS occupies an additional time-frequency resource, DMRS overheads need to be reduced as much as possible. To reduce mutual interference, DMRS resources corresponding to a plurality of DMRS ports are usually mapped to preset time-frequency resources in a frequency division multiplexing (frequency division multiplexing, FDM), time division multiplexing (time division multiplexing, TDM), or code division multiplexing (code division multiplexing, CDM) manner. Currently, 5G NR supports two DMRS resource mapping types. A type 1 (Type 1) DMRS may support a maximum of eight orthogonal ports. A type 2 (Type 2) DMRS may support a maximum of 12 orthogonal ports. For one DMRS port, to perform channel estimation on different time-frequency resources and ensure channel estimation quality, a plurality of DMRS symbols need to be sent on a plurality of time-frequency resources. The DMRS may occupy at least one orthogonal frequency division multiplexing (orthogonal frequency division multiplexing, OFDM) symbol in time domain, and bandwidth occupied in frequency domain is the same as scheduled bandwidth of a scheduled data signal. A plurality of DMRS symbols corresponding to one port correspond to one reference signal sequence, and the reference signal sequence includes a plurality of reference signal sequence elements. A DMRS reference signal sequence may be a gold sequence. For example, the DMRS reference signal sequence is the gold sequence. An $n^{th}$ element $r(n)$ in the reference signal sequence may be generated by using the following formula:

$$r(n)=\frac{1}{\sqrt{2}}\left(1-2\cdot c(2n)\right)+j\frac{1}{\sqrt{2}}\left(1-2\cdot c(2n+1)\right)$$

A pseudo-random sequence $c(n)$ may be a gold sequence whose sequence length is 31. A sequence $c(n)$ whose output length is $M_{PN}$, where $n = 0,1,\ldots, M_{PN} - 1$, may be defined as:

$$c(n)=\left(x_1(n+N_C)+x_2(n+N_C)\right)\bmod 2$$

$$x_1(n+31)=\left(x_1(n+3)+x_1(n)\right)\bmod 2$$

$$x_2(n+31)=\left(x_2(n+3)+x_2(n+2)+x_2(n+1)+x_2(n)\right)\bmod 2$$

$N_C = 1600$. A 1st m-sequence $x_1(n)$ may be initialized to $x_1(0) = 1$, $x_1(n) = 0$, $n = 1,2,\ldots,30$. A 2nd m-sequence $x_2(n)$ is initialized via $x_1(0) = 1$, $x_1(n) = 0$, $n = 1,2,\ldots,30$. $c_{init}$ may be defined as $c_{\text{init}} = \left(2^{17}\left(N_{\text{symb}}^{\text{slot}}n_{\text{s,f}}^{\mu}+l+1\right)\left(2N_{\text{ID}}^{\bar{n}_{\text{SCID}}^{\bar{\lambda}}}+1\right)+2^{17}\left\lfloor\frac{\bar{\lambda}}{2}\right\rfloor+2N_{\text{ID}}^{\bar{n}_{\text{SCID}}^{\bar{\lambda}}}+\bar{n}_{\text{SCID}}^{\bar{\lambda}}\right)\bmod 2^{31}$. Herein, $l$ represents an index of an OFDM symbol included in one slot, $n_{\text{s,f}}^{\mu}$ represents an index of a slot in one system frame, and $N_{\text{ID}}^{0}, N_{\text{ID}}^{1} \in \{0,1,\ldots,65535\}$ may be configured by using higher layer signaling. $N_{\text{ID}}^{\bar{n}_{\text{SCID}}^{\bar{\lambda}}}$ is related to a cell identification (identification, ID), and may be generally equal to a cell ID, that is, $N_{\text{ID}}^{\bar{n}_{\text{SCID}}^{\bar{\lambda}}} = N_{\text{ID}}^{\text{cell}}$. $\bar{n}_{\text{SCID}}^{\bar{\lambda}}$ is an initialization parameter whose value may be 0 or 1. $\lambda$ represents an index of a code division multiplexing group corresponding to the DMRS port.

According to a preset time-frequency resource mapping rule, a DMRS reference signal sequence corresponding to a port is multiplied by a corresponding cover code sequence and then mapped to a corresponding time-frequency resource. In a current NR protocol, two types of DMRS configuration manners are defined, including a Type 1 DMRS and a Type 2 DMRS.

For a port $p$, an $m^{th}$ reference sequence element $r(m)$ in a corresponding reference signal sequence is mapped, according to the following rule, to a resource element (resource element, RE) whose index is $(k,l)_{p,\mu}$. The RE whose index is $(k,l)_{p,\mu}$ corresponds to an OFDM symbol whose index is $l$ in one slot in time domain, and corresponds to a subcarrier whose index is $k$ in frequency domain. The mapping rule satisfies:

$$a_{k.l}^{(p,\mu)}=\beta_{PDSCH}^{DMRS}w_f(k')w_t(l')r(2n+k') \quad (1)$$

$$k=\begin{cases}4n+2k'+\Delta, \text{configuration type 1}\\ 6n+k'+\Delta, \text{configuration type 2}\end{cases};$$

$k' = 0,1$;
$l = \bar{l} + l'$;
n = 0,1, ...;
$l' = 0,1$.

$\mu$ is a subcarrier spacing parameter, $a_{k,l}^{(p,\mu)}$ is a DMRS signal symbol that corresponds to the port p and that is mapped to the RE whose index is $(k,l)_{p,\mu}$, and $\bar{l}$ is a symbol index of a start OFDM symbol occupied by the DMRS signal symbol or a symbol index of a reference OFDM symbol. $\beta_{PDSCH}^{DMRS}$ is a power scaling factor, $w_t(l')$ is a time domain cover code element corresponding to an OFDM symbol whose index is l', $w_f(k')$ is a frequency domain cover code element corresponding to a subcarrier whose index is k', $m = 2n + k'$, and $\Delta$ is a subcarrier offset factor.

In a configuration type 1 (Type 1 DMRS) mapping rule, values of $w_f(k')$, $w_t(l')$, and $\Delta$ that correspond to the DMRS port p may be determined according to Table 1.

Table 1: Type 1 DMRS parameter values

| *p* | $\lambda$ | $\Delta$ | $w_f(k')$ | | $w_t(l')$ | |
|---|---|---|---|---|---|---|
| | | | *k'* = 0 | *k'* = 1 | *l'* = 0 | *l'* = 1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

The type 1 DMRS may support a maximum of eight orthogonal ports (1000 to 1007), p represents a DMRS port number, $\lambda$ represents the index of the code division multiplexing group corresponding to the DMRS port, $\Delta$ is the subcarrier offset factor, $w_t(l')$ is the time domain cover code element corresponding to the OFDM symbol whose index is *l'*, and $w_f(k')$ is the frequency domain cover code element corresponding to the subcarrier whose index is *k'*.

In a configuration type 2 (Type 2 DMRS) mapping rule, values of $w_f(k')$, $w_t(l')$, and $\Delta$ that correspond to the DMRS port *p* may be determined according to Table 2.

Table 2: Type 2 DMRS parameter values

| *p* | $\lambda$ | $\Delta$ | $w_f(k')$ | | $w_t(l')$ | |
|---|---|---|---|---|---|---|
| | | | *k* = 0 | *k* = 1 | *l'* = 0 | *l'* = 1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

The type 2 DMRS may support a maximum of 12 orthogonal ports (1000 to 1011), $\lambda$ is the index of the code division multiplexing group to which the port *p* belongs, and DMRS ports in a same code division multiplexing group occupy a same time-frequency resource. According to the formula (1), time-frequency resource mapping manners of a single-symbol Type 1 DMRS and a double-symbol Type 1 DMRS are shown in a first picture and a second picture from the left of FIG. 2.

As shown in the first picture from the left of FIG. 2, a single-symbol DMRS (corresponding to $l' = 0$) supports a maximum of four ports, and a DMRS resource occupies one OFDM symbol. The four DMRS ports are divided into two code division multiplexing groups (CDM groups). A CDM group 0 includes a port 0 and a port 1, and a CDM group 1 includes a port 2 and a port 3. Frequency division multiplexing is performed between the CDM group 0 and the CDM group 1 (mapped to different frequency domain resources). DMRS ports included in the CDM group are mapped to a same time-frequency resource. Reference signals corresponding to the DMRS ports included in the CDM group are distinguished by using orthogonal cover codes (orthogonal cover codes, OCCs), to ensure orthogonality of the DMRS ports in the CDM group, and further suppress interference between DMRSs that are transmitted on different antenna ports. Specifically, the port 0 and the port 1 are in a same RE, and resource mapping is performed in a comb manner in frequency domain. In other words, adjacent frequency domain resources occupied by the port 0 and the port 1 are separated by one subcarrier. For one DMRS port, two adjacent occupied REs correspond to one OCC codeword sequence whose length is 2. For example, for a subcarrier 0 and a subcarrier 2, a group of OCC codeword sequences (+1+1 and +1-1) whose lengths are 2 are used for the port 0 and the port 1. Similarly, the port 2 and the port 3 are in a same RE, and are mapped, in a comb manner in frequency domain, to REs that are not occupied by the port 0 and the port 1. For a subcarrier 1 and a subcarrier 3, a group of OCC codeword sequences (+1+1 and +1-1) whose lengths are 2 are used for the port 2 and the port 3.

As shown in the second picture from the left of FIG. 2, a double-symbol DMRS supports a maximum of eight ports. The eight DMRS ports are divided into two code division multiplexing groups. A CDM group 0 includes a port 0, a port 1, a port 4, and a port 5, and a CDM group 1 includes a port 2, a port 3, a port 6, and a port 7. Frequency division multiplexing is performed between the CDM group 0 and the CDM group 1. Reference signals corresponding to DMRS ports included in the CDM group are distinguished by using OCCs. Specifically, the port 0, the port 1, the port 4, and the port 5 are in a same RE, and resource mapping is performed in a comb manner in frequency domain. In other words, adjacent frequency domain resources occupied by the port 0, the port 1, the port 4, and the port 5 are separated by one subcarrier. For one DMRS port, two adjacent occupied subcarriers and two OFDM symbols correspond to one OCC codeword sequence whose length is 4. For example, for a subcarrier 0 and a subcarrier 2 corresponding to an OFDM symbol 1 and an OFDM symbol 2, a group of OCC codes (+1+1+1+1/+1+1-1-1/+1-1+1-1/+1-1-1+1) whose lengths are 4 are used for the port 0, the port 1, the port 4, and the port 5. Similarly, the port 2, the port 3, the port 6, and the port 7 are in a same RE, and are mapped, in a comb manner in frequency domain, to subcarriers that are not occupied by the port 0, the port 1, the port 4, and the port 5. For a subcarrier 1 and a subcarrier 3 corresponding to the OFDM symbol 1 and the OFDM symbol 2, a group of OCC codes (+1+1+1+1/+1+1-1-1/+1-1+1-1/+1-1-1+1) whose lengths are 4 are used for the port 2, the port 3, the port 6, and the port 7.

For the configuration type (configuration type) 2, time-frequency resource mapping manners of a single-symbol DMRS and a double-symbol DMRS are shown in a third picture and a fourth picture from the left of FIG. 2. As shown in the third picture from the left of FIG. 2, a single-symbol Type 2 DMRS supports a maximum of six ports. The six DMRS ports are divided into three code division multiplexing groups, frequency division multiplexing is performed between CDM groups, and orthogonality of reference signals corresponding to DMRS ports included in the CDM is ensured by using OCCs. A CDM group 0 includes a port 0, a port 1, a CDM group 1 includes a port 2 and a port 3, and a CDM group 2 includes a port 4 and a port 5. Frequency division multiplexing is performed between the CDM groups (mapped to different frequency domain resources). The reference signals corresponding to the DMRS ports included in the CDM group are mapped to a same time-frequency resource. The reference signals corresponding to the DMRS ports included in the CDM group are distinguished by using the OCCs. For one DMRS port, a DMRS reference signal corresponding to the DMRS port is mapped, in frequency domain, to a plurality of resource sub-blocks including two contiguous subcarriers, and adjacent resource sub-blocks are separated by four subcarriers in frequency domain. Specifically, the port 0 and the port 1 are in a same RE, and resource mapping is performed in a comb manner. For example, a frequency domain resource granularity is one RB. The port 0 and the port 1 occupy a subcarrier 0, a subcarrier 1, a subcarrier 6, and a subcarrier 7. The port 2 and the port 3 occupy a subcarrier 2, a subcarrier 3, a subcarrier 8, and a subcarrier 9. The port 4 and the port 5 occupy a subcarrier 4, a subcarrier 5, a subcarrier 10, and a subcarrier 11. Two DMRS ports included in one CDM group correspond, in two adjacent subcarriers, to OCC codeword sequences (+1+1 and +1-1) whose lengths are 2.

As shown in the fourth picture from the left of FIG. 2, a double-symbol Type 2 DMRS supports a maximum of 12 ports. The 12 DMRS ports are divided into three CDM groups, frequency division multiplexing is performed between CDM groups, and orthogonality of reference signals corresponding to DMRS ports included in the CDM is ensured by using OCCs. A CDM group 0 includes a port 0, a port 1, a port 6, and a port 7, a CDM group 1 includes a port 2, a port 3, a port 8, and a port 9, and a CDM group 2 includes a port 4, a port 5, a port 10, and a port 11. Frequency division multiplexing is performed between the CDM groups (mapped to different frequency domain resources). The reference signals corresponding to the DMRS ports included in the CDM group are mapped to a same time-frequency resource. The reference signals corresponding to the DMRS ports included in the CDM group are distinguished by using the OCCs. For one DMRS port, a DMRS reference signal corresponding to the DMRS port is mapped, in frequency domain, to a plurality of resource sub-blocks including two contiguous subcarriers, and adjacent resource sub-blocks are separated by four subcarriers in frequency domain. Specifically, ports included in one CDM group are in a same RE, and resource mapping is performed in a comb manner in frequency domain. For example, a frequency domain resource granularity is one RB. The port 0, the port 1, the port 6, and the port 7 occupy a subcarrier 0, a subcarrier 1, a subcarrier 6, and a subcarrier 7 that correspond to an OFDM symbol 1 and an OFDM symbol 2. The port 2, the port 3, the port 8, and the port 9 occupy a subcarrier 2, a subcarrier 3, a subcarrier 8, and a subcarrier 9 that correspond to the OFDM symbol 1 and the OFDM symbol 2. The port 4, the port 5, the port 10, and the port 11 occupy a subcarrier 4, a subcarrier 5, a subcarrier 10, and a subcarrier 11 that correspond to the OFDM symbol 1 and the OFDM symbol 2. Four DMRS ports included in one CDM group correspond, in two adjacent subcarriers corresponding to two OFDM symbols, to OCC codeword sequences (+1+1+1+1/+1+1-1-1/+1-1+1-1/+1-1-1+1) whose lengths are 4.

As wireless communication devices are deployed more densely in the future, a quantity of terminals further increases. This imposes a higher requirement on a quantity of MIMO transport streams. In addition, with continuous evolution of a massive multiple-input multiple-output (massive MIMO) system subsequently, a quantity of transmission/-receiving antennas further increases (a quantity of transmission antennas of a network device supports 128 transmission antennas (transmission antennas, T) or 256T, and a quantity of receiving antennas of a terminal supports 8 receiving antennas (receiving antennas, R)), and channel information is obtained more accurately, so that a larger quantity of transport streams can be further supported to improve spectral efficiency of the MIMO system. Therefore, more DMRS ports are needed to support the larger quantity of transport streams (more than 12 streams) in terms of the foregoing aspects. As a quantity of transport streams increases, a higher requirement is imposed on accuracy of channel estimation. However, currently, a maximum of 12 orthogonal ports cannot ensure good transmission performance of more than 12 streams. A simplest method for expanding an existing quantity of orthogonal DMRS ports is to increase a time-frequency resource occupied by a DMRS. This method can ensure that a quantity of DMRS symbols corresponding to each DMRS port remains unchanged. However, multiplication of DMRS overheads also reduces spectral efficiency of the system by multiple times. In another method, DMRS resources corresponding to more orthogonal DMRS ports are multiplexed while a same time-frequency resource (overhead) is ensured. To avoid increasing additional time-frequency resource overheads, based on an existing NR DMRS port, further introducing a new DMRS port through code division multiplexing enhancement is an effective technical solution.

To support more DMRS ports without increasing an additional time-frequency resource, an orthogonal DMRS port or a DMRS port with low cross-correlation may be expanded in code domain by using a proper DMRS sequence design.

A double-symbol Type 1 DMRS is used as an example. A DMRS port expansion method is shown in FIG. 3. An existing DMRS port group includes eight Type 1 DMRS ports defined in the existing NR protocol, and an expanded port group includes eight newly added DMRS ports. Therefore, a maximum of 16 DMRS ports may be supported in total. As described above, for the existing DMRS port group, one CDM group corresponds to four DMRS ports. Code division multiplexing is performed on the four DMRS ports in the CDM group by using OCC codes ($w_1$,$w_2$,$w_3$,$w_4$) whose lengths are 4, and the four DMRS ports are mapped to two subcarriers and two OFDM symbols. Values of $w_1$,$w_2$,$w_3$,$w_4$ are shown in Table 1.

The newly added DMRS port group also corresponds to two CDM groups, and each CDM group corresponds to four DMRS ports. One CDM group corresponds to four DMRS ports, and the four DMRS ports occupy a same time-frequency resource as DMRS ports that belong to a same CDM group and that are defined in the existing NR protocol. In FIG. 3, a CDM group 0 is used as an example. Correspondingly, DMRS ports 8, 9, 12, and 13 are newly added, and occupy subcarriers whose indexes are 0, 2, 4, 6, 8, and 10 in one RB. The newly added DMRS ports correspond to two layers of cover codes, and a time-frequency resource mapping manner of the DMRS port may be represented as follows:

$$a_{k,l}^{(p,\mu)} = \beta_{PDSCH}^{DMRS} c(k',l') b(n) r(2n+k') \quad (2)$$

$$k = \begin{cases} 4n + 2k' + \Delta, \text{configuration type 1} \\ 6n + k' + \Delta, \text{configuration type 2} \end{cases};$$

$k'$ = 0,1;
$l = \bar{l} + l'$;
n = 0,1, ....

Definitions of $\beta_{PDSCH}^{DMRS}$ and $r(2n + k')$ are the same as those in the formula (1). $c(k',l')$ represents an inner cover code, may be an OCC code (for example, a walsh code) whose length is 4, and is used to ensure orthogonality of four newly added DMRS ports multiplexed in one CDM group. $b(n)$ represents an outer cover code, and is used to ensure orthogonality between an existing port and a newly added port that are multiplexed on a same time-frequency resource. In an implementation, $b(n)$ = {+1, -1, +1, -1, ...... }.

For a double-symbol Type 2 DMRS, a similar DMRS port expansion design may be used. A DMRS port expansion method is shown in FIG. 4. A time-frequency resource mapping manner of a Type 2 DMRS expanded port is also shown in the formula (2).

In an implementation, after the Type 1/Type 2 DMRS is expanded, a time-frequency resource mapping manner of a DMRS port newly added based on an existing DMRS port may be further represented as:

$$a_{k,l}^{(p,\mu)} = \beta_{PDSCH}^{DMRS} c_f(k') c_t(l') b(n \mod 2) r(2n + k') \quad (3)$$

$$k = \begin{cases} 4n + 2k' + \Delta, \text{configuration type 1} \\ 6n + k' + \Delta, \text{configuration type 2} \end{cases};$$

$k'$ = 0,1;

$l = \bar{l} + l'$;

$n$ = 0,1, ...;

$b(0)$ = 1, and $b(1)$ = -1. For the Type 1 DMRS, a definition of $c_f(k')c_t(l')$ is shown in the following Table 3.

Table 3

| ***p*** | CDM group $\lambda$ | $\Delta$ | $c_f(k')$ | | $c_t(l')$ | |
|---|---|---|---|---|---|---|
| | | | $k'$ = 0 | $k'$ = 1 | $l'$ = 0 | $l'$ = 1 |
| 1008 | 0 | 0 | +1 | +1 | +1 | +1 |
| 1009 | 0 | 0 | +1 | -1 | +1 | +1 |
| 1010 | 1 | 1 | +1 | +1 | +1 | +1 |
| 1011 | 1 | 1 | +1 | -1 | +1 | +1 |
| 1012 | 0 | 0 | +1 | +1 | +1 | -1 |
| 1013 | 0 | 0 | +1 | -1 | +1 | -1 |
| 1014 | 1 | 1 | +1 | +1 | +1 | -1 |
| 1015 | 1 | 1 | +1 | -1 | +1 | -1 |

Alternatively, the definition is shown in the following Table 4.

Table 4

| ***p*** | CDM group $\lambda$ | $\Delta$ | $c_f(k')$ | | $c_t(l')$ | |
|---|---|---|---|---|---|---|
| | | | $k'$ = 0 | $k'$ = 1 | $l'$ = 0 | $l'$ = 1 |
| 1008 | 0 | 0 | +1 | +j | +1 | +j |
| 1009 | 0 | 0 | +1 | -j | +1 | +j |
| 1010 | 1 | 1 | +1 | +j | +1 | +j |
| 1011 | 1 | 1 | +1 | -j | +1 | +j |
| 1012 | 0 | 0 | +1 | +j | +1 | -j |
| 1013 | 0 | 0 | +1 | -j | +1 | -j |
| 1014 | 1 | 1 | +1 | +j | +1 | -j |
| 1015 | 1 | 1 | +1 | -j | +1 | -j |

For the Type 2 DMRS, a definition of $c_f(k')c_t(l')$ is shown in the following Table 5.

Table 5

| *p* | CDM group λ | Δ | $w_f(k')$ | | $w_t(l')$ | |
|---|---|---|---|---|---|---|
| | | | $k' = 0$ | $k' = 1$ | $l' = 0$ | $l' = 1$ |
| 1012 | 0 | 0 | +1 | +1 | +1 | +1 |
| 1013 | 0 | 0 | +1 | -1 | +1 | +1 |
| 1014 | 1 | 2 | +1 | +1 | +1 | +1 |
| 1015 | 1 | 2 | +1 | -1 | +1 | +1 |
| 1016 | 2 | 4 | +1 | +1 | +1 | +1 |
| 1017 | 2 | 4 | +1 | -1 | +1 | +1 |
| 1018 | 0 | 0 | +1 | +1 | +1 | -1 |
| 1019 | 0 | 0 | +1 | -1 | +1 | -1 |
| 1020 | 1 | 2 | +1 | +1 | +1 | -1 |
| 1021 | 1 | 2 | +1 | -1 | +1 | -1 |
| 1022 | 2 | 4 | +1 | +1 | +1 | -1 |
| 1023 | 2 | 4 | +1 | -1 | +1 | -1 |

Alternatively, the definition is shown in the following Table 6.

Table 6

| *p* | CDM group λ | Δ | $w_f(k')$ | | $w_t(l')$ | |
|---|---|---|---|---|---|---|
| | | | $k' = 0$ | $k' = 1$ | $l' = 0$ | $l' = 1$ |
| 1012 | 0 | 0 | +1 | +j | +1 | +j |
| 1013 | 0 | 0 | +1 | -j | +1 | +j |
| 1014 | 1 | 2 | +1 | +j | +1 | +j |
| 1015 | 1 | 2 | +1 | -j | +1 | +j |
| 1016 | 2 | 4 | +1 | +j | +1 | +j |
| 1017 | 2 | 4 | +1 | -j | +1 | +j |
| 1018 | 0 | 0 | +1 | +j | +1 | -j |
| 1019 | 0 | 0 | +1 | -j | +1 | -j |
| 1020 | 1 | 2 | +1 | +j | +1 | -j |
| 1021 | 1 | 2 | +1 | -j | +1 | -j |
| 1022 | 2 | 4 | +1 | +j | +1 | -j |
| 1023 | 2 | 4 | +1 | -j | +1 | -j |

For a single-symbol Type 1 DMRS and a double-symbol Type 2 DMRS, a similar DMRS port expansion design may also be used. For the single-symbol Type 1 DMRS defined in the existing NR protocol, a maximum quantity of supported orthogonal DMRS ports is 4. By using the foregoing DMRS expansion design, the maximum quantity of supported orthogonal DMRS ports may be increased to 8. For the single-symbol Type 2 DMRS defined in the existing NR protocol, a maximum quantity of supported orthogonal DMRS ports is 6. By using the foregoing DMRS expansion design, the maximum quantity of supported orthogonal DMRS ports may be increased to 12.

For uplink transmission, a sending behavior of the terminal is scheduled by the network device. The network device needs to notify, via indication information, the terminal of a quantity of data streams (also referred to as a rank) corresponding to to-be-sent uplink data and a corresponding DMRS port index. Therefore, the terminal may send the uplink data and the DMRS on a corresponding time-frequency resource at a sending moment of the uplink data based on the indicated DMRS and the indicated quantity of transport streams. The NR protocol is used as an example. Currently, transmission of a maximum of four streams is supported in an uplink (uplink, UL). The network device indicates a quantity of transport streams (a rank) and a corresponding DMRS port index to the terminal via downlink control information (downlink control information, DCI). Specifically, DCI signaling includes an antenna port (antenna port) field, indicating the corresponding DMRS port index. Different rank values correspond to different DMRS port index tables.

A single-symbol Type 1 DMRS is used as an example. When a transform precoder (transform precoder) is not activated, DMRS port index tables corresponding to a rank 1 to a rank 4 are shown in Table 7 to Table 10.

Table 7 DMRS port indexes (1000+DMRS port) corresponding to dmrs-Type=1, a maximum quantity of DMRS symbols (maxLength) is 1, and rank=1

| Value | Quantity of DMRS CDM groups to which data is not mapped | DMRS port |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 and 7 | Reserved | Reserved |

As shown in Table 7, when a value (value) of the antenna port field is 0, the quantity of DMRS CDM groups to which data is not mapped (number of DMRS CDM group(s) without data) is 1, a corresponding DMRS port (DMRS port(s)) index is 0, and a quantity of front-loaded symbols (number of front-load symbols) is one symbol. When the value of the antenna port field is 1, the quantity of DMRS CDM groups to which data is not mapped is 1, the corresponding DMRS port index is 1, and the quantity of front-loaded symbols is one symbol, and the like.

Table 8 DMRS port indexes (1000+DMRS port) corresponding to dmrs-Type=1, maxLength=2, and rank=2

| Value | Quantity of DMRS CDM groups to which data is not mapped | DMRS port |
|---|---|---|
| 0 | 1 | 0 and 1 |
| 1 | 2 | 0 and 1 |
| 2 | 2 | 2 and 3 |
| 3 | 2 | 0 and 2 |
| 4 to 7 | Reserved | Reserved |

As shown in Table 8, when a value of the antenna port field is 0, the quantity of DMRS CDM groups to which data is not mapped is 1, corresponding DMRS port indexes are 0 and 1, and a quantity of front-loaded symbols is one symbol. When the value of the antenna port field is 1, the quantity of DMRS CDM groups to which data is not mapped is 2, the corresponding DMRS port indexes are 0 and 1, and the quantity of front-loaded symbols is one symbol, and the like.

Table 9 DMRS port indexes (1000+DMRS port) corresponding to dmrs-Type=1, maxLength=2, and rank=3

| Value | Quantity of DMRS CDM groups to which data is not mapped | DMRS port |
|---|---|---|
| 0 | 2 | 0 to 2 |
| 1 to 7 | Reserved | Reserved |

As shown in Table 9, when a value of the antenna port field is 0, the quantity of DMRS CDM groups to which data is not mapped is 2, corresponding DMRS port indexes are 0, 1, and 2, and a quantity of front-loaded symbols is one symbol.

Table 10 DMRS port indexes (1000+DMRS port) corresponding to dmrs-Type=1, maxLength=2, and rank=4

| Value | Quantity of DMRS CDM groups to which data is not mapped | DMRS port |
|---|---|---|
| 0 | 2 | 0 to 3 |
| 1 to 7 | Reserved | Reserved |

As shown in Table 10, when a value of the antenna port field is 0, the quantity of DMRS CDM groups to which data is not mapped is 2, corresponding DMRS port indexes are 0, 1, and 2, and a quantity of front-loaded symbols is one symbol.

A double-symbol Type 1 DMRS is used as an example. When the transform precoder is not activated, DMRS port index tables corresponding to the rank 1 to the rank 4 are shown in Table 11 to Table 14. The terminal may select a corresponding DMRS port index table based on an indicated rank value, to determine an indicated port index.

Table 11 DMRS port indexes (1000+DMRS port) corresponding to dmrs-Type=1, maxLength=2, and rank=1

| Value | Quantity of DMRS CDM groups to which data is not mapped | DMRS port | Quantity of front-loaded symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 and 15 | Reserved | Reserved | Reserved |

As shown in Table 11, when a value of the antenna port field is 0, the quantity of DMRS CDM groups to which data is not mapped is 1, a corresponding DMRS port index is 0, and the quantity of front-loaded symbols is one symbol. When the value of the antenna port field is 1, the quantity of DMRS CDM groups to which data is not mapped is 1, the corresponding DMRS port index is 1, and the quantity of front-loaded symbols is one symbol, and the like.

Table 12 DMRS port indexes (1000+DMRS port) corresponding to dmrs-Type=1, maxLength=2, and rank=2

| Value | Quantity of DMRS CDM groups to which data is not mapped | DMRS port | Quantity of front-loaded symbols |
|---|---|---|---|
| 0 | 1 | 0 and 1 | 1 |
| 1 | 2 | 0 and 1 | 1 |
| 2 | 2 | 2 and 3 | 1 |
| 3 | 2 | 0 and 2 | 1 |
| 4 | 2 | 0 and 1 | 2 |
| 5 | 2 | 2 and 3 | 2 |
| 6 | 2 | 4 and 5 | 2 |

(continued)

| Value | Quantity of DMRS CDM groups to which data is not mapped | DMRS port | Quantity of front-loaded symbols |
|---|---|---|---|
| 7 | 2 | 6 and 7 | 2 |
| 8 | 2 | 0 and 4 | 2 |
| 9 | 2 | 2 and 6 | 2 |
| 10 to 15 | Reserved | Reserved | Reserved |

As shown in Table 12, when a value of the antenna port field is 0, the quantity of DMRS CDM groups to which data is not mapped is 1, corresponding DMRS port indexes are 0 and 1, and the quantity of front-loaded symbols is one symbol. When the value of the antenna port field is 1, the quantity of DMRS CDM groups to which data is not mapped is 2, the corresponding DMRS port indexes are 0 and 1, and the quantity of front-loaded symbols is one symbol, and the like.

Table 13 DMRS port indexes (1000+DMRS port) corresponding to dmrs-Type=1, maxLength=2, and rank=3

| Value | Quantity of DMRS CDM groups to which data is not mapped | DMRS port | Quantity of front-loaded symbols |
|---|---|---|---|
| 0 | 2 | 0 to 2 | 1 |
| 1 | 2 | 0, 1, and 4 | 2 |
| 2 | 2 | 2, 3, and 6 | 2 |
| 3 to 15 | Reserved | Reserved | Reserved |

As shown in Table 13, when a value of the antenna port field is 0, the quantity of DMRS CDM groups to which data is not mapped is 2, corresponding DMRS port indexes are 0, 1, and 2, and the quantity of front-loaded symbols is one symbol. When the value of the antenna port field is 1, the quantity of DMRS CDM groups to which data is not mapped is 2, the corresponding DMRS port indexes are 0, 1, and 4, and the quantity of front-loaded symbols is two symbols, and the like.

Table 14 DMRS port indexes (1000+DMRS port) corresponding to dmrs-Type=1, maxLength=2, and rank=4

| Value | Quantity of DMRS CDM groups to which data is not mapped | DMRS port | Quantity of front-loaded symbols |
|---|---|---|---|
| 0 | 2 | 0 to 3 | 1 |
| 1 | 2 | 0, 1, 4, and 5 | 2 |
| 2 | 2 | 2, 3, 6, and 7 | 2 |
| 3 | 2 | 0, 2, 4, and 6 | 2 |
| 4 to 15 | Reserved | Reserved | Reserved |

As shown in Table 14, when a value of the antenna port field is 0, the quantity of DMRS CDM groups to which data is not mapped is 2, corresponding DMRS port indexes are 0, 1, 2, and 3, and the quantity of front-loaded symbols is one symbol. When the value of the antenna port field is 1, the quantity of DMRS CDM groups to which data is not mapped is 2, the corresponding DMRS port indexes are 0, 1, 4, and 5, and the quantity of front-loaded symbols is two symbols, and the like.

For downlink transmission, the network device may also indicate, to the terminal, a quantity of to-be-sent data streams, that is, a rank, and a corresponding DMRS port index. Specifically, DCI signaling includes an antenna port field, indicating an allocated DMRS port index. The NR protocol defines different DMRS port tables for values of different configurations of a dmrs-Type and a maxLength. For example, Table 15 to Table 18 respectively provide DMRS port index tables corresponding to dmrs-Type=1 and maxLength=1; dmrs-Type=1 and maxLength=2; dmrs-Type=2 and max-Length=1; and dmrs-Type=2 and maxLength=2. The antenna port field in the DCI signaling indicates an index value in a DMRS port table corresponding to a value of the dmrs-Type and a value of the maxLength that are configured by using higher layer signaling, and each index value corresponds to one or more DMRS port indexes.

The NR system can simultaneously process a maximum of two codewords (codewords): a codeword 0 and a codeword 1. A single-codeword stream may be mapped to a maximum of four layers (namely, four DMRS ports). A double-codeword stream may be mapped to a maximum of eight layers. In this scenario, only the single-codeword stream is needed. For example, the codeword 0 is enabled (enabled), and the codeword 1 is disabled (disabled).

Table 15 DMRS port indexes (1000+DMRS port) corresponding to dmrs-Type=1 and maxLength=1

| One codeword: A codeword 0 is enabled, and a codeword 1 is disabled | | |
|---|---|---|
| Value | Quantity of DMRS code division multiplexing groups to which data is not mapped | DMRS port |
| 0 | 1 | 0 |
| 1 | 1 | 1 |
| 2 | 1 | 0 and 1 |
| 3 | 2 | 0 |
| 4 | 2 | 1 |
| 5 | 2 | 2 |
| 6 | 2 | 3 |
| 7 | 2 | 0 and 1 |
| 8 | 2 | 2 and 3 |
| 9 | 2 | 0 to 2 |
| 10 | 2 | 0 to 3 |
| 11 | 2 | 0 and 2 |
| 12 to 15 | Reserved | Reserved |

In Table 15, the antenna port field includes four bits, and corresponds to 16 values of the antenna port field. Values 12 to 15 of the antenna port field are used as reserved bits.

When dmrs-Type=1, a single time domain symbol may support a maximum of four DMRS ports: a port 0 to a port 3.

When a value of the antenna port field is "0", it indicates the port 0. When the value of the antenna port field is "1", it indicates the antenna port port 1, and the like.

The four DMRS ports may be divided into two CDM groups: a CDM group 0 and a CDM group 1.

For the Type 1 DMRS, as shown in Table 7 to Table 15, the quantity of DMRS code division multiplexing groups to which data is not mapped decides whether the DMRS and a data signal may be multiplexed on a same OFDM symbol. When the quantity of DMRS code division multiplexing groups to which data is not mapped is 1, it indicates that the data signal is not mapped to a time-frequency resource corresponding to one CDM group, and a time-frequency resource corresponding to one remaining CDM group may be used to map the data signal. Generally, the time-frequency resource to which the data signal is not mapped is a time-frequency resource corresponding to the CDM group 0, and the time-frequency resource to which the data may be mapped is a time-frequency resource corresponding to the CDM group 1. When the quantity of DMRS code division multiplexing groups to which data is not mapped is 2, it indicates that the data signal is not mapped to time-frequency resources corresponding to the two CDM groups. In this case, the data symbol is not mapped to an OFDM symbol to which the DMRS is mapped. The time-frequency resource to which the data signal is not mapped may be used to send the DMRS, or may be idle and is not used to send a signal.

When maxLength=1, it indicates that a maximum time domain symbol length allowed by different front-loaded DMRSs is 1, that is, the DMRS is allowed to be mapped to a maximum of one time domain symbol.

Table 16 DMRS port indexes (1000+DMRS port) corresponding to dmrs-Type=1 and maxLength=2

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Value | Quantity of DMRS code division multiplexing groups to which data is not mapped | DMRS port | Quantity of front-loaded symbols | Value | Quantity of DMRS code division multiplexing groups to which data is not mapped | DMRS port | Quantity of front-loaded symbols |
| 0 | 1 | 0 | 1 | 0 | 2 | 0 to 4 | 2 |
| 1 | 1 | 1 | 1 | 1 | 2 | 0, 1, 2, 3, 4, and 6 | 2 |
| 2 | 1 | 0 and 1 | 1 | 2 | 2 | 0, 1, 2, 3, 4, 5, and 6 | 2 |
| 3 | 2 | 0 | 1 | 3 | 2 | 0, 1, 2, 3, 4, 5, 6, and 7 | 2 |
| 4 | 2 | 1 | 1 | 4 to 31 | Reserved | Reserved | Reserved |
| 5 | 2 | 2 | 1 | | | | |
| 6 | 2 | 3 | 1 | | | | |
| 7 | 2 | 0 and 1 | 1 | | | | |
| 8 | 2 | 2 and 3 | 1 | | | | |
| 9 | 2 | 0 to 2 | 1 | | | | |
| 10 | 2 | 0 to 3 | 1 | | | | |
| 11 | 2 | 0 and 2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0 and 1 | 2 | | | | |
| 21 | 2 | 2 and 3 | 2 | | | | |
| 22 | 2 | 4 and 5 | 2 | | | | |
| 23 | 2 | 6 and 7 | 2 | | | | |
| 24 | 2 | 0 and 4 | 2 | | | | |
| 25 | 2 | 2 and 6 | 2 | | | | |
| 26 | 2 | 0, 1, and 4 | 2 | | | | |
| 27 | 2 | 2, 3, and 6 | 2 | | | | |
| 28 | 2 | 0, 1, 4, and 5 | 2 | | | | |
| 29 | 2 | 2, 3, 6, and 7 | 2 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Value | Quantity of DMRS code division multiplexing groups to which data is not mapped | DMRS port | Quantity of front-loaded symbols | Value | Quantity of DMRS code division multiplexing groups to which data is not mapped | DMRS port | Quantity of front-loaded symbols |
| 30 | 2 | 0, 2, 4, and 6 | 2 | | | | |
| 31 | Reserved | Reserved | Reserved | | | | |

In Table 16, for meanings of the value of the antenna port field, the quantity of DMRS code division multiplexing groups to which data is not mapped, the antenna port, and the maxLength, refer to the descriptions in Table 1.

Different from Table 15, in Table 16, the antenna port field is five bits, and may have 32 values. When there are less than four antenna ports, only the single-codeword stream is needed. For example, the codeword 0 is enabled, and the codeword 1 is disabled. When there are more than four antenna ports, the double-codeword stream is needed. For example, both the codeword 0 and the codeword 1 are enabled.

When maxLength=2, it indicates that a maximum time domain symbol length allowed by different front-loaded DMRSs is 2, that is, the DMRS is allowed to be mapped to a maximum of two time domain symbols.

Specifically, for the single-codeword stream, when values of the antenna port field are "0" to "11", a quantity of front-loaded symbols (Number of front-load symbols) is 1, that is, the DMRS is allowed to be mapped to one time domain symbol. When the values of the antenna port field are "12" to "30", the quantity of front-loaded symbols is 2, that is, the DMRS is allowed to be mapped to two time domain symbols.

For the double-codeword stream, when values of the antenna port field are "0" to "3", a quantity of front-loaded symbols is 2, that is, the DMRS is allowed to be mapped to two time domain symbols.

Table 17 DMRS port index table (1000+DMRS port) corresponding to dmrs-Type=2 and maxLength=1

| One codeword: A codeword 0 is enabled, and a codeword 1 is disabled | | | Two codewords: The codeword 0 is enabled, and the codeword 1 is enabled | | |
|---|---|---|---|---|---|
| Value | Quantity of DMRS code division multiplexing groups to which data is not mapped | DMRS port | Value | Quantity of DMRS code division multiplexing groups to which data is not mapped | DMRS port |
| 0 | 1 | 0 | 0 | 3 | 0 to 4 |
| 1 | 1 | 1 | 1 | 3 | 0 to 5 |
| 2 | 1 | 0 and 1 | 2 to 31 | Reserved | Reserved |
| 3 | 2 | 0 | | | |
| 4 | 2 | 1 | | | |
| 5 | 2 | 2 | | | |
| 6 | 2 | 3 | | | |
| 7 | 2 | 0 and 1 | | | |
| 8 | 2 | 2 and 3 | | | |
| 9 | 2 | 0 to 2 | | | |
| 10 | 2 | 0 to 3 | | | |
| 11 | 3 | 0 | | | |
| 12 | 3 | 1 | | | |
| 13 | 3 | 2 | | | |
| 14 | 3 | 3 | | | |

(continued)

| One codeword: A codeword 0 is enabled, and a codeword 1 is disabled | | | Two codewords: The codeword 0 is enabled, and the codeword 1 is enabled | | |
|---|---|---|---|---|---|
| Value | Quantity of DMRS code division multiplexing groups to which data is not mapped | DMRS port | Value | Quantity of DMRS code division multiplexing groups to which data is not mapped | DMRS port |
| 15 | 3 | 4 | | | |
| 16 | 3 | 5 | | | |
| 17 | 3 | 0 and 1 | | | |
| 18 | 3 | 2 and 3 | | | |
| 19 | 3 | 4 and 5 | | | |
| 20 | 3 | 0 to 2 | | | |
| 21 | 3 | 3 to 5 | | | |
| 22 | 3 | 0 to 3 | | | |
| 23 | 2 | 0 and 2 | | | |
| 24 to 31 | Reserved | Reserved | | | |

In Table 17, for meanings of the value of the antenna port field, the quantity of DMRS code division multiplexing groups to which data is not mapped, the antenna port, and the maxLength, refer to the descriptions in Table 15 and Table 16.

Different from Table 15 and Table 16, in Table 17, dmrs-Type=2, and one time domain symbol may support six ports.

Table 18 DMRS port index table (1000+DMRS port) corresponding to dmrs-Type=2 and maxLength=2

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Value | Quantity of DMRS code division multiplexing groups to which data is not mapped | DMRS port | Quantity of front-loaded symbols | Value | Quantity of DMRS code division multiplexing groups to which data is not mapped | DMRS port | Quantity of front-loaded symbols |
| 0 | 1 | 0 | 1 | 0 | 3 | 0 to 4 | 1 |
| 1 | 1 | 1 | 1 | 1 | 3 | 0 to 5 | 1 |
| 2 | 1 | 0 and 1 | 1 | 2 | 2 | 0, 1, 2, 3, and 6 | 2 |
| 3 | 2 | 0 | 1 | 3 | 2 | 0, 1,2,3,6, and 8 | 2 |
| 4 | 2 | 1 | 1 | 4 | 2 | 0, 1, 2, 3, 6, 7, and 8 | 2 |
| 5 | 2 | 2 | 1 | 5 | 2 | 0, 1, 2, 3, 6, 7, 8, and 9 | 2 |
| 6 | 2 | 3 | 1 | 6 to 63 | Reserved | Reserved | Reserved |
| 7 | 2 | 0 and 1 | 1 | | | | |
| 8 | 2 | 2 and 3 | 1 | | | | |
| 9 | 2 | 0 to 2 | 1 | | | | |
| 10 | 2 | 0 to 3 | 1 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Value | Quantity of DMRS code division multiplexing groups to which data is not mapped | DMRS port | Quantity of front-loaded symbols | Value | Quantity of DMRS code division multiplexing groups to which data is not mapped | DMRS port | Quantity of front-loaded symbols |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0 and 1 | 1 | | | | |
| 18 | 3 | 2 and 3 | 1 | | | | |
| 19 | 3 | 4 and 5 | 1 | | | | |
| 20 | 3 | 0 to 2 | 1 | | | | |
| 21 | 3 | 3 to 5 | 1 | | | | |
| 22 | 3 | 0 to 3 | 1 | | | | |
| 23 | 2 | 0 and 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0 and 1 | 2 | | | | |
| 37 | 3 | 2 and 3 | 2 | | | | |
| 38 | 3 | 4 and 5 | 2 | | | | |
| 39 | 3 | 6 and 7 | 2 | | | | |
| 40 | 3 | 8 and 9 | 2 | | | | |
| 41 | 3 | 10 and 11 | 2 | | | | |
| 42 | 3 | 0, 1, and 6 | 2 | | | | |
| 43 | 3 | 2, 3, and 8 | 2 | | | | |
| 44 | 3 | 4, 5, and 10 | 2 | | | | |

(continued)

| One codeword: A codeword 0 is enabled, and a codeword 1 is disabled | | | | Two codewords: The codeword 0 is enabled, and the codeword 1 is enabled | | | |
|---|---|---|---|---|---|---|---|
| Value | Quantity of DMRS code division multiplexing groups to which data is not mapped | DMRS port | Quantity of front-loaded symbols | Value | Quantity of DMRS code division multiplexing groups to which data is not mapped | DMRS port | Quantity of front-loaded symbols |
| 45 | 3 | 0, 1, 6, and 7 | 2 | | | | |
| 46 | 3 | 2, 3, 8, and 9 | 2 | | | | |
| 47 | 3 | 4, 5, 10, and 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0 and 1 | 2 | | | | |
| 53 | 1 | 6 and 7 | 2 | | | | |
| 54 | 2 | 0 and 1 | 2 | | | | |
| 55 | 2 | 2 and 3 | 2 | | | | |
| 56 | 2 | 6 and 7 | 2 | | | | |
| 57 | 2 | 8 and 9 | 2 | | | | |
| 58 to 63 | Reserved | Reserved | Reserved | | | | |

In Table 18, for meanings of the value of the antenna port field, the quantity of DMRS code division multiplexing groups to which data is not mapped, the antenna port, and the maxLength, refer to the descriptions in Table 15 and Table 16.

For the Type 2 DMRS, as shown in Table 15 to Table 18, the quantity of DMRS code division multiplexing groups to which data is not mapped decides whether the DMRS and a data signal may be multiplexed on a same OFDM symbol. When the quantity of DMRS code division multiplexing groups to which data is not mapped is 1, it indicates that the data signal is not mapped to a time-frequency resource corresponding to one CDM group, and time-frequency resources corresponding to two remaining CDM groups may be used to map the data signal. Generally, the time-frequency resource to which the data signal is not mapped is a time-frequency resource corresponding to a CDM group 0, and the time-frequency resources to which the data may be mapped are a time-frequency resource corresponding to a CDM group 1 and a time-frequency resource corresponding to a CDM group 2. When the quantity of DMRS code division multiplexing groups to which data is not mapped is 2, it indicates that the data signal is not mapped to time-frequency resources corresponding to two CDM groups, and a time-frequency resource corresponding to one remaining CDM group may be used to map the data signal. Generally, the time-frequency resources to which the data signal is not mapped are the time-frequency resources corresponding to the CDM group 0 and the CDM group 1, and the time-frequency resource to which the data may be mapped is the time-frequency resource corresponding to the CDM group 2. When the quantity of DMRS code division multiplexing groups to which data is not mapped is 3, it indicates that the data signal is not mapped to time-frequency resources corresponding to the three CDM groups. In this case, the data symbol is not mapped to an OFDM symbol to which the DMRS is mapped. The time-frequency resource to which the data signal is not mapped may be used to send the DMRS, or may be idle and is not used to send a signal.

Different from Table 17, in Table 18, dmrs-Type=2, and one time domain symbol may support a maximum of six orthogonal DMRS ports.

Different from Table 15 to Table 17, in Table 18, the antenna port field is six bits, and may have 64 values.

For the double-codeword stream, when values of the antenna port field are "0" to "5", a quantity of front-loaded symbols is 2, that is, the DMRS is allowed to be mapped to two time domain symbols.

For the DMRS port indication of the uplink system, it can be learned that currently, transmission of a maximum of four streams (a maximum rank=4) may be supported in the uplink. With continuous evolution of terminal antenna technologies in the future, a quantity of terminal antennas further increases in the future, for example, eight receiving antennas. To improve a transmission rate more effectively, a larger quantity of antennas enables a larger quantity of transport streams. In the future, MIMO transmission of more than four streams needs to be further supported (for a single terminal, for example, a rank 5 to a rank 8 are supported). However, the uplink DMRS port index table described above cannot support transmission of more than four streams.

For the DMRS port indication of the downlink system, it can be learned that currently, transmission of a maximum of eight streams may be supported in the downlink, but large DMRS overheads are needed to support a rank 5 to a rank 8. For example, for a single-symbol Type 1 DMRS, there are only a maximum of four DMRS ports, and the rank 5 to the rank 8 cannot be supported. Therefore, a Type 1 DMRS needs to use a double-symbol DMRS to support transmission of more than four streams. In addition, for a single-symbol Type 2 DMRS, only transmission of a maximum of the rank 6 can be supported. To support the rank 7 and the rank 8, a double-symbol DMRS needs to be used. Compared with the single-symbol DMRS, the double-symbol DMRS increases additional overheads of one OFDM symbol.

As described above, the DMRS may be expanded, to support twice the quantity of orthogonal DMRS ports. This provides a new design capability for an optional DMRS port index design of the rank 5 to the rank 8. However, currently, there is no solution of how to indicate DMRS ports of the rank 5 to the rank 8.

In view of this, this application provides a DMRS port indication solution. A dmrs-Type and a maxLength are obtained. A first relationship is determined, where the first relationship is associated with the dmrs-Type and the maxLength, the first relationship includes at least one candidate value of an antenna port field and candidate antenna ports corresponding to each of the at least one candidate value of the antenna port field, a quantity of candidate antenna ports corresponding to each candidate value is greater than or equal to N, N is greater than 4, and the candidate antenna ports corresponding to each candidate value are included in a first antenna port group and/or a second antenna port group. DCI is received, corresponding antenna ports are determined based on one value indicated by the antenna port field in the DCI, and DMRSs corresponding to the determined antenna ports are received, to implement an indication for DMRS antenna ports of more than four streams.

FIG. 5 is a schematic flowchart of a DMRS port indication method according to an embodiment of this application. For example, the method may include the following steps.

S501: A terminal obtains a demodulation reference signal DMRS type (dmrs-Type) and a maximum quantity of DMRS symbols (maxLength).

For example, a network device may send first signaling, where the first signaling includes the dmrs-Type and the maxLength. Specifically, the network device may include the dmrs-Type and the maxLength in higher layer signaling (higher layer parameter), for example, a radio resource control (radio resource control, RRC) or radio resource control reconfiguration (RRCReconfiguration) message. The dmrs-Type may be a Type 1 or a Type 2. In addition, an optional value of the dmrs-Type may further include a Type 1E and a Type 2E, where the Type 1E indicates an R18 expanded DMRS type 1, and the Type 2E indicates an R18 expanded DMRS type 2.

Alternatively, the terminal may obtain the dmrs-Type and the maxLength in another manner. For example, the dmrs-Type and the maxLength may be pre-stored in the terminal, may be obtained through negotiation between the terminal and the network device in advance, or may be obtained by using other signaling.

For example, the demodulation reference signal DMRS type (dmrs-Type) and the maximum quantity of DMRS symbols (maxLength) may alternatively have other names. This is not limited in this embodiment of this application.

S502: The terminal determines a first relationship.

The first relationship includes at least one candidate value of an antenna port field and candidate antenna ports corresponding to each of the at least one candidate value of the antenna port field. In this embodiment, a quantity of candidate antenna ports corresponding to each candidate value is greater than or equal to N, where N is greater than 4. For example, N may be 5 to 8. It should be noted that the candidate antenna ports corresponding to each candidate value are for a single terminal (single user, SU). The candidate antenna ports are relative to the antenna ports corresponding to the value indicated by the antenna port field in the DCI. The candidate antenna ports are antenna ports in a DMRS port index table. DMRSs may be sent on the antenna ports, or may not be sent on the antenna ports.

For example, the quantity of candidate antenna ports corresponding to each candidate value is N. N antenna ports correspond to N spatial layers.

The first relationship has an association relationship with the dmrs-Type and the maxLength. The at least one candidate value of the antenna port field and the N candidate antenna ports corresponding to each of the at least one candidate value of the antenna port field may vary with different dmrs-Types and maxLengths.

In this embodiment, the candidate antenna ports corresponding to each candidate value are included in a first antenna port group and a second antenna port group. A quantity of antenna ports included in the first antenna port group is the same as a quantity of antenna ports included in the second antenna port group, the first antenna port group and the second antenna port group each correspond to at least two code division multiplexing groups, and a quantity of code division multiplexing groups corresponding to the first antenna port group is the same as a quantity of code division multiplexing groups corresponding to the second antenna port group. In an implementation, the first antenna port group and the second antenna port group correspond to a plurality of identical code division multiplexing groups. DMRSs that correspond to antenna ports included in the first antenna port group and the second antenna port group and that correspond to a same code division multiplexing group are mapped to a same time-frequency resource.

The first antenna port group herein may be referred to as an expanded antenna port group, as shown in FIG. 3 or FIG. 4. The second antenna port group may be referred to as an unexpanded antenna port group or an existing antenna port group, as shown in FIG. 2. A quantity of antenna ports included in the expanded antenna port group is the same as a quantity of antenna ports included in the unexpanded antenna port group. The expanded antenna port group and the unexpanded antenna port group each correspond to at least two code division multiplexing groups, and a quantity of code division multiplexing groups corresponding to the expanded antenna port group is the same as a quantity of code division multiplexing groups corresponding to the unexpanded antenna port group.

FIG. 6a is a diagram of time-frequency resource mapping of a single-symbol type 1 DMRS according to an embodiment of this application. According to a DMRS port expansion design, a maximum quantity of DMRS ports that may be supported is 8, and the DMRS ports are divided into two antenna port groups, and each antenna port group includes four DMRS ports. The first antenna port group includes DMRS ports 4, 5, 6, and 7, and the second antenna port group includes DMRS ports 0, 1, 2, and 3. The DMRS ports 4 and 5 in the first antenna port group correspond to a CDM group 0, and the DMRS ports 6 and 7 in the first antenna port group correspond to a CDM group 1. The DMRS ports 0 and 1 in the second antenna port group correspond to the CDM group 0, and the DMRS ports 2 and 3 in the second antenna port group correspond to the CDM group 1. It can be learned that the first antenna port group and the second antenna port group each correspond to two CDM groups, and a quantity of CDM groups corresponding to the first antenna port group is the same as a quantity of CDM groups corresponding to the second antenna port group. DMRSs corresponding to DMRS ports that belong to a same CDM group and that are in the first antenna port group and the second antenna port group are mapped to a same time-frequency resource. In another implementation, for the single-symbol type 1 DMRS, antenna port indexes corresponding to antenna ports included in the first antenna port group may alternatively be 8, 9, 10, and 11, and antenna port indexes corresponding to antenna ports included in the second antenna port group are 0, 1, 2, and 3. In still another implementation, for the single-symbol type 1 DMRS, antenna port indexes corresponding to antenna ports included in the first antenna port group are E, F, G, and H, and antenna port indexes corresponding to antenna ports included in the second antenna port group are A, B, C, and D.

FIG. 6b is a diagram of time-frequency resource mapping of a double-symbol type 1 DMRS according to an embodiment of this application. According to a DMRS port expansion design, a maximum quantity of DMRS ports that may be supported is 16, and the DMRS ports are divided into two antenna port groups, and each antenna port group includes eight DMRS ports. The first antenna port group includes DMRS ports 8 to 15, and the second antenna port group includes DMRS ports 0 to 7. The DMRS ports 8, 9, 12, and 13 in the first antenna port group correspond to a CDM group 0, and the DMRS ports 10, 11, 14, and 15 in the first antenna port group correspond to a CDM group 1. The DMRS ports 0, 1, 4, and 5 in the second antenna port group correspond to the CDM group 0, and the DMRS ports 2, 3, 6, and 7 in the second antenna port group correspond to the CDM group 1. It can be learned that the first antenna port group and the second antenna port group each correspond to two CDM groups, and a quantity of CDM groups corresponding to the first antenna port group is the same as a quantity of CDM groups corresponding to the second antenna port group. DMRSs corresponding to DMRS ports that belong to a same CDM group and that are in the first antenna port group and the second antenna port group are mapped to a same time-frequency resource. In still another implementation, for the double-symbol type 1 DMRS, antenna port indexes corresponding to antenna ports included in the first antenna port group are I, J, K, L, M, N, and O, and antenna port indexes corresponding to antenna ports included in the second antenna port group are A, B, C, D, E, F, G, and H.

FIG. 7a is a diagram of time-frequency resource mapping of a single-symbol type 2 DMRS according to an embodiment of this application. According to a DMRS port expansion design, a maximum quantity of DMRS ports that may be supported is 12, and the DMRS ports are divided into two antenna port groups, and each antenna port group includes six DMRS ports. The first antenna port group includes DMRS ports 6 to 11, and the second antenna port group includes DMRS ports 0 to 5. The DMRS ports 6 and 7 in the first antenna port group correspond to a CDM group 0, the DMRS ports 8 and 9 in the first antenna port group correspond to a CDM group 1, and the DMRS ports 10 and 11 in the first antenna port group correspond to a CDM group 2. The DMRS ports 0 and 1 in the second antenna port group correspond to the CDM group 0, the DMRS ports 2 and 3 in the second antenna port group correspond to the CDM group 1, and the DMRS ports 4 and 5 in the second antenna port group correspond to the CDM group 2. It can be learned that the first antenna port group and the second antenna port group each correspond to three CDM groups, and a quantity of CDM groups corresponding to the first antenna port group is the same as a quantity of CDM groups corresponding to the second antenna port group. DMRSs corresponding to DMRS ports that belong to a same CDM group and that are in the first antenna port group and the second antenna port group are mapped to a same time-frequency resource. In another implementation, for the single-symbol type 2 DMRS, antenna port indexes corresponding to antenna ports included in the first antenna port group may alternatively be 12, 13, 14, 15, 16, and 17, and antenna port indexes corresponding to antenna ports included in the second antenna port group are 0, 1, 2, 3, 4, and 5. In still another implementation, for the single-symbol type 1 DMRS, antenna port indexes corresponding to antenna ports included in the first antenna port group are G, H, I, J, K, and L, and antenna port indexes corresponding to antenna ports included in the second antenna port group are A, B, C, D, E, and F.

FIG. 7b is a diagram of time-frequency resource mapping of a double-symbol type 2 DMRS according to an embodiment of this application. According to a DMRS port expansion design, a maximum quantity of DMRS ports that may be supported is 24, and the DMRS ports are divided into two antenna port groups, and each antenna port group includes 12 DMRS ports. The first antenna port group includes DMRS ports 12 to 23, and the second antenna port group includes DMRS ports 0 to 11. The DMRS ports 12, 13, 18, and 19 in the first antenna port group correspond to a CDM group 0, the DMRS ports 14, 15, 20, and 21 in the first antenna port group correspond to a CDM group 1, and the DMRS ports 16, 17, 22, and 23 in the first antenna port group correspond to a CDM group 2. The DMRS ports 0, 1, 6, and 7 in the second antenna port group correspond to the CDM group 0, the DMRS ports 2, 3, 8, and 9 in the second antenna port group correspond to the CDM group 1, and the DMRS ports 4, 5, 10, and 11 in the second antenna port group correspond to the CDM group 2. It can be learned that the first antenna port group and the second antenna port group each correspond to three CDM groups, and a quantity of CDM groups corresponding to the first antenna port group is the same as a quantity of CDM groups corresponding to the second antenna port group. DMRSs corresponding to DMRS ports that belong to a same CDM group and that are in the first antenna port group and the second antenna port group are mapped to a same time-frequency resource. In another implementation, for the double-symbol type 2 DMRS, antenna port indexes corresponding to antenna ports included in the first antenna port group are M, N, O, P, Q, R, S, T, U, V, W, and X, and antenna port indexes corresponding to antenna ports included in the second antenna port group are A, B, C, D, E, F, G, H, I, J, K, and L.

It should be noted that FIG. 6a, FIG. 6b, FIG. 7a, and FIG. 7b are merely examples of antenna port expansion designs for the single-symbol/double-symbol type 1/type 2 DMRS. The port index in the first antenna port group and the port index the second antenna port group are also merely examples, and there is no strict sequence relationship between the port index in the first antenna port group and the port index in the second antenna port group. For example, the port index in the second antenna port group may be an existing port index, and the port index in the first antenna port group may be consecutive or inconsecutive with the port index in the second antenna port group.

Further, the first relationship further includes a quantity of DMRS code division multiplexing groups to which data is not mapped and that correspond to each of the at least one candidate value of the antenna port field in the DCI.

There are different first relationships for different DMRS types and different maximum quantities of DMRS symbols. The first relationship may be represented as a DMRS port index table. Descriptions are separately provided below.

A: Single-symbol type 1 DMRS

The network device includes dmrs-Type=1 and maxLength=1 in the first signaling, to indicate that a used DMRS type is a type 1 DMRS and a maximum quantity of DMRS symbols is 1. Refer to the DMRS port expansion method shown in FIG. 3. A total quantity of orthogonal DMRS ports that may be supported after expansion is 8. In an implementation, the orthogonal DMRS ports respectively correspond to DMRS port indexes 0 to 7. It should be noted that the port indexes 0 to 7 herein may alternatively be represented as DMRS port indexes 1000 to 1007. For the single-symbol type 1 DMRS, two CDM groups are included: a CDM group 0 and a CDM group 1, and each CDM group includes four DMRS ports, as shown in FIG. 6a. The CDM group 0 includes DMRS ports 0, 1, 4, and 5, and the CDM group 1 includes DMRS ports 2, 3, 6, and 7. It can be learned that, for an unexpanded DRMS, a total of four DMRS ports are supported. Therefore, the rank 5 to the rank 8 cannot be supported. For an expanded DMRS, a total of eight DMRS ports may be supported. Therefore, a single symbol may support transmission of a maximum of the rank 8. In an implementation, after the DMRS is expanded, supported DMRS port indexes may alternatively have another value range. For example, the eight supported DMRS ports correspond to port indexes 8 to 15, that is, DMRS port indexes 0 to 7 shown in Table 19 to Table 22 may alternatively be represented as the indexes 8 to 15, where each value in the indexes 0 to 7 one-to-one corresponds to each value in the indexes 8 to 15. Alternatively, DMRS port indexes 0 to 7 shown in Table 18 to Table 21 may alternatively be represented as indexes 0 to 3 and indexes 8 to 11, that is, DMRS port indexes 4 to 7 shown in Table 18 to Table 21 may alternatively be represented as the indexes 8 to 11, where each value in the indexes 4 to 7 one-to-one corresponds to each value in the indexes 8 to 11.

For the single-symbol type 1 DMRS, different ranks correspond to different DMRS port index tables, as shown in Table 19 to Table 22.

Table 19 DMRS port index table corresponding to dmrs-Type=1, maxLength=1, and rank=5

| Value | Quantity of DMRS CDM groups to which data is not mapped | DMRS port | Quantity of front-loaded symbols |
|---|---|---|---|
| 0 | 2 | 0 to 4 | 1 |
| 1 to 15 | Reserved | Reserved | Reserved |

The DMRS port index table may be used for uplink/downlink transmission.

Herein, N=5, that is, the rank is 5, and transmission of a maximum of five streams may be supported.

In the table, when a value of an antenna port is "0", it indicates that the quantity of DMRS CDM groups to which data is not mapped is 2, where five configured DMRS antenna ports belong to two CDM groups, and a time-frequency resource corresponding to no additional CDM group is used to map data; DMRS port indexes are 0 to 4; and the quantity of front-loaded symbols is 1 (namely, the DMRS ports 0 to 4 are mapped to one symbol). Port indexes in the DMRS port indexes 0 to 4 may alternatively have other values of DMRS ports, for example, 0, 1, 2, 3, and 5; 0, 1, 2, 3, and 6; or 0, 1, 2, 3, and 7.

That the value of the antenna port is "0" is an example, and the antenna port may be any value. This is not limited in this application.

It can be learned that the rank 5 is supported, but mapping needs to be performed only on one symbol, to reduce symbol overheads.

Table 20 DMRS port index table corresponding to dmrs-Type=1, maxLength=1, and rank=6

| Value | Quantity of DMRS CDM groups to which data is not mapped | DMRS port | Quantity of front-loaded symbols |
|---|---|---|---|
| 0 | 2 | 0, 1, 2, 3, 4, and 6 | 1 |
| 1 to 15 | Reserved | Reserved | Reserved |

The DMRS port index table may be used for uplink/downlink transmission.

Herein, N=6, that is, the rank is 6, and transmission of a maximum of six streams may be supported.

In the table, when a value of an antenna port is "0", it indicates that the quantity of DMRS CDM groups to which data is not mapped is 2, where six configured DMRS antenna ports belong to two CDM groups, and a time-frequency resource corresponding to no additional CDM group is used to map data; DMRS port indexes are 0, 1, 2, 3, 4, and 6; and the quantity of front-loaded symbols is 1 (namely, the DMRS ports 0, 1, 2, 3, 4, and 6 are mapped to one symbol). Port indexes in the DMRS port indexes 0, 1, 2, 3, 4, and 6 may alternatively have other values of DMRS ports, for example, 0, 1, 2, 3, 4, and 7; 0, 1, 2, 3, 5, and 6; or 0, 1, 2, 3, 5, and 7.

That the value of the antenna port is "0" is an example, and the antenna port may be any value. This is not limited in this application.

It can be learned that the rank 6 is supported, but mapping needs to be performed only on one symbol, to reduce symbol overheads.

Table 21 DMRS port index table corresponding to dmrs-Type=1, maxLength=1, and rank=7

| Value | Quantity of DMRS CDM groups to which data is not mapped | DMRS port | Quantity of front-loaded symbols |
|---|---|---|---|
| 0 | 2 | 0, 1, 2, 3, 4, 5, and 6 | 1 |
| 1 to 15 | Reserved | Reserved | Reserved |

The DMRS port index table may be used for uplink/downlink transmission.

Herein, N=7, that is, the rank is 7, and transmission of a maximum of seven streams may be supported.

In the table, when a value of an antenna port is "0", it indicates that the quantity of DMRS CDM groups to which data is not mapped is 2, where seven configured DMRS antenna ports belong to two CDM groups, and a time-frequency resource corresponding to no additional CDM group is used to map data; DMRS port indexes are 0, 1, 2, 3, 4, 5, and 6; and the quantity of front-loaded symbols is 1 (namely, the DMRS ports 0, 1, 2, 3, 4, 5, and 6 are mapped to one symbol). Port indexes in the DMRS port indexes 0, 1, 2, 3, 4, 5, and 6 may alternatively have other values of DMRS ports, for example, 0, 1, 2, 3, 4, 5, and 7; 0, 1, 2, 3, 4, 6, and 7; or 0, 1, 2, 3, 5, 6, and 7.

That the value of the antenna port is "0" is an example, and the antenna port may be any value. This is not limited in this application.

It can be learned that the rank 7 is supported, but mapping needs to be performed only on one symbol, to reduce symbol overheads.

The DMRS port index table may be used for uplink/downlink transmission.

Herein, N=8, that is, the rank is 8, and transmission of a maximum of eight streams may be supported.

In the table, when a value of an antenna port is "0", it indicates that the quantity of DMRS CDM groups to which data is not mapped is 2, where eight configured DMRS antenna ports belong to two CDM groups, and a time-frequency resource corresponding to no additional CDM group is used to map data; DMRS port indexes are 0, 1, 2, 3, 4, 5, 6, and 7; and the quantity of front-loaded symbols is 1 (namely, the DMRS ports 0, 1, 2, 3, 4, 5, 6, and 7 are mapped to one symbol). Port indexes in the DMRS port indexes 0, 1, 2, 3, 4, 5, 6, and 7 may alternatively have other values of DMRS ports.

Table 22 DMRS port index table corresponding to dmrs-Type=1, maxLength=1, and rank=8

| Value | Quantity of DMRS CDM groups to which data is not mapped | DMRS port | Quantity of front-loaded symbols |
|---|---|---|---|
| 0 | 2 | 0, 1, 2, 3, 4, 5, 6, and 7 | 1 |
| 1 to 15 | Reserved | Reserved | Reserved |

That the value of the antenna port is "0" is an example, and the antenna port may be any value. This is not limited in this application.

It can be learned that the rank 8 is supported, but mapping needs to be performed only on one symbol, to reduce symbol overheads.

B: Double-symbol type 1 DMRS

The network device includes dmrs-Type=1 and maxLength=2 in the first signaling, to indicate that a used DMRS type is a type 1 DMRS and a maximum quantity of DMRS symbols is 2. Refer to the DMRS port expansion method. A total quantity of orthogonal DMRS ports that may be supported after expansion is 16. In an implementation, the orthogonal DMRS ports respectively correspond to DMRS port indexes 0 to 15. It should be noted that the port indexes 0 to 15 herein may alternatively be represented as DMRS port indexes 1000 to 1015. For the double-symbol type 1 DMRS, two CDM groups are included: a CDM group 0 and a CDM group 1, and each CDM group includes eight DMRS ports, as shown in FIG. 6b. The CDM group 0 includes DMRS ports 0, 1, 4, 5, 8, 9, 12, and 13, and the CDM group 1 includes DMRS ports 2, 3, 6, 7, 10, 11, 14, and 15. It can be learned that, for an unexpanded DRMS, one CDM group supports a total of four DMRS ports. Therefore, two CDM groups are needed to support the rank 5 to the rank 8. For an expanded DMRS, one CDM group supports a total of eight DMRS ports. Therefore, only one CDM group is needed to support transmission of a maximum of the rank 8. In an implementation, after the DMRS is expanded, supported DMRS port indexes may alternatively have another value range. For example, 16 supported DMRS ports correspond to port indexes 8 to 23, that is, DMRS port indexes 0 to 15 shown in Table 23 to Table 26 may alternatively be represented as the indexes 8 to 23, where each value in the indexes 0 to 15 one-to-one corresponds to each value in the indexes 8 to 23. Alternatively, 16 supported DMRS ports respectively correspond to port indexes 0 to 7 and 8 to 15.

For the double-symbol type 1 DMRS, different ranks correspond to different DMRS port index tables, as shown in Table 23 to Table 26.

Table 23 DMRS port index table corresponding to dmrs-Type=1, maxLength=2, and rank=5

| Value | Quantity of DMRS CDM groups to which data is not mapped | DMRS port | Quantity of front-loaded symbols |
|---|---|---|---|
| 0 | 2 | 0 to 4 | 2 |
| 1 | 1 | 0, 1, 4, 5, and 8 | 2 |
| 2 | 2 | 0 to 4 | 1 |
| 3 to 15 | Reserved | Reserved | Reserved |

The DMRS port index table may be used for uplink/downlink transmission.

Herein, N=5, that is, the rank is 5, and transmission of a maximum of five streams may be supported.

In the table, when a value of an antenna port is "0", it indicates that the quantity of DMRS CDM groups to which data is not mapped is 2, where five configured DMRS antenna ports belong to two CDM groups, and a time-frequency resource corresponding to no additional CDM group is used to map data; DMRS port indexes are 0 to 4; and the quantity of front-loaded symbols is 2 (namely, the DMRS ports 0 to 4 are mapped to two symbols).

When the value of the antenna port is "1", it indicates that the quantity of DMRS CDM groups to which data is not mapped is 1, where five configured DMRS antenna ports belong to one CDM group, and a time-frequency location corresponding to one remaining CDM group may be used to map data; DMRS port indexes are 0, 1, 4, 5, and 8; and the quantity of front-loaded symbols is 2 (namely, the DMRS ports 0, 1, 4, 5, and 8 are mapped to two symbols). It can be learned that the rank 5 is supported, and a quantity of front-loaded symbols occupied by the five configured DMRS antenna ports is 2, but only one CDM group is used, to reduce a resource requirement. The DMRS port indexes 0, 1, 4, 5, and 8 may alternatively have other values of DMRS ports, for example, 0, 1, 4, 5, and 9; 0, 1, 4, 5, and 12; 0, 1, 4, 5, and 13; 2, 3, 6, 7, and 10; 2, 3, 6, 7, and 11; 2, 3, 6, 7, and 14; or 2, 3, 6, 7, and 15.

When the value of the antenna port is "2", it indicates that the quantity of DMRS CDM groups to which data is not mapped is 2, where five configured DMRS antenna ports belong to two CDM groups, and a time-frequency resource corresponding to no additional CDM group is used to map data; DMRS port indexes are 0 to 4; and the quantity of front-loaded symbols is 1 (namely, the DMRS ports 0 to 4 are mapped to one symbol). It can be learned that the rank 5 is supported, but mapping needs to be performed only on one symbol, to reduce symbol overheads. Port indexes in the DMRS port indexes 0 to 4 may alternatively have other values of DMRS ports, for example, 0, 1, 2, 3, and 5, 0, 1, 2, 3, and 6, or 0, 1, 2, 3, and 7.

The value of the antenna port is an example and may be any value. This is not limited in this application.

The table may include all rows corresponding to the values "0", "1", and "2", or may include a row corresponding to one or more of the values "0", "1", and "2".

Table 24 DMRS port index table corresponding to dmrs-Type=1, maxLength=2, and rank=6

| Value | Quantity of DMRS CDM groups to which data is not mapped | DMRS port | Quantity of front-loaded symbols |
|---|---|---|---|
| 0 | 2 | 0, 1, 2, 3, 4, and 6 | 2 |
| 1 | 1 | 0, 1, 4, 5, 8, and 9 | 2 |
| 2 | 2 | 0, 1, 2, 3, 4, and 6 | 1 |
| 2 to 15 | Reserved | Reserved | Reserved |

The DMRS port index table may be used for uplink/downlink transmission.

Herein, N=6, that is, the rank is 6, and transmission of a maximum of six streams may be supported.

In the table, when a value of an antenna port is "0", it indicates that the quantity of DMRS CDM groups to which data is not mapped is 2, where six configured DMRS antenna ports belong to two CDM groups, and a time-frequency resource corresponding to no additional CDM group is used to map data; DMRS port indexes are 0, 1, 2, 3, 4, and 6; and the quantity of front-loaded symbols is 2 (namely, the DMRS ports 0, 1, 2, 3, 4, and 6 are mapped to two symbols).

When the value of the antenna port is "1", it indicates that the quantity of DMRS CDM groups to which data is not mapped is 1, where six configured DMRS antenna ports are divided into one CDM group, and a time-frequency resource corresponding to one remaining CDM group may be used to map data; DMRS port indexes are 0, 1, 4, 5, 8, and 9; and the quantity of front-loaded symbols is 2 (namely, the DMRS ports 0, 1, 4, 5, 8, and 9 are mapped to two symbols). It can be learned that the rank 6 is supported, and a quantity of front-loaded symbols occupied by the six configured DMRS antenna ports is 2, but only one CDM group is used, to reduce a resource requirement. Port indexes in the DMRS port indexes 0, 1, 4, 5, 8, and 9 may alternatively have other values of DMRS ports, for example, 0, 1, 4, 5, 12, and 13; 0, 1, 4, 5, 8, and 12; 0, 1, 4, 5, 9, and 13; 2, 3, 6, 7, 10, and 11; 2, 3, 6, 7, 14, and 15; 2, 3, 6, 7, 10, and 14; or 2, 3, 6, 7, 11, and 15.

When the value of the antenna port is "2", it indicates that the quantity of DMRS CDM groups to which data is not mapped is 2, where six configured DMRS antenna ports belong to two CDM groups, and a time-frequency resource corresponding to no additional CDM group is used to map data; DMRS port indexes are 0, 1, 2, 3, 4, and 6; and the quantity of front-loaded symbols is 1 (namely, the DMRS ports 0, 1, 2, 3, 4, and 6 are mapped to one symbol). It can be learned that the rank 6 is supported, but mapping needs to be performed only on one symbol, to reduce symbol overheads. Port indexes in the DMRS port indexes 0, 1, 2, 3, 4, and 6 may alternatively have other values of DMRS ports, for example, 0, 1, 2, 3, 4, and 7; 0, 1, 2, 3, 5, and 6; or 0, 1, 2, 3, 5, and 7.

The value of the antenna port is an example and may be any value. This is not limited in this application.

The table may include all rows corresponding to the values "0", "1", and "2", or may include a row corresponding to one or more of the values "0", "1", and "2".

Table 25 DMRS port index table corresponding to dmrs-Type=1, maxLength=2, and rank=7

| Value | Quantity of DMRS CDM groups to which data is not mapped | DMRS port | Quantity of front-loaded symbols |
|---|---|---|---|
| 0 | 2 | 0, 1, 2, 3, 4, 5, and 6 | 2 |
| 1 | 1 | 0, 1, 4, 5, 8, 9, and 12 | 2 |
| 2 | 2 | 0, 1, 2, 3, 4, 5, and 6 | 1 |
| 3 to 15 | Reserved | Reserved | Reserved |

The DMRS port index table may be used for uplink/downlink transmission.

Herein, N=7, that is, the rank is 7, and transmission of a maximum of seven streams may be supported.

In the table, when a value of an antenna port is "0", it indicates that the quantity of DMRS CDM groups to which data is not mapped is 2, where seven configured DMRS antenna ports belong to two CDM groups, and a time-frequency resource corresponding to no additional CDM group is used to map data; DMRS port indexes are 0, 1, 2, 3, 4, 5, and 6; and the quantity of front-loaded symbols is 2 (namely, the DMRS ports 0, 1, 2, 3, 4, 5, and 6 are mapped to two symbols).

When the value of the antenna port is "1", it indicates that the quantity of DMRS CDM groups to which data is not mapped is 1, where seven configured DMRS antenna ports belong to one CDM group, and a time-frequency resource corresponding to one remaining CDM group may be used to map data; DMRS port indexes are 0, 1, 4, 5, 8, 9, and 12; and the quantity of front-loaded symbols is 2 (namely, the DMRS ports 0, 1, 4, 5, 8, 9 and 12 are mapped to two symbols). It can be learned that the rank 7 is supported, and a quantity of front-loaded symbols occupied by the seven configured DMRS antenna ports is 2, but only one CDM group is used, to reduce a resource requirement. Port indexes in the DMRS port indexes 0, 1, 4, 5, 8, 9, and 12 may alternatively have other values of DMRS ports, for example, 0, 1, 4, 5, 8, 9, and 13; 0, 1, 4, 5, 8, 12, and 13; 0, 1, 4, 5, 9, 12, and 13; 2, 3, 6, 7, 10, 11, and 14; 2, 3, 6, 7, 10, 11, and 15; 2, 3, 6, 7, 10, 14, and 15; or 2, 3, 6, 7, 11, 14, and 15.

When the value of the antenna port is "2", it indicates that the quantity of DMRS CDM groups to which data is not mapped is 2, where seven configured DMRS antenna ports belong to two CDM groups, and a time-frequency resource corresponding to no additional CDM group is used to map data; DMRS port indexes are 0, 1, 2, 3, 4, 5, and 6; and the quantity of front-loaded symbols is 1 (namely, the DMRS ports 0, 1, 2, 3, 4, 5, and 6 are mapped to one symbol). It can be learned that the rank 6 is supported, but mapping needs to be performed only on one symbol, to reduce symbol overheads. Port indexes in the DMRS port indexes 0, 1, 2, 3, 4, 5, and 6 may alternatively have other values of DMRS ports, for example, 0, 1, 2, 3, 4, 5, and 7; 0, 1, 2, 3, 4, 6, and 7; or 0, 1, 2, 3, 5, 6, and 7.

The value of the antenna port is an example and may be any value. This is not limited in this application.

The table may include all rows corresponding to the values "0", "1", and "2", or may include a row corresponding to one or more of the values "0", "1", and "2".

Table 26 DMRS port index table corresponding to dmrs-Type=1, maxLength=2, and rank=8

| Value | Quantity of DMRS CDM groups to which data is not mapped | DMRS port | Quantity of front-loaded symbols |
|---|---|---|---|
| 0 | 2 | 0, 1, 2, 3, 4, 5, 6, and 7 | 2 |
| 1 | 1 | 0, 1, 4, 5, 8, and 9<br>12, and 13 | 2 |
| 2 | 2 | 0, 1, 2, 3, 4, 5, 6, and 7 | 1 |
| 1 to 15 | Reserved | Reserved | Reserved |

The DMRS port index table may be used for uplink/downlink transmission.

Herein, N=8, that is, the rank is 8, and transmission of a maximum of eight streams may be supported.

In the table, when a value of an antenna port is "0", it indicates that the quantity of DMRS CDM groups to which data is not mapped is 2, where eight configured DMRS antenna ports belong to two CDM groups, and a time-frequency resource corresponding to no additional CDM group is used to map data; DMRS port indexes are 0, 1, 2, 3, 4, 5, 6, and 7; and the quantity of front-loaded symbols is 2 (namely, the DMRS ports 0, 1, 2, 3, 4, 5, 6, and 7 are mapped to two symbols).

When the value of the antenna port is "1", it indicates that the quantity of DMRS CDM groups to which data is not mapped is 1, where eight configured DMRS antenna ports belong to one CDM group, and a time-frequency resource corresponding to one remaining CDM group may be used to map data; DMRS port indexes are 0, 1, 4, 5, 8, 9, 12, and 13;

and the quantity of front-loaded symbols is 2 (namely, the DMRS ports 0, 1, 4, 5, 8, 9 12, and 13 are mapped to two symbols). It can be learned that the rank 8 is supported, and a quantity of front-loaded symbols occupied by the eight configured DMRS antenna ports is 2, but only one CDM group is used, to reduce a resource requirement. Port indexes in the DMRS port indexes 0, 1, 4, 5, 8, 9, 12, and 13 may alternatively have other values of DMRS ports, for example, 2, 3, 6, 7, 10, 11, 14, and 15.

When the value of the antenna port is "2", it indicates that the quantity of DMRS CDM groups to which data is not mapped is 2, where eight configured DMRS antenna ports belong to two CDM groups, and a time-frequency resource corresponding to no additional CDM group is used to map data; DMRS port indexes are 0, 1, 2, 3, 4, 5, 6, and 7; and the quantity of front-loaded symbols is 1 (namely, the DMRS ports 0, 1, 2, 3, 4, 5, 6, and 7 are mapped to one symbol). It can be learned that the rank 7 is supported, but mapping needs to be performed only on one symbol, to reduce symbol overheads.

The value of the antenna port is an example and may be any value. This is not limited in this application.

The table may include all rows corresponding to the values "0", "1", and "2", or may include a row corresponding to one or more of the values "0", "1", and "2".

C: Single-symbol type 2 DMRS

The network device includes dmrs-Type=2 and maxLength=1 in the first signaling, to indicate that a used DMRS type is a type 2 DMRS and a maximum quantity of DMRS symbols is 1. Refer to the DMRS port expansion method. A total quantity of orthogonal DMRS ports that may be supported after expansion is 12. In an implementation, the orthogonal DMRS ports respectively correspond to DMRS port indexes 0 to 11. It should be noted that the port indexes 0 to 11 herein may alternatively be represented as DMRS port indexes 1000 to 1011. For the single-symbol type 2 DMRS, three CDM groups are included: a CDM group 0, a CDM group 1, and a CDM group 2, and each CDM group includes four DMRS ports, as shown in FIG. 7a. The CDM group 0 includes DMRS ports 0, 1, 6, and 7, the CDM group 1 includes DMRS ports 2, 3, 8, and 9, and the CDM group 2 includes DMRS ports 4, 5, 10, and 11. It can be learned that, for an unexpanded DRMS, one CDM group supports a total of two DMRS ports. Therefore, the rank 5 to the rank 8 cannot be supported. At least three CDM groups are needed to support the rank 5 and the rank 6. For an expanded DMRS, one CDM group supports a total of four DMRS ports. Therefore, a single symbol with three CDM groups may support transmission of a maximum of the rank 8. In an implementation, after the DMRS is expanded, supported DMRS port indexes may alternatively have another value range. For example, the 12 supported DMRS ports correspond to port indexes 12 to 23, that is, DMRS port indexes 0 to **11** shown in Table 27 to Table 30 may alternatively be represented as the indexes 12 to 23, where each value in the indexes 0 to 11 one-to-one corresponds to each value in the indexes 12 to 23. Alternatively, the 12 supported DMRS ports respectively correspond to port indexes 0 to 5 and 12 to 17, that is, DMRS port indexes 6 to 11 shown in Table 26 to Table 29 may alternatively be represented as the indexes 12 to 17, where each value in the indexes 6 to 11 one-to-one corresponds to each value in the indexes 12 to 17.

For the single-symbol type 2 DMRS, different ranks correspond to different DMRS port index tables, as shown in Table 27 to Table 30.

Table 27 DMRS port index table corresponding to dmrs-Type=2, maxLength=1, and rank=5

| Value | Quantity of DMRS CDM groups to which data is not mapped | DMRS port | Quantity of front-loaded symbols |
|---|---|---|---|
| 0 | 3 | 0 to 4 | 1 |
| 1 | 2 | 0, 1, 2, 3, and 6 | 1 |
| 2 to 15 | Reserved | Reserved | Reserved |

The DMRS port index table may be used for uplink/downlink transmission.

Herein, N=5, that is, the rank is 5, and transmission of a maximum of five streams may be supported.

In the table, when a value of an antenna port is "0", it indicates that the quantity of DMRS CDM groups to which data is not mapped is 3, where five configured DMRS antenna ports belong to three CDM groups, and a time-frequency resource corresponding to no additional CDM group is used to map data; DMRS port indexes are 0 to 4; and the quantity of front-loaded symbols is 1 (namely, the DMRS ports 0 to 4 are mapped to one symbol). It can be learned that the rank 5 is supported, but mapping needs to be performed only on one symbol, to reduce symbol overheads. Port indexes in the DMRS port indexes 0 to 4 may alternatively have other values of DMRS ports, for example, 0, 1, 2, 3, and 5.

When the value of the antenna port is "1", it indicates that the quantity of DMRS CDM groups to which data is not mapped is 2, where five configured DMRS antenna ports belong to two CDM groups, and a time-frequency resource corresponding to one remaining CDM group may be used to map data; DMRS port indexes are 0, 1, 2, 3, and 6; and the quantity of front-loaded symbols is 1 (namely, the DMRS ports 0, 1, 2, 3, and 6 are mapped to one symbol). It can be learned that the rank 5 is supported, a quantity of front-loaded symbols occupied by the five configured DMRS antenna ports is 1, and only two CDM groups are used, to reduce a resource requirement. In addition, mapping needs to be performed only on one symbol, to reduce symbol overheads. Port indexes in the DMRS port indexes 0, 1, 2, 3, and 6 may alternatively have other values of DMRS ports, for example, 0, 1, 2, 3, and 7; 0, 1, 2, 3, and 8; or 0, 1, 2, 3, and 9.

The value of the antenna port is an example and may be any value. This is not limited in this application.

The table may include both rows corresponding to the values "0" and "1", or may include a row corresponding to one or more of the values "0" and "1".

The DMRS port index table may be used for uplink/downlink transmission.

Herein, N=6, that is, the rank is 6, and transmission of a maximum of six streams may be supported.

In the table, when a value of an antenna port is "0", it indicates that the quantity of DMRS CDM groups to which data is not mapped is 3, where six configured DMRS antenna ports belong to three CDM groups, and a time-frequency resource corresponding to no additional CDM group is used to map data; DMRS port indexes are 0 to 5; and the quantity of front-loaded symbols is 1 (namely, the DMRS ports 0 to 5 are mapped to one symbol). It can be learned that the rank 6 is supported, but mapping needs to be performed only on one symbol, to reduce symbol overheads.

Table 28 DMRS port index table corresponding to dmrs-Type=2, maxLength=1, and rank=6

| Value | Quantity of DMRS CDM groups to which data is not mapped | DMRS port | Quantity of front-loaded symbols |
|---|---|---|---|
| 0 | 3 | 0 to 5 | 1 |
| 1 | 2 | 0, 1, 2, 3, 6, and 8 | 1 |
| 2 to 15 | Reserved | Reserved | Reserved |

When the value of the antenna port is "1", it indicates that the quantity of DMRS CDM groups to which data is not mapped is 2, where six configured DMRS antenna ports belong to two CDM groups, and a time-frequency resource corresponding to one remaining CDM group may be used to map data; DMRS port indexes are 0, 1, 2, 3, 6, and 8; and the quantity of front-loaded symbols is 1 (namely, the DMRS ports 0, 1, 2, 3, 6, and 8 are mapped to one symbol). It can be learned that the rank 6 is supported, a quantity of front-loaded symbols occupied by the six configured DMRS antenna ports is 1, and only two CDM groups are used, to reduce a resource requirement. In addition, mapping needs to be performed only on one symbol, to reduce symbol overheads. Port indexes in the DMRS port indexes 0, 1, 2, 3, 6, and 8 may alternatively have other values of DMRS ports, for example, 0, 1, 2, 3, 7, and 9; 0, 1, 2, 3, 6, and 7; or 0, 1, 2, 3, 8, and 9.

The value of the antenna port is an example and may be any value. This is not limited in this application.

The table may include both rows corresponding to the values "0" and "1", or may include a row corresponding to one or more of the values "0" and "1".

Table 29 DMRS port index table corresponding to dmrs-Type=2, maxLength=1, and rank=7

| Value | Quantity of DMRS CDM groups to which data is not mapped | DMRS port | Quantity of front-loaded symbols |
|---|---|---|---|
| 0 | 3 | 0, 1, 2, 3, 4, 5, and 6 | 1 |
| 1 | 2 | 0, 1, 2, 3, 6, 7, and 8 | 1 |
| 2 to 15 | Reserved | Reserved | Reserved |

The DMRS port index table may be used for uplink/downlink transmission.

Herein, N=7, that is, the rank is 7, and transmission of a maximum of seven streams may be supported.

In the table, when a value of an antenna port is "0", it indicates that the quantity of DMRS CDM groups to which data is not mapped is 3, where seven configured DMRS antenna ports belong to three CDM groups, and a time-frequency resource corresponding to no additional CDM group is used to map data; DMRS port indexes are 0, 1, 2, 3, 4, 5, and 6; and the quantity of front-loaded symbols is 1 (namely, the DMRS ports 0, 1, 2, 3, 4, 5, and 6 are mapped to one symbol). It can be learned that the rank 7 is supported, but mapping needs to be performed only on one symbol, to reduce symbol overheads. Port indexes in the DMRS port indexes 0, 1, 2, 3, 4, 5, and 6 may alternatively have other values of DMRS ports, for example, 0, 1, 2, 3, 4, 5, and 7; 0, 1, 2, 3, 4, 5, and 8; 0, 1, 2, 3, 4, 5, and 9; 0, 1, 2, 3, 4, 5, and 10; or 0, 1, 2, 3, 4, 5, and 11.

When the value of the antenna port is "1", it indicates that the quantity of DMRS CDM groups to which data is not mapped is 2, where seven configured DMRS antenna ports belong to two CDM groups, and a time-frequency resource corresponding to one remaining CDM group may be used to map data; DMRS port indexes are 0, 1, 2, 3, 6, 7, and 8; and the quantity of front-loaded symbols is 1 (namely, the DMRS ports 0, 1, 2, 3, 6, 7, and 8 are mapped to one symbol). It can be learned that the rank 7 is supported, a quantity of front-loaded symbols occupied by the seven configured DMRS antenna ports is 1, and only two CDM groups are used, to reduce a resource requirement. In addition, mapping needs to be performed only on one symbol, to reduce symbol overheads. Port indexes in the DMRS port indexes 0, 1, 2, 3, 6, 7, and 8 may alternatively have other values of DMRS ports, for example, 0, 1, 2, 3, 6, 7, and 9; 0, 1, 2, 3, 6, 8, and 9; or 0, 1, 2, 3, 7, 8, and 9.

The value of the antenna port is an example and may be any value. This is not limited in this application.

The table may include both rows corresponding to the values "0" and "1", or may include a row corresponding to one or more of the values "0" and "1".

Table 30 DMRS port index table corresponding to dmrs-Type=2, maxLength=1, and rank=8

| Value | Quantity of DMRS CDM groups to which data is not mapped | DMRS port | Quantity of front-loaded symbols |
|---|---|---|---|
| 0 | 3 | 0, 1, 2, 3, 4, 5, 6, and 8 | 1 |
| 1 | 2 | 0, 1, 2, 3, 6, 7, 8, and 9 | 1 |
| 2 to 15 | Reserved | Reserved | Reserved |

The DMRS port index table may be used for uplink/downlink transmission.

Herein, N=8, that is, the rank is 8, and transmission of a maximum of eight streams may be supported.

In the table, when a value of an antenna port is "0", it indicates that the quantity of DMRS CDM groups to which data is not mapped is 3, where eight configured DMRS antenna ports belong to three CDM groups, and a time-frequency resource corresponding to no additional CDM group is used to map data; DMRS port indexes are 0, 1, 2, 3, 4, 5, 6, and 8; and the quantity of front-loaded symbols is 1 (namely, the DMRS ports 0, 1, 2, 3, 4, 5, 6, and 8 are mapped to one symbol). It can be learned that the rank 8 is supported, but mapping needs to be performed only on one symbol, to reduce symbol overheads. Port indexes in the DMRS port indexes 0, 1, 2, 3, 4, 5, 6, and 8 may alternatively have other values of DMRS ports, for example, 0, 1, 2, 3, 4, 5, 7, and 9; 0, 1, 2, 3, 4, 5, 8, and 10; 0, 1, 2, 3, 4, 5, 9, and 11; 0, 1, 2, 3, 4, 5, 6, and 10; or 0, 1, 2, 3, 4, 5, 7, and 11.

When the value of the antenna port is "1", it indicates that the quantity of DMRS CDM groups to which data is not mapped is 2, where eight configured DMRS antenna ports belong to two CDM groups, and a time-frequency resource corresponding to one remaining CDM group may be used to map data; DMRS port indexes are 0, 1, 2, 3, 6, 7, 8, and 9; and the quantity of front-loaded symbols is 1 (namely, the DMRS ports 0, 1, 2, 3, 6, 7, 8, and 9 are mapped to one symbol). It can be learned that the rank 8 is supported, a quantity of front-loaded symbols occupied by the eight configured DMRS antenna ports is 1, but only two CDM groups are used, to reduce a resource requirement. In addition, mapping needs to be performed only on one symbol, to reduce symbol overheads.

The value of the antenna port is an example and may be any value. This is not limited in this application.

The table may include both rows corresponding to the values "0" and "1", or may include a row corresponding to one or more of the values "0" and "1".

D: Double-symbol type 2 DMRS

The network device includes dmrs-Type=2 and maxLength=2 in the first signaling, to indicate that a used DMRS type is a type 2 DMRS and a maximum quantity of DMRS symbols is 2. Refer to the DMRS port expansion method. A total quantity of orthogonal DMRS ports that may be supported after expansion is 24. In an implementation, the orthogonal DMRS ports respectively correspond to DMRS port indexes 0 to 23. It should be noted that the port indexes 0 to 23 herein may alternatively be represented as DMRS port indexes 1000 to 1023. For the double-symbol type 2 DMRS, three CDM groups are included: a CDM group 0, a CDM group 1, and a CDM group 2, and each CDM group includes eight DMRS ports, as shown in FIG. 7b. The CDM group 0 includes DMRS ports 0, 1, 6, 7, 12, 13, 18, and 19, the CDM group 1 includes DMRS ports 2, 3, 8, 9, 14, 15, 20, and 21, and the CDM group 2 includes DMRS ports 4, 5, 10, 11, 16, 17, 22, and 23. It can be learned that, for an unexpanded DRMS, one CDM group supports a total of four DMRS ports. Therefore, at least two CDM groups are needed to support the rank 5 to the rank 8. For an expanded DMRS, one CDM group supports a total of eight DMRS ports. Therefore, one CDM group may support transmission of a maximum of the rank 8. In an implementation, after the DMRS is expanded, supported DMRS port indexes may alternatively have another value range. For example, the 24 supported DMRS ports correspond to port indexes 12 to 35, that is, DMRS port indexes 0 to 23 shown in Table 31 to Table 34 may alternatively be represented as the indexes 12 to 35, where each value in the indexes 0 to 23 one-to-one corresponds to each value in the indexes 12 to 35. Alternatively, the 24 supported DMRS ports respectively correspond to port indexes 0 to 11 and 12 to 23.

For the double-symbol type 2 DMRS, different ranks correspond to different DMRS port index tables, as shown in Table 31 to Table 34.

Table 31 DMRS port index table corresponding to dmrs-Type=2, maxLength=2, and rank=5

| Value | Quantity of DMRS CDM groups to which data is not mapped | DMRS port | Quantity of front-loaded symbols |
|---|---|---|---|
| 0 | 3 | 0 to 4 | 1 |
| 1 | 2 | 0, 1, 2, 3, and 6 | 2 |
| 2 | 2 | 0, 1, 2, 3, and 6 | 1 |
| 3 | 1 | 0, 1, 6, 7, and 12 | 2 |
| 4 to 15 | Reserved | Reserved | Reserved |

The DMRS port index table may be used for uplink/downlink transmission.

Herein, N=5, that is, the rank is 5, and transmission of a maximum of five streams may be supported.

In the table, when a value of an antenna port is "0", it indicates that the quantity of DMRS CDM groups to which data is not mapped is 3, where five configured DMRS antenna ports belong to three CDM groups, and a time-frequency resource corresponding to no additional CDM group is used to map data; DMRS port indexes are 0 to 4; and the quantity of front-loaded symbols is 1 (namely, the DMRS ports 0 to 4 are mapped to one symbol). It can be learned that the rank 5 is supported, but mapping needs to be performed only on one symbol, to reduce symbol overheads.

When the value of the antenna port is "1", it indicates that the quantity of DMRS CDM groups to which data is not mapped is 2, where five configured DMRS antenna ports belong to two CDM groups, and a time-frequency resource corresponding to one remaining CDM group may be used to map data; DMRS port indexes are 0, 1, 2, 3, and 6; and the quantity of front-loaded symbols is 2 (namely, the DMRS ports 0, 1, 2, 3, and 6 are mapped to two symbols). It can be learned that the rank 5 is supported, and a quantity of front-loaded symbols occupied by the five configured DMRS antenna ports is 2, but only two CDM groups are used, to reduce a resource requirement.

When the value of the antenna port is "2", it indicates that the quantity of DMRS CDM groups to which data is not mapped is 2, where five configured DMRS antenna ports belong to two CDM groups, and a time-frequency resource corresponding to one remaining CDM group may be used to map data; DMRS port indexes are 0, 1, 2, 3, and 6; and the quantity of front-loaded symbols is 1 (namely, the DMRS ports 0, 1, 2, 3, and 6 are mapped to one symbol). It can be learned that the rank 5 is supported, a quantity of front-loaded symbols occupied by the five configured DMRS antenna ports is 1, and only two CDM groups are used, to reduce a resource requirement. In addition, mapping needs to be performed only on one symbol, to reduce symbol overheads. Port indexes in the DMRS port indexes 0, 1, 2, 3, and 6 may alternatively have other values of DMRS ports, for example, 0, 1, 2, 3, and 7; 0, 1, 2, 3, and 8; or 0, 1, 2, 3, and 9.

When the value of the antenna port is "3", it indicates that the quantity of DMRS CDM groups to which data is not mapped is 1, where five configured DMRS antenna ports belong to one CDM group, and time-frequency resources corresponding to two remaining CDM groups may be used to map data; DMRS port indexes are 0, 1, 6, 7, and 12; and the quantity of front-loaded symbols is 2 (namely, the DMRS ports 0, 1, 6, 7, and 12 are mapped to two symbols). It can be learned that the rank 5 is supported, and a quantity of front-loaded symbols occupied by the five configured DMRS antenna ports is 2, but only one CDM group is used, to reduce a resource requirement. Port indexes in the DMRS port indexes 0, 1, 6, 7, and 12 may alternatively have other values of DMRS ports, for example, 0, 1, 6, 7, and 13; 0, 1, 6, 7, and 18; or 0, 1, 6, 7, and 19.

The value of the antenna port is an example and may be any value. This is not limited in this application.

The table may include all rows corresponding to the values "0", "1", "2", and "3", or may include a row corresponding to one or more of the values "0", "1", "2", and "3".

Table 32 DMRS port index table corresponding to dmrs-Type=2, maxLength=2, and rank=6

| Value | Quantity of DMRS CDM groups to which data is not mapped | DMRS port | Quantity of front-loaded symbols |
|---|---|---|---|
| 0 | 3 | 0 to 5 | 1 |
| 1 | 2 | 0, 1, 2, 3, 6, and 8 | 2 |
| 2 | 2 | 0, 1, 2, 3, 6, and 8 | 1 |
| 3 | 1 | 0, 1, 6, 7, 12, and 13 | 2 |

(continued)

| Value | Quantity of DMRS CDM groups to which data is not mapped | DMRS port | Quantity of front-loaded symbols |
|---|---|---|---|
| 4 to 15 | Reserved | Reserved | Reserved |

The DMRS port index table may be used for uplink/downlink transmission.

Herein, N=6, that is, the rank is 6, and transmission of a maximum of six streams may be supported.

In the table, when a value of an antenna port is "0", it indicates that the quantity of DMRS CDM groups to which data is not mapped is 3, where six configured DMRS antenna ports belong to three CDM groups, and a time-frequency resource corresponding to no additional CDM group is used to map data; DMRS port indexes are 0 to 5; and the quantity of front-loaded symbols is 1 (namely, the DMRS ports 0 to 5 are mapped to one symbol). It can be learned that the rank 6 is supported, but mapping needs to be performed only on one symbol, to reduce symbol overheads.

When the value of the antenna port is "1", it indicates that the quantity of DMRS CDM groups to which data is not mapped is 2, where six configured DMRS antenna ports belong to two CDM groups, and a time-frequency resource corresponding to one remaining CDM group may be used to map data; DMRS port indexes are 0, 1, 2, 3, 6, and 8; and the quantity of front-loaded symbols is 2 (namely, the DMRS ports 0, 1, 2, 3, 6, and 8 are mapped to two symbols). It can be learned that the rank 6 is supported, and a quantity of front-loaded symbols occupied by the six configured DMRS antenna ports is 2, but only two CDM groups are used, to reduce a resource requirement.

When the value of the antenna port is "2", it indicates that the quantity of DMRS CDM groups to which data is not mapped is 2, where six configured DMRS antenna ports belong to two CDM groups, and a time-frequency resource corresponding to one remaining CDM group may be used to map data; DMRS port indexes are 0, 1, 2, 3, 6, and 8; and the quantity of front-loaded symbols is 1 (namely, the DMRS ports 0, 1, 2, 3, 6, and 8 are mapped to one symbol). It can be learned that the rank 6 is supported, a quantity of front-loaded symbols occupied by the six configured DMRS antenna ports is 1, and only two CDM groups are used, to reduce a resource requirement. In addition, mapping needs to be performed only on one symbol, to reduce symbol overheads. Port indexes in the DMRS port indexes 0, 1, 2, 3, 6, and 8 may alternatively have other values of DMRS ports, for example, 0, 1, 2, 3, 7, and 9; 0, 1, 2, 3, 6, and 7; or 0, 1, 2, 3, 8, and 9.

When the value of the antenna port is "3", it indicates that the quantity of DMRS CDM groups to which data is not mapped is 1, where six configured DMRS antenna ports belong to one CDM group, and time-frequency resources corresponding to two remaining CDM groups may be used to map data; DMRS port indexes are 0, 1, 6, 7, 12, and 13; and the quantity of front-loaded symbols is 2 (namely, the DMRS ports 0, 1, 6, 7, 12, and 13 are mapped to two symbols). It can be learned that the rank 6 is supported, and a quantity of front-loaded symbols occupied by the six configured DMRS antenna ports is 2, but only one CDM group is used, to reduce a resource requirement. Port indexes in the DMRS port indexes 0, 1, 6, 7, 12, and 13 may alternatively have other values of DMRS ports, for example, 0, 1, 6, 7, 18, and 19; 0, 1, 6, 7, 12, and 18; 0, 1, 6, 7, 13, and 19; 0, 1, 6, 7, 12, and 19; or 0, 1, 6, 7, 13, and 18.

The value of the antenna port is an example and may be any value. This is not limited in this application.

The table may include all rows corresponding to the values "0", "1", "2", and "3", or may include a row corresponding to one or more of the values "0", "1", "2", and "3".

Table 33 DMRS port index table corresponding to dmrs-Type=2, maxLength=2, and rank=7

| Value | Quantity of DMRS CDM groups to which data is not mapped | DMRS port | Quantity of front-loaded symbols |
|---|---|---|---|
| 0 | 2 | 0, 1, 2, 3, 6, 7, and 8 | 2 |
| 1 | 2 | 0, 1, 2, 3, 6, 7, and 8 | 1 |
| 2 | 1 | 0, 1, 6, 7, 12, 13, and 18 | 2 |
| 3 to 15 | Reserved | Reserved | Reserved |

The DMRS port index table may be used for uplink/downlink transmission.

Herein, N=7, that is, the rank is 7, and transmission of a maximum of seven streams may be supported.

In the table, when a value of an antenna port is "0", it indicates that the quantity of DMRS CDM groups to which data is not mapped is 2, where seven configured DMRS antenna ports belong to two CDM groups, and a remaining time-frequency resource may be used to map data; DMRS port indexes are 0, 1, 2, 3, 6, 7, and 8; and the quantity of front-loaded symbols is 2 (namely, the DMRS ports 0, 1, 2, 3, 6, 7, and 8 are mapped to two symbols).

When the value of the antenna port is "1", it indicates that the quantity of DMRS CDM groups to which data is not mapped is 2, where seven configured DMRS antenna ports belong to two CDM groups, and a time-frequency resource corresponding to one remaining CDM group may be used to map data; DMRS port indexes are 0, 1, 2, 3, 6, 7, and 8; and the quantity of front-loaded symbols is 1 (namely, the DMRS ports 0, 1, 2, 3, 6, 7, and 8 are mapped to one symbol). It can be learned that the rank 7 is supported, but mapping needs to be performed only on one symbol, to reduce symbol overheads. Port indexes in the DMRS port indexes 0, 1, 2, 3, 6, 7, and 8 may alternatively have other values of DMRS ports, for example, 0, 1, 2, 3, 6, 7, and 9; 0, 1, 2, 3, 6, 8, and 9; or 0, 1, 2, 3, 7, 8, and 9.

When the value of the antenna port is "2", it indicates that the quantity of DMRS CDM groups to which data is not mapped is 1, where seven configured DMRS antenna ports belong to one CDM group, and time-frequency resources corresponding to two remaining CDM groups may be used to map data; DMRS port indexes are 0, 1, 6, 7, 12, 13, and 18; and the quantity of front-loaded symbols is 2 (namely, the DMRS ports 0, 1, 6, 7, 12, 13, and 18 are mapped to two symbols). It can be learned that the rank 7 is supported, and a quantity of front-loaded symbols occupied by the seven configured DMRS antenna ports is 2, but only one CDM group is used, to reduce a resource requirement. Port indexes in the DMRS port indexes 0, 1, 6, 7, 12, 13, and 18 may alternatively have other values of DMRS ports, for example, 0, 1, 6, 7, 12, 13, and 19; 0, 1, 6, 7, 12, 18, and 19; or 0, 1, 6, 7, 13, 18, and 19.

The value of the antenna port is an example and may be any value. This is not limited in this application.

The table may include all rows corresponding to the values "0", "1", and "2", or may include a row corresponding to one or more of the values "0", "1", and "2".

Table 34 DMRS port index table corresponding to dmrs-Type=2, maxLength=2, and rank=8

| Value | Quantity of DMRS CDM groups to which data is not mapped | DMRS port | Quantity of front-loaded symbols |
|---|---|---|---|
| 0 | 2 | 0, 1, 2, 3, 6, 7, 8, and 9 | 2 |
| 1 | 2 | 0, 1, 2, 3, 6, 7, 8, and 9 | 1 |
| 2 | 1 | 0, 1, 6, 7, 12, 13, 18, and 19 | 2 |
| 3 to 15 | Reserved | Reserved | Reserved |

The DMRS port index table may be used for uplink/downlink transmission.

Herein, N=8, that is, the rank is 8, and transmission of a maximum of eight streams may be supported.

In the table, when a value of an antenna port is "0", it indicates that the quantity of DMRS CDM groups to which data is not mapped is 2, where eight configured DMRS antenna ports belong to two CDM groups, and a remaining time-frequency resource may be used to map data; DMRS port indexes are 0, 1, 2, 3, 6, 7, 8, and 9; and the quantity of front-loaded symbols is 2 (namely, the DMRS ports 0, 1, 2, 3, 6, 7, 8, and 9 are mapped to two symbols). It can be learned that the rank 8 is supported, and a quantity of front-loaded symbols occupied by the eight configured DMRS antenna ports is 2, but only two CDM groups are used, to reduce a resource requirement.

When the value of the antenna port is "1", it indicates that the quantity of DMRS CDM groups to which data is not mapped is 2, where eight configured DMRS antenna ports belong to two CDM groups, and a time-frequency resource corresponding to one remaining CDM group may be used to map data; DMRS port indexes are 0, 1, 2, 3, 6, 7, and 8; and the quantity of front-loaded symbols is 1 (namely, the DMRS ports 0, 1, 2, 3, 6, 7, and 8 are mapped to one symbol). It can be learned that the rank 8 is supported, but mapping needs to be performed only on one symbol, to reduce symbol overheads. In addition, only two CDM groups are used, to reduce a resource requirement.

When the value of the antenna port is "2", it indicates that the quantity of DMRS CDM groups to which data is not mapped is 1, where eight configured DMRS antenna ports belong to one CDM group, and time-frequency resources corresponding to two remaining CDM groups may be used to map data; DMRS port indexes are 0, 1, 6, 7, 12, 13, 18, and 19; and the quantity of front-loaded symbols is 2 (namely, the DMRS ports 0, 1, 6, 7, 12, 13, 18, and 19 are mapped to two symbols). It can be learned that the rank 8 is supported, and a quantity of front-loaded symbols occupied by the eight configured DMRS antenna ports is 2, but only one CDM group is used, to reduce a resource requirement.

The table may include all rows corresponding to the values "0", "1", and "2", or may include a row corresponding to one or more of the values "0", "1", and "2".

The DMRS port index table corresponding to the single symbol and the type 1 may be further shown in Table 35.

Table 35 Antenna port(s) (1000+DMRS ports), DMRS port index table corresponding to dmrs-Type=1 and maxLength=1

| Two codewords:<br>A codeword 0 is enabled, and<br>a codeword 1 is enabled | | |
|---|---|---|
| Value | Quantity of DMRS CDM groups to which data is not mapped | DMRS port |
| 0 | 2 | 0 to 4 |
| 1 | 2 | 0, 1, 2, 3, 4, and 6 |
| 2 | 2 | 0, 1, 2, 3, 4, 5, and 6 |
| 3 | 2 | 0, 1, 2, 3, 4, 5, 6, and 7 |
| 4 or more | Reserved | Reserved |

This table may indicate ports for downlink DMRS transmission.

In the table, when a value of an antenna port is "0", it indicates that the quantity of DMRS CDM groups to which data is not mapped is 2, where five configured DMRS antenna ports belong to two CDM groups, and a time-frequency resource corresponding to no additional CDM group is used to map data; and DMRS port indexes are 0 to 4.

When the value of the antenna port is "1", it indicates that the quantity of DMRS CDM groups to which data is not mapped is 2, where six configured DMRS antenna ports belong to two CDM groups, and a time-frequency resource corresponding to no additional CDM group is used to map data; and DMRS port indexes are 0, 1, 2, 3, 4, and 6.

When the value of the antenna port is "2", it indicates that the quantity of DMRS CDM groups to which data is not mapped is 2, where seven configured DMRS antenna ports belong to two CDM groups, and a time-frequency resource corresponding to no additional CDM group is used to map data; and DMRS port indexes are 0, 1, 2, 3, 4, 5, and 6.

When the value of the antenna port is "3", it indicates that the quantity of DMRS CDM groups to which data is not mapped is 2, where eight configured DMRS antenna ports belong to two CDM groups, and a time-frequency resource corresponding to no additional CDM group is used to map data; and DMRS port indexes are 0, 1, 2, 3, 4, 5, 6, and 7.

The value of the antenna port is an example and may be any value. This is not limited in this application.

The table may include all rows corresponding to the values "0", "1", "2", and "3", or may include a row corresponding to one or more of the values "0", "1", "2", and "3".

The DMRS port index table corresponding to the double symbol and the type 2 may be further shown in Table 36.

This table may indicate ports for downlink DMRS transmission.

In the table, when a value of an antenna port is "0", it indicates that the quantity of DMRS CDM groups to which data is not mapped is 2, where five configured DMRS antenna ports belong to two CDM groups, and a time-frequency resource corresponding to no additional CDM group is used to map data; DMRS port indexes are 0 to 4; and the quantity of front-loaded symbols is 2 (namely, the DMRS ports 0 to 4 are mapped to two symbols).

When the value of the antenna port is "1", it indicates that the quantity of DMRS CDM groups to which data is not mapped is 2, where six configured DMRS antenna ports belong to two CDM groups, and a time-frequency resource corresponding to no additional CDM group is used to map data; DMRS port indexes are 0, 1, 2, 3, 4, and 6; and the quantity of front-loaded symbols is 2 (namely, the DMRS ports 0, 1, 2, 3, 4, and 6 are mapped to two symbols).

When the value of the antenna port is "2", it indicates that the quantity of DMRS CDM groups to which data is not mapped is 2, where seven configured DMRS antenna ports belong to two CDM groups, and a time-frequency resource corresponding to no additional CDM group is used to map data; DMRS port indexes are 0, 1, 2, 3, 4, 5, and 6; and the quantity of front-loaded symbols is 2 (namely, the DMRS ports 0, 1, 2, 3, 4, 5, and 6 are mapped to two symbols).

When the value of the antenna port is "3", it indicates that the quantity of DMRS CDM groups to which data is not mapped is 2, where eight configured DMRS antenna ports belong to two CDM groups, and a time-frequency resource corresponding to no additional CDM group is used to map data; DMRS port indexes are 0, 1, 2, 3, 4, 5, 6, and 7; and the quantity of front-loaded symbols is 2 (namely, the DMRS ports 0, 1, 2, 3, 4, 5, 6, and 7 are mapped to two symbols).

When the value of the antenna port is "4", it indicates that the quantity of DMRS CDM groups to which data is not mapped is 1, where five configured DMRS antenna ports belong to one CDM group, and a time-frequency resource corresponding to one remaining CDM group may be used to map data; DMRS port indexes are 0, 1, 4, 5, and 8; and the quantity of front-loaded symbols is 2 (namely, the DMRS ports 0, 1, 4, 5, and 8 are mapped to two symbols). It can be learned that the rank 5 is supported, but only one CDM group is used, to reduce a resource requirement.

When the value of the antenna port is "5", it indicates that the quantity of DMRS CDM groups to which data is not mapped is 1, where six configured DMRS antenna ports belong to one CDM group, and a time-frequency resource corresponding to one remaining CDM group may be used to map data; DMRS port indexes are 0, 1, 4, 5, 8, and 9; and the quantity of front-loaded symbols is 2 (namely, the DMRS ports 0, 1, 4, 5, 8, and 9 are mapped to two symbols). It can be learned that the rank 6 is supported, but only one CDM group is used, to reduce a resource requirement.

When the value of the antenna port is "6", it indicates that the quantity of DMRS CDM groups to which data is not mapped is 1, where seven configured DMRS antenna ports belong to one CDM group, and a time-frequency resource corresponding to one remaining CDM group may be used to map data; DMRS port indexes are 0, 1, 4, 5, 8, 9, and 12; and the quantity of front-loaded symbols is 2 (namely, the DMRS ports 0, 1, 4, 5, 8, 9, and 12 are mapped to two symbols). It can be learned that the rank 7 is supported, but only one CDM group is used, to reduce a resource requirement.

When the value of the antenna port is "7", it indicates that the quantity of DMRS CDM groups to which data is not mapped is 1, where eight configured DMRS antenna ports belong to one CDM group, and a time-frequency resource corresponding to one remaining CDM group may be used to map data; DMRS port indexes are 0, 1, 4, 5, 8, 9, 12, and 13; and the quantity of front-loaded symbols is 2 (namely, the DMRS ports 0, 1, 4, 5, 8, 9, 12, and 13 are mapped to two symbols). It can be learned that the rank 8 is supported, but only one CDM group is used, to reduce a resource requirement.

When the value of the antenna port is "8", it indicates that the quantity of DMRS CDM groups to which data is not mapped is 2, where five configured DMRS antenna ports belong to two CDM groups, and a time-frequency resource corresponding to no additional CDM group is used to map data; DMRS port indexes are 0 to 4; and the quantity of front-loaded symbols is 1 (namely, the DMRS ports 0 to 4 are mapped to one symbol). It can be learned that the rank 5 is supported, but mapping is performed only on one symbol, to reduce symbol overheads.

When the value of the antenna port is "9", it indicates that the quantity of DMRS CDM groups to which data is not mapped is 2, where six configured DMRS antenna ports belong to two CDM groups, and a time-frequency resource corresponding to no additional CDM group is used to map data; DMRS port indexes are 0, 1, 2, 3, 4, and 6; and the quantity of front-loaded symbols is 1 (namely, the DMRS ports 0, 1, 2, 3, 4, and 6 are mapped to one symbol). It can be learned that the rank 6 is supported, but mapping is performed only on one symbol, to reduce symbol overheads.

When the value of the antenna port is "10", it indicates that the quantity of DMRS CDM groups to which data is not mapped is 2, where seven configured DMRS antenna ports belong to two CDM groups, and a time-frequency resource corresponding to no additional CDM group is used to map data, DMRS port indexes are 0, 1, 2, 3, 4, 5, and 6; and the quantity of front-loaded symbols is 1 (namely, the DMRS ports 0, 1, 2, 3, 4, 5, and 6 are mapped to one symbol). It can be learned that the rank 6 is supported, but mapping is performed only on one symbol, to reduce symbol overheads.

Table 36 Antenna port (s) (1000+DMRS port), DMRS port index table corresponding to dmrs-Type=1 and maxLength=2

| Two codewords:<br>A codeword 0 is enabled, and<br>a codeword 1 is enabled | | | |
|---|---|---|---|
| Value | Quantity of DMRS CDM groups to which data is not mapped | DMRS port | Quantity of front-loaded symbols |
| 0 | 2 | 0 to 4 | 2 |
| 1 | 2 | 0, 1, 2, 3, 4, and 6 | 2 |
| 2 | 2 | 0, 1, 2, 3, 4, 5, and 6 | 2 |
| 3 | 2 | 0, 1, 2, 3, 4, 5, 6, and 7 | 2 |
| 4 | 1 | 0, 1, 4, 5, and 8 | 2 |
| 5 | 1 | 0, 1, 4, 5, 8, and 9 | 2 |
| 6 | 1 | 0, 1, 4, 5, 8, 9, and 12 | 2 |
| 7 | 1 | 0, 1, 4, 5, 8, 9, 12, and 13 | 2 |
| 8 | 2 | 0 to 4 | 1 |
| 9 | 2 | 0, 1, 2, 3, 4, and 6 | 1 |
| 10 | 2 | 0, 1, 2, 3, 4, 5, and 6 | 1 |
| 11 | 2 | 0, 1, 2, 3, 4, 5, 6, and 7 | 1 |
| 12 or more | Reserved | Reserved | Reserved |

When the value of the antenna port is "11", it indicates that the quantity of DMRS CDM groups to which data is not mapped is 2, where eight configured DMRS antenna ports belong to two CDM groups, and a time-frequency resource corresponding to no additional CDM group is used to map data; DMRS port indexes are 0, 1, 2, 3, 4, 5, 6, and 7; and the quantity of front-loaded symbols is 1 (namely, the DMRS ports 0, 1, 2, 3, 4, 5, 6, and 7 are mapped to one symbol). It can be learned that the rank 8 is supported, but mapping is performed only on one symbol, to reduce symbol overheads.

The value of the antenna port is an example and may be any value. This is not limited in this application.

The table may include all rows corresponding to the values "0" to "11", or may include a row corresponding to one or more of the values "0" to "11".

The DMRS port index table corresponding to the single symbol and the type 2 may be further shown in Table 37.

This table may indicate ports for downlink DMRS transmission.

In the table, when a value of an antenna port is "0", it indicates that the quantity of DMRS CDM groups to which data is not mapped is 3, where five configured DMRS antenna ports belong to three CDM groups, and a time-frequency resource corresponding to no additional CDM group is used to map data; and DMRS port indexes are 0 to 4.

When the value of the antenna port is "1", it indicates that the quantity of DMRS CDM groups to which data is not mapped is 3, where six configured DMRS antenna ports belong to three CDM groups, and a time-frequency resource corresponding to no additional CDM group is used to map data; and DMRS port indexes are 0 to 5.

When the value of the antenna port is "2", it indicates that the quantity of DMRS CDM groups to which data is not mapped is 2, where five configured DMRS antenna ports belong to two CDM groups, and a time-frequency resource corresponding to one remaining CDM group may be used to map data; and DMRS port indexes are 0, 1, 2, 3, and 6. It can be learned that the rank 5 is supported, but only two CDM groups are occupied, to reduce a resource requirement.

When the value of the antenna port is "3", it indicates that the quantity of DMRS CDM groups to which data is not mapped is 2, where six configured DMRS antenna ports belong to two CDM groups, and a time-frequency resource corresponding to one remaining CDM group may be used to map data; and DMRS port indexes are 0, 1, 2, 3, 6, and 8. It can be learned that the rank 6 is supported, but only two CDM groups are occupied, to reduce a resource requirement.

When the value of the antenna port is "4", it indicates that the quantity of DMRS CDM groups to which data is not mapped is 3, where seven configured DMRS antenna ports belong to three CDM groups, and a time-frequency resource corresponding to no additional CDM group is used to map data; and DMRS port indexes are 0, 1, 2, 3, 4, 5, and 6.

Table 37 Antenna port (s) (1000+DMRS port), DMRS port index table corresponding to dmrs-Type=2 and maxLength=1

| Two codewords:<br>A codeword 0 is enabled, and<br>a codeword 1 is enabled | | |
|---|---|---|
| Value | Quantity of DMRS CDM groups to which data is not mapped | DMRS port |
| 0 | 3 | 0 to 4 |
| 1 | 3 | 0 to 5 |
| 2 | 2 | 0, 1, 2, 3, and 6 |
| 3 | 2 | 0, 1, 2, 3, 6, and 8 |
| 4 | 3 | 0, 1, 2, 3, 4, 5, and 6 |
| 5 | 2 | 0, 1, 2, 3, 6, 7, and 8 |
| 6 | 3 | 0, 1, 2, 3, 4, 5, 6, and 8 |
| 7 | 2 | 0, 1, 2, 3, 6, 7, 8, and 9 |
| 8 or more | Reserved | Reserved |

When the value of the antenna port is "5", it indicates that the quantity of DMRS CDM groups to which data is not mapped is 2, where seven configured DMRS antenna ports belong to two CDM groups, and a time-frequency resource corresponding to one remaining CDM group may be used to map data; and DMRS port indexes are 0, 1, 2, 3, 6, 7, and 8. It can be learned that the rank 7 is supported, but only two CDM groups are occupied, to reduce a resource requirement.

When the value of the antenna port is "6", it indicates that the quantity of DMRS CDM groups to which data is not mapped is 3, where eight configured DMRS antenna ports belong to three CDM groups, and a time-frequency resource corresponding to no additional CDM group is used to map data; and DMRS port indexes are 0, 1, 2, 3, 4, 5, 6, and 8.

When the value of the antenna port is "7", it indicates that the quantity of DMRS CDM groups to which data is not mapped is 2, where eight configured DMRS antenna ports belong to two CDM groups, and a time-frequency resource corresponding to one remaining CDM group may be used to map data; and DMRS port indexes are 0, 1, 2, 3, 6, 7, 8, and 9. It can be learned that the rank 8 is supported, but only two CDM groups are occupied, to reduce a resource requirement.

The value of the antenna port is an example and may be any value. This is not limited in this application.

The table may include all rows corresponding to the values "0" to "8", or may include a row corresponding to one or more of the values "0" to "8".

The DMRS port index table corresponding to the double symbol and the type 2 may be further shown in Table 38.

This table may indicate ports for downlink DMRS transmission.

In the table, when a value of an antenna port is "0", it indicates that the quantity of DMRS CDM groups to which data is not mapped is 3, where five configured DMRS antenna ports belong to three CDM groups, and a time-frequency resource corresponding to no additional CDM group is used to map data; DMRS port indexes are 0 to 4; and the quantity of front-loaded symbols is 1 (namely, the DMRS ports 0 to 4 are mapped to one symbol). It can be learned that the rank 5 is supported, but mapping is performed only on one symbol, to reduce symbol overheads.

When the value of the antenna port is "1", it indicates that the quantity of DMRS CDM groups to which data is not mapped is 3, where six configured DMRS antenna ports belong to three CDM groups, and a time-frequency resource corresponding to no additional CDM group is used to map data; DMRS port indexes are 0 to 5; and the quantity of front-loaded symbols is 1 (namely, the DMRS ports 0 to 5 are mapped to one symbol). It can be learned that the rank 6 is supported, but mapping is performed only on one symbol, to reduce symbol overheads.

When the value of the antenna port is "2", it indicates that the quantity of DMRS CDM groups to which data is not mapped is 2, where five configured DMRS antenna ports belong to two CDM groups, and a time-frequency resource corresponding to one remaining CDM group may be used to map data; DMRS port indexes are 0, 1, 2, 3, and 6; and the quantity of front-loaded symbols is 2 (namely, the DMRS ports 0, 1, 2, 3, and 6 are mapped to two symbols). It can be learned that the rank 5 is supported, but only two CDM groups are occupied, to reduce a resource requirement.

When the value of the antenna port is "3", it indicates that the quantity of DMRS CDM groups to which data is not mapped is 2, where six configured DMRS antenna ports belong to two CDM groups, and a time-frequency resource corresponding to one remaining CDM group may be used to map data; DMRS port indexes are 0, 1, 2, 3, 6, and 8; and the quantity of front-loaded symbols is 2 (namely, the DMRS ports 0, 1, 2, 3, 6, and 8 are mapped to two symbols). It can be learned that the rank 6 is supported, but only two CDM groups are occupied, to reduce a resource requirement.

When the value of the antenna port is "4", it indicates that the quantity of DMRS CDM groups to which data is not mapped is 2, where seven configured DMRS antenna ports belong to two CDM groups, and a time-frequency resource corresponding to one remaining CDM group may be used to map data; DMRS port indexes are 0, 1, 2, 3, 6, 7, and 8; and the quantity of front-loaded symbols is 2 (namely, the DMRS ports 0, 1, 2, 3, 6, 7, and 8 are mapped to two symbols). It can be learned that the rank 7 is supported, but only two CDM groups are used, to reduce a resource requirement.

When the value of the antenna port is "5", it indicates that the quantity of DMRS CDM groups to which data is not mapped is 2, where eight configured DMRS antenna ports belong to two CDM groups, and a time-frequency resource corresponding to one remaining CDM group may be used to map data; DMRS port indexes are 0, 1, 2, 3, 6, 7, 8, and 9; and the quantity of front-loaded symbols is 2 (namely, the DMRS ports 0, 1, 2, 3, 6, 7, 8, and 9 are mapped to two symbols). It can be learned that the rank 8 is supported, but only two CDM groups are used, to reduce a resource requirement.

When the value of the antenna port is "6", it indicates that the quantity of DMRS CDM groups to which data is not mapped is 2, where five configured DMRS antenna ports belong to two CDM groups, and a time-frequency resource corresponding to one remaining CDM group may be used to map data; DMRS port indexes are 0, 1, 2, 3, and 6; and the quantity of front-loaded symbols is 1 (namely, the DMRS ports 0, 1, 2, 3, and 6 are mapped to one symbol). It can be learned that the rank 7 is supported, but only one CDM group is used, to reduce a resource requirement. In addition, the DMRS port is mapped to only one symbol, to reduce symbol overheads.

When the value of the antenna port is "7", it indicates that the quantity of DMRS CDM groups to which data is not mapped is 1, where five configured DMRS antenna ports belong to one CDM group, and time-frequency resources corresponding to two remaining CDM groups may be used to map data; DMRS port indexes are 0, 1, 6, 7, and 12; and the quantity of front-loaded symbols is 2 (namely, the DMRS ports 0, 1, 6, 7, and 12 are mapped to two symbols). It can be learned that the rank 8 is supported, but only one CDM group is used, to reduce a resource requirement.

When the value of the antenna port is "8", it indicates that the quantity of DMRS CDM groups to which data is not mapped is 2, where six configured DMRS antenna ports belong to two CDM groups, and a time-frequency resource corresponding to one remaining CDM group may be used to map data; DMRS port indexes are 0, 1, 2, 3, 6, and 8; and the quantity of front-loaded symbols is 1 (namely, the DMRS ports 0, 1, 2, 3, 6, and 8 are mapped to one symbol). It can be learned that the rank 5 is supported, but mapping is performed only on one symbol, to reduce symbol overheads. In addition, only two CDM groups are used, to reduce a resource requirement.

When the value of the antenna port is "9", it indicates that the quantity of DMRS CDM groups to which data is not mapped is 1, where six configured DMRS antenna ports belong to one CDM group, and time-frequency resources corresponding to two remaining CDM groups may be used to map data; DMRS port indexes are 0, 1, 6, 7, 12, and 13; and the quantity of front-loaded symbols is 2 (namely, the DMRS ports 0, 1, 6, 7, 12, and 13 are mapped to two symbols). It can be learned that the rank 6 is supported, but only one CDM group is used, to reduce a resource requirement.

When the value of the antenna port is "10", it indicates that the quantity of DMRS CDM groups to which data is not mapped is 2, where seven configured DMRS antenna ports belong to two CDM groups, and a time-frequency resource corresponding to one remaining CDM group may be used to map data; DMRS port indexes are 0, 1, 2, 3, 6, 7, and 8; and the quantity of front-loaded symbols is 1 (namely, the DMRS ports 0, 1, 2, 3, 6, 7, and 8 are mapped to one symbol). It can be learned that the rank 7 is supported, but mapping is performed only on one symbol, to reduce symbol overheads. In addition, only two CDM groups are used, to reduce a resource requirement.

Table 38 Antenna port (s) (1000+DMRS port), DMRS port index table corresponding to dmrs-Type=2 and maxLength=2

| Two codewords: A codeword 0 is enabled, and a codeword 1 is enabled | | | |
|---|---|---|---|
| Value | Quantity of DMRS CDM groups to which data is not mapped | DMRS port | Quantity of front-loaded symbols |
| 0 | 3 | 0 to 4 | 1 |
| 1 | 3 | 0 to 5 | 1 |
| 2 | 2 | 0, 1, 2, 3, and 6 | 2 |
| A codeword 0 is enabled, and a codeword 1 is enabled | | | |
| Value | Quantity of DMRS CDM groups to which data is not mapped | DMRS port | Quantity of front-loaded symbols |
| 3 | 2 | 0, 1, 2, 3, 6, and 8 | 2 |
| 4 | 2 | 0, 1, 2, 3, 6, 7, and 8 | 2 |
| 5 | 2 | 0, 1, 2, 3, 6, 7, 8, and 9 | 2 |
| 6 | 2 | 0, 1, 2, 3, and 6 | 1 |
| 7 | 1 | 0, 1, 6, 7, and 12 | 2 |
| 8 | 2 | 0, 1, 2, 3, 6, and 8 | 1 |
| 9 | 1 | 0, 1, 6, 7, 12, and 13 | 2 |
| 10 | 2 | 0, 1, 2, 3, 6, 7, and 8 | 1 |
| 11 | 1 | 0, 1, 6, 7, 12, 13, and 18 | 2 |
| 12 | 2 | 0, 1, 2, 3, 6, 7, 8, and 9 | 1 |
| 13 | 1 | 0, 1, 6, 7, 12, 13, 18, and 19 | 2 |
| 14 or more | Reserved | Reserved | Reserved |

When the value of the antenna port is "11", it indicates that the quantity of DMRS CDM groups to which data is not mapped is 1, where seven configured DMRS antenna ports belong to one CDM group, and time-frequency resources corresponding to two remaining CDM groups may be used to map data; DMRS port indexes are 0, 1, 6, 7, 12, 13, and 18; and the quantity of front-loaded symbols is 2 (namely, the DMRS ports 0, 1, 6, 7, 12, 13, and 18 are mapped to two symbols). It can be learned that the rank 7 is supported, but only one CDM group is used, to reduce a resource requirement.

When the value of the antenna port is "12", it indicates that the quantity of DMRS CDM groups to which data is not mapped is 2, where eight configured DMRS antenna ports belong to two CDM groups, and a time-frequency resource corresponding to one remaining CDM group may be used to map data; DMRS port indexes are 0, 1, 2, 3, 6, 7, 8, and 9; and the quantity of front-loaded symbols is 1 (namely, the DMRS ports 0, 1, 2, 3, 6, 7, 8, and 9 are mapped to one symbol). It can be learned that the rank 8 is supported, but mapping is performed only on one symbol, to reduce symbol overheads. In addition, only two CDM groups are used, to reduce a resource requirement.

When the value of the antenna port is "13", it indicates that the quantity of DMRS CDM groups to which data is not mapped is 1, where eight configured DMRS antenna ports belong to one CDM group, and time-frequency resources corresponding to two remaining CDM groups may be used to map data; DMRS port indexes are 0, 1, 6, 7, 12, 13, 18, and 19; and the quantity of front-loaded symbols is 2 (namely, the DMRS ports 0, 1, 6, 7, 12, 13, 18, and 19 are mapped to two symbols). It can be learned that the rank 8 is supported, but only one CDM group is used, to reduce a resource requirement.

The value of the antenna port is an example and may be any value. This is not limited in this application.

The table may include all rows corresponding to the values "0" to "13", or may include a row corresponding to one or more of the values "0" to "13".

In the foregoing DMRS port index tables, a relationship between port values represented in the column of the DMRS port in the table and indexes of actually scheduled DMRS ports is: DMRS port index=1000+DMRS port.

S503: The network device sends the DCI.

The DCI includes the antenna port field, and the antenna port field indicates one of the at least one candidate value of the antenna port field in the DCI.

In a PUSCH/PDSCH resource allocation process, the network device allocates, to the terminal, a DMRS antenna port number used to demodulate the PUSCH/PDSCH.

The network device may further calculate a DMRS punctured location that corresponds to a scheduled location of the terminal and that cannot be used to transmit the PUSCH/PDSCH in a current slot, that is, a quantity of DMRS code division multiplexing groups to which data is not mapped.

S504: After receiving the DCI, the terminal determines, based on the indicated value, antenna ports corresponding to the indicated value.

After detecting, through blind detection, DCI carried in a PDCCH, the terminal parses and obtains a value of an antenna port field in the DCI.

The terminal determines, based on obtained values of the dmrs-Type and the maxLength, the first relationship in one of the foregoing Table 19 to Table 38, and determines, based on the value indicated by the antenna port field carried in the DCI, an antenna port corresponding to the indicated value, that is, determines a row corresponding to the table.

S505: The network device sends DMRSs corresponding to the determined antenna ports.

Correspondingly, the terminal receives the DMRSs corresponding to the determined antenna ports.

Downlink transmission is used as an example. After the network device and the terminal determine the antenna ports of the DMRSs, the network device generates a corresponding DMRS signal according to a DMRS signal generation method agreed in a protocol, performs time-frequency resource mapping according to the preset method, and sends the DMRSs corresponding to the antenna ports. The terminal receives the DMRSs corresponding to the antenna ports. The DMRSs corresponding to the antenna ports are used to demodulate data corresponding to the antenna ports.

According to the DMRS port indication method provided in this embodiment of this application, an indication for DMRS antenna ports of more than four streams is implemented.

The foregoing describes the DMRS port indication method. The method may also be used for port indication of another reference signal, for example, a sounding reference signal (sounding reference signal, SRS) or a channel state information-reference signal (channel state information-reference signal, CSI-RS). This is not limited in this application.

It may be understood that, to implement the functions in the foregoing embodiments, the terminal and the network device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

FIG. 8 to FIG. 11 are diagrams of a structure of a possible DMRS port indication apparatus according to embodiments of this application. The DMRS port indication apparatuses may be configured to implement functions of the terminal or the network device in the foregoing method embodiments. Therefore, beneficial effects of the foregoing method embodiments can also be implemented.

FIG. 8 is a diagram of a structure of a DMRS port indication apparatus according to an embodiment of this application. The DMRS port indication apparatus 800 includes a transceiver unit 801 and a processing unit 802.

When the DMRS port indication apparatus is configured to implement the functions of the terminal in the embodiment shown in FIG. 5, the transceiver unit 801 is configured to perform the functions performed by the terminal in step S503 and step S505 in the embodiment shown in FIG. 5, and the processing unit 802 is configured to perform step S501, step S502, and step S504 in the embodiment shown in FIG. 5.

When the DMRS port indication apparatus is configured to implement the functions of the network device in the embodiment shown in FIG. 5, the transceiver unit 801 is configured to perform the functions performed by the network device in step S503 and step S505 in the embodiment shown in FIG. 5.

According to the DMRS port indication apparatus provided in this embodiment of this application, an indication for DMRS antenna ports of more than four streams is implemented.

FIG. 9 is a diagram of a structure of a simplified terminal. For ease of understanding and illustration, an example in which the terminal is a mobile phone is used in FIG. 9. As shown in FIG. 9, the terminal includes a processor, a memory, a radio frequency circuit, an antenna, and an input/output apparatus. The processor is mainly configured to process a communication protocol and communication data, control the terminal, execute a software program, process data of the software program, and the like. The memory is mainly configured to store the software program and the data. The radio frequency circuit is mainly configured to perform conversion between a baseband signal and a radio frequency signal, and process the radio frequency signal. The antenna is mainly configured to receive and send the radio frequency signal in a form of an electromagnetic wave. An input/output apparatus like a touchscreen, a display, or a keyboard, is mainly configured to: receive data input by a user and output data to the user. For example, some types of terminals may not have the input/output apparatus.

When sending data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 9 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a receiving unit and a sending unit of the terminal (or may be collectively referred to as a transceiver unit), and the processor having a processing function may be considered as a processing unit of the terminal. As shown in FIG. 9, the terminal includes a transceiver unit 901 and a processing unit 902. The transceiver unit 901 may also be referred to as a receiver/transmitter (sender), a receiver/transmitter machine, a receiver/transmitter circuit, or the like. The processing unit 902 may also be referred to as a processor, a processing board, a processing module, a processing apparatus, or the like. The transceiver unit 901 is configured to implement a function of the transceiver unit 801 in the embodiment shown in FIG. 8, and the processing unit 902 is configured to implement a function of the processing unit 802 in the embodiment shown in FIG. 8.

For example, in an embodiment, the transceiver unit 901 is configured to perform functions of the terminal in step S503 and step S505 in the embodiment shown in FIG. 5. The processing unit 902 is configured to perform step S501, step S502, and step S504 in the embodiment shown in FIG. 5.

FIG. 10 is a diagram of a structure of a simplified network device. The network device includes a part for receiving/sending a radio frequency signal and performing conversion and a part 1002, and the part for receiving/sending a radio frequency signal and performing conversion further includes a transceiver unit part 1001. The part for receiving/sending a radio frequency signal and performing conversion is mainly configured to send/receive a radio frequency signal and perform conversion between a radio frequency signal and a baseband signal. The part 1002 is mainly configured to perform baseband processing, control the network device, and the like. The transceiver unit 1001 may also be referred to as a receiver/transmitter (sender), a receiver/transmitter machine, a receiver/transmitter circuit, or the like. The part 1002 is usually a control center of the network device, may usually be referred to as a processing unit, and is configured to control the network device to perform steps performed by the network device in FIG. 5. For details, refer to the foregoing descriptions of the related parts. The transceiver unit 1001 may be configured to implement a function of the transceiver unit 801 in the embodiment shown in FIG. 8, and the part 1002 is configured to implement a function of the processing unit 802 in the embodiment shown in FIG. 8.

The part 1002 may include one or more boards. Each board may include one or more processors and one or more memories. The processor is configured to read and execute a program in the memory to implement a baseband processing function and control the network device. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, in an embodiment, the transceiver unit 1001 is configured to perform functions of the network device in step S503 and step S505 in the embodiment shown in FIG. 5.

FIG. 11 is a diagram of a structure of another DMRS port indication apparatus according to an embodiment of this application. The DMRS port indication apparatus 1100 includes a processor 1101 and an interface circuit 1102. The processor 1101 and the interface circuit 1102 are coupled to each other. It may be understood that the interface circuit 1102 may be a transceiver or an input/output interface. Optionally, the DMRS port indication apparatus 1100 may further include a memory 1103, configured to store instructions executed by the processor 1101, or store input data for the processor 1101 to run the instructions, or store data generated after the processor 1101 runs the instructions.

When the DMRS port indication apparatus 1100 is configured to implement the method shown in FIG. 5, the processor 1101 is configured to implement a function of the processing unit 802, and the interface circuit 1102 is configured to implement a function of the transceiver unit 801.

When the DMRS port indication apparatus is a chip used in a terminal, the chip is configured to implement the functions of the terminal in the foregoing method embodiments. The chip receives information from another module (for example, a radio frequency module or an antenna) in the terminal. The information is sent by a network device or another device to the terminal. Alternatively, the chip sends information to another module (for example, a radio frequency module or an antenna) in the terminal, and the information is sent by the terminal to a network device or another device.

When the DMRS port indication apparatus is a chip used in a network device, the chip is configured to implement the functions of the network device in the foregoing method embodiments. The chip receives information from another module (for example, a radio frequency module or an antenna) in the network device. The information is sent by a terminal or another device to the network device. Alternatively, the chip sends information to another module (for example, a radio frequency module or an antenna) in the network device, and the information is sent by the network device to a terminal or another device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

According to the DMRS port indication apparatus provided in this embodiment of this application, an indication for DMRS antenna ports of more than four streams is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a first node. Certainly, the processor and the storage medium may alternatively exist as discrete components in a terminal.

An embodiment of this application further provides a communication system. The communication system includes the DMRS port indication apparatus.

An embodiment of this application further provides a computer-readable storage medium. The computer-readable storage medium stores a computer program or instructions. When the program or the instructions are executed by a processor, the method according to the foregoing embodiments is performed.

An embodiment of this application further provides a computer program product. When the computer program product runs on a computing device, the method according to the foregoing embodiments is performed.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, a terminal, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

**1.** A DMRS port indication method, wherein the method comprises:

obtaining a demodulation reference signal DMRS type dmrs-Type and a maximum time domain symbol length maxLength allowed by a front-loaded DMRS;
determining a first relationship, wherein the first relationship has an association relationship with the dmrs-Type and the maxLength, the first relationship comprises at least one candidate value of an antenna port field and candidate antenna ports corresponding to each of the at least one candidate value of the antenna port field, a quantity of candidate antenna ports corresponding to each candidate value is greater than or equal to N, the candidate antenna ports corresponding to each candidate value are comprised in a first antenna port group and/or a second antenna port group, a quantity of antenna ports comprised in the first antenna port group is the same as a quantity of antenna ports comprised in the second antenna port group, the first antenna port group and the second antenna port group each correspond to at least two code division multiplexing groups, a quantity of code division multiplexing groups corresponding to the first antenna port group is the same as a quantity of code division multiplexing groups corresponding to the second antenna port group, and N is greater than 4;
receiving downlink control information DCI, wherein the DCI comprises the antenna port field, and the antenna port field indicates one of the at least one candidate value of the antenna port field in the DCI;
determining, based on the indicated value, antenna ports corresponding to the indicated value; and
receiving DMRSs corresponding to the determined antenna ports.

**2.** The method according to claim 1, wherein the obtaining a dmrs-Type and a maxLength comprises:
receiving first signaling, wherein the first signaling comprises the dmrs-Type and the maxLength.

**3.** A DMRS port indication method, wherein the method comprises:

obtaining a demodulation reference signal DMRS type dmrs-Type and a maximum time domain symbol length maxLength allowed by a front-loaded DMRS;
determining a first relationship, wherein the first relationship has an association relationship with the dmrs-Type and the maxLength, the first relationship comprises at least one candidate value of an antenna port field and candidate antenna ports corresponding to each of the at least one candidate value of the antenna port field, a quantity of candidate antenna ports corresponding to each candidate value is greater than or equal to N, the candidate antenna ports corresponding to each candidate value are comprised in a first antenna port group and/or a second antenna port group, a quantity of antenna ports comprised in the first antenna port group is the same as a quantity of antenna ports comprised in the second antenna port group, the first antenna port group and the second antenna port group each correspond to at least two code division multiplexing groups, a quantity of code division multiplexing groups corresponding to the first antenna port group is the same as a quantity of code division multiplexing groups corresponding to the second antenna port group, and N is greater than 4;
sending downlink control information DCI, wherein the DCI comprises the antenna port field, and the antenna port field indicates one of the at least one candidate value of the antenna port field in the DCI;
determining, based on the indicated value, antenna ports corresponding to the indicated value; and
sending DMRSs corresponding to the determined antenna ports.

**4.** The method according to claim 3, wherein the method further comprises:
sending first signaling, wherein the first signaling comprises the dmrs-Type and the maxLength.

**5.** A DMRS port indication apparatus, wherein the apparatus comprises a processing unit and a transceiver unit, wherein

the processing unit is configured to obtain a demodulation reference signal DMRS type dmrs-Type and a maximum time domain symbol length maxLength allowed by a front-loaded DMRS;
the processing unit is further configured to determine a first relationship, wherein the first relationship has an association relationship with the dmrs-Type and the maxLength, the first relationship comprises at least one candidate value of an antenna port field and candidate antenna ports corresponding to each of the at least one candidate value of the antenna port field, a quantity of candidate antenna ports corresponding to each candidate value is greater than or equal to N, the candidate antenna ports corresponding to each candidate value are comprised in a first antenna port group and/or a second antenna port group, a quantity of antenna ports comprised in the first antenna port group is the same as a quantity of antenna ports comprised in the second antenna port group, the first antenna port group and the second antenna port group each correspond to at least two code division multiplexing groups, a quantity of code division multiplexing groups corresponding to the first antenna port group is the same as a quantity of code division multiplexing groups corresponding to the second antenna port group, and N is greater than 4;
the transceiver unit is configured to receive downlink control information DCI, wherein the DCI comprises the antenna port field, and the antenna port field indicates one of the at least one candidate value of the antenna port field in the DCI;
the processing unit is further configured to determine, based on the indicated value, antenna ports corresponding to the indicated value; and
the transceiver unit is further configured to receive DMRSs corresponding to the determined antenna ports.

**6.** The apparatus according to claim 5, wherein the transceiver unit is further configured to receive first signaling, wherein the first signaling comprises the dmrs-Type and the maxLength.

**7.** A DMRS port indication apparatus, wherein the apparatus comprises a processing unit and a transceiver unit, wherein

the processing unit is configured to obtain a demodulation reference signal DMRS type dmrs-Type and a maximum time domain symbol length maxLength allowed by a front-loaded DMRS;
the processing unit is further configured to determine a first relationship, wherein the first relationship has an association relationship with the dmrs-Type and the maxLength, the first relationship comprises at least one candidate value of an antenna port field and candidate antenna ports corresponding to each of the at least one candidate value of the antenna port field, a quantity of candidate antenna ports corresponding to each candidate value is greater than or equal to N, the candidate antenna ports corresponding to each candidate value are comprised in a first antenna port group and/or a second antenna port group, a quantity of antenna ports comprised in the first antenna port group is the same as a quantity of antenna ports comprised in the second antenna port group, the first antenna port group and the second antenna port group each correspond to at least two code division multiplexing groups, a quantity of code division multiplexing groups corresponding to the first antenna port group is the same as a quantity of code division multiplexing groups corresponding to the second antenna port group, and N is greater than 4;
the transceiver unit is further configured to send downlink control information DCI, wherein the DCI comprises the antenna port field, and the antenna port field indicates one of the at least one candidate value of the antenna port field in the DCI;
the processing unit is further configured to determine, based on the indicated value, antenna ports corresponding to the indicated value; and
the transceiver unit is further configured to send DMRSs corresponding to the determined antenna ports.

**8.** The apparatus according to claim 7, wherein the transceiver unit is further configured to send first signaling, wherein the first signaling comprises the dmrs-Type and the maxLength.

**9.** The method or apparatus according to any one of claims 1 to 8, wherein the quantity of candidate antenna ports corresponding to each candidate value is N.

**10.** The method or apparatus according to any one of claims 1 to 9, wherein the first relationship further comprises a quantity of DMRS code division multiplexing groups to which data is not mapped and that correspond to each of the at least one candidate value of the antenna port field in the DCI.

**11.** The method or apparatus according to claim 10, wherein DMRSs corresponding to candidate antenna ports corresponding to the at least one candidate value are mapped to one symbol, and the candidate antenna ports corresponding to the at least one candidate value belong to two DMRS code division multiplexing groups; or
DMRSs corresponding to candidate antenna ports corresponding to the at least one candidate value are mapped to two symbols, and the candidate antenna ports corresponding to the at least one candidate value belong to one DMRS code division multiplexing group.

**12.** The method or apparatus according to claim 10 or 11, wherein the dmrs-Type is 1, the maxLength is 1, and N is 5; and a value of the antenna port field is a first value, the quantity of DMRS code division multiplexing groups to which data is not mapped is 2, and the antenna ports are 0 to 4.

**13.** The method or apparatus according to claim 10 or 11, wherein the dmrs-Type is 1, the maxLength is 1, and N is 6; and a value of the antenna port field is a second value, the quantity of DMRS code division multiplexing groups to which data is not mapped is 2, and the antenna ports are 0, 1, 2, 3, 4, and 6.

**14.** The method or apparatus according to claim 10 or 11, wherein the dmrs-Type is 1, the maxLength is 1, and N is 7; and a value of the antenna port field is a third value, the quantity of DMRS code division multiplexing groups to which data is not mapped is 2, and the antenna ports are 0 to 6.

**15.** The method or apparatus according to claim 10 or 11, wherein the dmrs-Type is 1, the maxLength is 1, and N is 8; and a value of the antenna port field is a fourth value, the quantity of DMRS code division multiplexing groups to which data is not mapped is 2, and the antenna ports are 0 to 7.

**16.** The method or apparatus according to any one of claims 12 to 15, wherein the first antenna port group and the second antenna port group each comprise four antenna ports, and the first antenna port group and the second antenna port group each correspond to two CDM groups.

**17.** The method or apparatus according to claim 10 or 11, wherein the dmrs-Type is 1, the maxLength is 2, and N is 5; and

a value of the antenna port field is a fifth value, the quantity of DMRS code division multiplexing groups to which data is not mapped is 1, the antenna ports are 0, 1, 4, 5, and 8, and the DMRSs are mapped to two symbols; and/or
the value of the antenna port field is a sixth value, the quantity of DMRS code division multiplexing groups to which data is not mapped is 2, the antenna ports are 0 to 4, and the DMRSs are mapped to one symbol.

**18.** The method or apparatus according to claim 10 or 11, wherein the dmrs-Type is 1, the maxLength is 2, and N is 6; and

a value of the antenna port field is a seventh value, the quantity of DMRS code division multiplexing groups to which data is not mapped is 1, the antenna ports are 0, 1, 4, 5, 8, and 9, and the DMRSs are mapped to two symbols; and/or
the value of the antenna port field is an eighth value, the quantity of DMRS code division multiplexing groups to which data is not mapped is 2, the antenna ports are 0, 1, 2, 3, 4, and 6, and the DMRSs are mapped to one symbol.

**19.** The method or apparatus according to claim 10 or 11, wherein the dmrs-Type is 1, the maxLength is 2, and N is 7; and

a value of the antenna port field is a ninth value, the quantity of DMRS code division multiplexing groups to which data is not mapped is 1, the antenna ports are 0, 1, 4, 5, 8, 9, and 12, and the DMRSs are mapped to two symbols; and/or
the value of the antenna port field is a tenth value, the quantity of DMRS code division multiplexing groups to which data is not mapped is 2, the antenna ports are 0 to 6, and the DMRSs are mapped to one symbol.

**20.** The method or apparatus according to claim 10 or 11, wherein the dmrs-Type is 1, the maxLength is 2, and N is 8; and

a value of the antenna port field is an eleventh value, the quantity of DMRS code division multiplexing groups to which data is not mapped is 1, the antenna ports are 0, 1, 4, 5, 8, 9, 12, and 13, and the DMRSs are mapped to two symbols; and/or
the value of the antenna port field is a twelfth value, the quantity of DMRS code division multiplexing groups to which data is not mapped is 2, the antenna ports are 0 to 7, and the DMRSs are mapped to one symbol.

**21.** The method or apparatus according to any one of claims 17 to 20, wherein the first antenna port group and the second antenna port group each comprise eight antenna ports, and the first antenna port group and the second antenna port group each correspond to two CDM groups.

**22.** The method or apparatus according to claim 10 or 11, wherein the dmrs-Type is 2, the maxLength is 1, and N is 5; and

a value of the antenna port field is a thirteenth value, the quantity of DMRS code division multiplexing groups to which data is not mapped is 3, and the antenna ports are 0 to 4; and/or
the value of the antenna port field is a fourteenth value, the quantity of DMRS code division multiplexing groups to which data is not mapped is 2, and the antenna ports are 0, 1, 2, 3, and 6.

**23.** The method or apparatus according to claim 10 or 11, wherein the dmrs-Type is 2, the maxLength is 1, and N is 6; and

a value of the antenna port field is a fifteenth value, the quantity of DMRS code division multiplexing groups to which data is not mapped is 3, and the antenna ports are 0 to 5; and/or
the value of the antenna port field is a sixteenth value, the quantity of DMRS code division multiplexing groups to which data is not mapped is 2, and the antenna ports are 0, 1, 2, 3, 6, and 8.

**24.** The method or apparatus according to claim 10 or 11, wherein the dmrs-Type is 2, the maxLength is 1, and N is 7; and

a value of the antenna port field is a seventeenth value, the quantity of DMRS code division multiplexing groups to which data is not mapped is 3, and the antenna ports are 0 to 6; and/or
the value of the antenna port field is an eighteenth value, the quantity of DMRS code division multiplexing groups to which data is not mapped is 2, and the antenna ports are 0, 1, 2, 3, 6, 7, and 8.

**25.** The method or apparatus according to claim 10 or 11, wherein the dmrs-Type is 2, the maxLength is 1, and N is 8; and

a value of the antenna port field is a nineteenth value, the quantity of DMRS code division multiplexing groups to which data is not mapped is 3, and the antenna ports are 0, 1, 2, 3, 4, 5, 6, and 8; and/or
the value of the antenna port field is a twentieth value, the quantity of DMRS code division multiplexing groups to which data is not mapped is 2, and the antenna ports are 0, 1, 2, 3, 6, 7, 8, and 9.

**26.** The method or apparatus according to any one of claims 22 to 25, wherein the first antenna port group and the second antenna port group each comprise six antenna ports, and the first antenna port group and the second antenna port group each correspond to three CDM groups.

**27.** The method or apparatus according to claim 10 or 11, wherein the dmrs-Type is 2, the maxLength is 2, and N is 5; and

a value of the antenna port field is a twenty-first value, the quantity of DMRS code division multiplexing groups to which data is not mapped is 3, the antenna ports are 0 to 4, and the DMRSs are mapped to one symbol; and/or
the value of the antenna port field is a twenty-second value, the quantity of DMRS code division multiplexing groups to which data is not mapped is 2, the antenna ports are 0, 1, 2, 3, and 6, and the DMRSs are mapped to one symbol; and/or
the value of the antenna port field is a twenty-third value, the quantity of DMRS code division multiplexing groups to which data is not mapped is 1, the antenna ports are 0, 1, 6, 7, and 12, and the DMRSs are mapped to two symbols.

**28.** The method or apparatus according to claim 10 or 11, wherein the dmrs-Type is 2, the maxLength is 2, and N is 6; and

a value of the antenna port field is a twenty-fourth value, the quantity of DMRS code division multiplexing groups to which data is not mapped is 3, the antenna ports are 0 to 5, and the DMRSs are mapped to one symbol; and/or
the value of the antenna port field is a twenty-fifth value, the quantity of DMRS code division multiplexing groups to which data is not mapped is 2, the antenna ports are 0, 1, 2, 3, 6, and 8, and the DMRSs are mapped to one symbol; and/or
the value of the antenna port field is a twenty-sixth value, the quantity of DMRS code division multiplexing groups to which data is not mapped is 1, the antenna ports are 0, 1, 6, 7, 12, and 13, and the DMRSs are mapped to two symbols.

**29.** The method or apparatus according to claim 10 or 11, wherein the dmrs-Type is 2, the maxLength is 2, and N is 7; and

a value of the antenna port field is a twenty-seventh value, the quantity of DMRS code division multiplexing groups to which data is not mapped is 2, the antenna ports are 0, 1, 2, 3, 6, 7, and 8, and the DMRSs are mapped to one symbol; and/or
the value of the antenna port field is a twenty-eighth value, the quantity of DMRS code division multiplexing groups to which data is not mapped is 1, the antenna ports are 0, 1, 6, 7, 12, 13, and 18, and the DMRSs are mapped to two symbols.

**30.** The method or apparatus according to claim 10 or 11, wherein the dmrs-Type is 2, the maxLength is 2, and N is 8; and

a value of the antenna port field is a twenty-ninth value, the quantity of DMRS code division multiplexing groups to which data is not mapped is 2, the antenna ports are 0, 1, 2, 3, 6, 7, and 8, and the DMRSs are mapped to one symbol; and/or
the value of the antenna port field is a thirtieth value, the quantity of DMRS code division multiplexing groups to which data is not mapped is 1, the antenna ports are 0, 1, 6, 7, 12, 13, 18, and 19, and the DMRSs are mapped to two symbols.

**31.** The method or apparatus according to any one of claims 27 to 30, wherein the first antenna port group and the second antenna port group each comprise 12 antenna ports, and the first antenna port group and the second antenna port group each correspond to three CDM groups.

**32.** The method or apparatus according to claim 10, wherein the dmrs-Type is 1, the maxLength is 2, N is 5, a value of the antenna port field is a thirty-first value, the quantity of code division multiplexing groups is 2, the antenna ports are 0 to 4, and the DMRSs are mapped to two symbols; and/or

the dmrs-Type is 1, the maxLength is 2, N is 6, the value of the antenna port field is a thirty-second value, the quantity of code division multiplexing groups is 2, the antenna ports are 0, 1, 2, 3, 4, and 6, and the DMRSs are mapped to two symbols; and/or
the dmrs-Type is 1, the maxLength is 2, N is 7, the value of the antenna port field is a thirty-third value, the quantity of code division multiplexing groups is 2, the antenna ports are 0 to 6, and the DMRSs are mapped to two symbols; and/or
the dmrs-Type is 1, the maxLength is 2, N is 8, the value of the antenna port field is a thirty-fourth value, the quantity of code division multiplexing groups is 2, the antenna ports are 0 to 7, and the DMRSs are mapped to two symbols; and/or
the dmrs-Type is 2, the maxLength is 2, N is 5, the value of the antenna port field is a thirty-fifth value, the quantity of code division multiplexing groups is 2, the antenna ports are 0, 1, 2, 3, and 6, and the DMRSs are mapped to two symbols; and/or
the dmrs-Type is 2, the maxLength is 2, N is 6, the value of the antenna port field is a thirty-sixth value, the quantity of code division multiplexing groups is 2, the antenna ports are 0, 1, 2, 3, 6, and 8, and the DMRSs are mapped to two symbols; and/or
the dmrs-Type is 2, the maxLength is 2, N is 7, the value of the antenna port field is a thirty-seventh value, the quantity of code division multiplexing groups is 2, the antenna ports are 0, 1, 2, 3, 6, 7, and 8, and the DMRSs are mapped to two symbols; and/or
the dmrs-Type is 2, the maxLength is 2, N is 8, the value of the antenna port field is a thirty-eighth value, the quantity of code division multiplexing groups is 2, the antenna ports are 0, 1, 2, 3, 6, 7, 8, and 9, and the DMRSs are mapped to two symbols.

**33.** A DMRS port indication apparatus, comprising a processor, configured to execute a program stored in a memory, wherein when the program is executed, the apparatus is enabled to perform the method according to any one of claims 1 to 4 and claims 9 to 32.

**34.** A computer-readable storage medium, storing a computer program, wherein when the computer program is executed by a processor, the method according to any one of claims 1 to 4 and claims 9 to 32 is implemented.

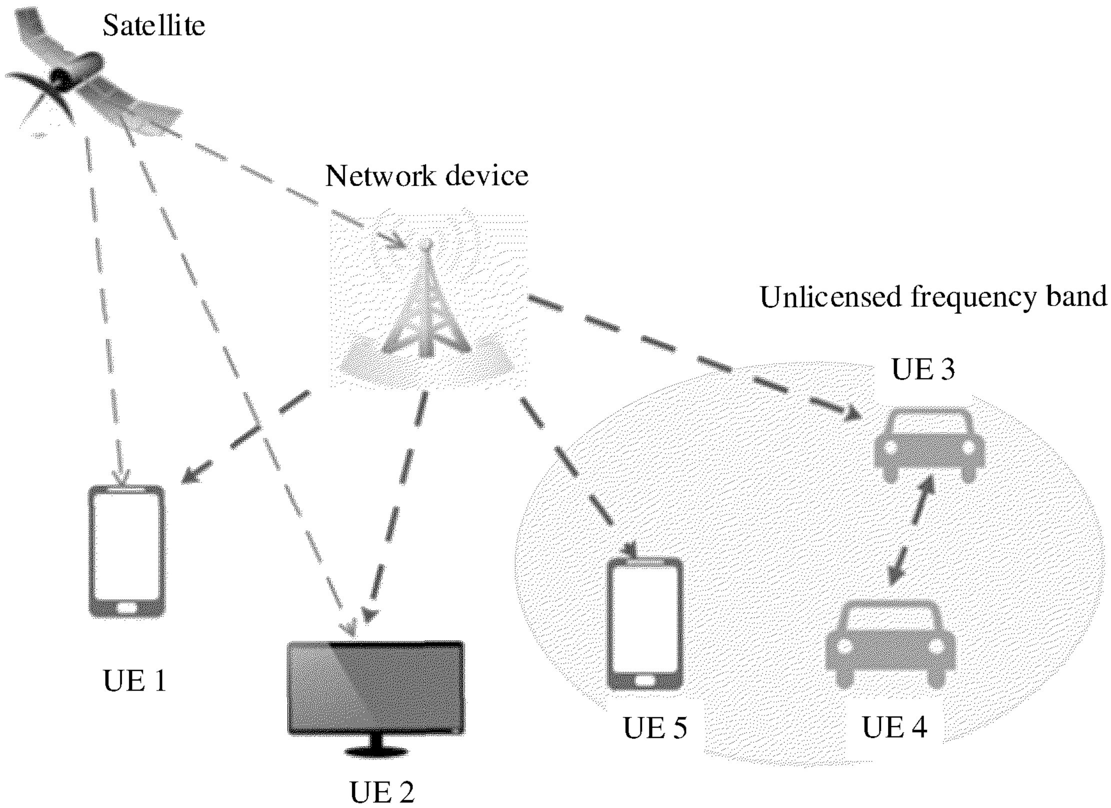
Satellite
Network device
Unlicensed frequency band
UE 3
UE 1
UE 5
UE 4
UE 2

FIG. 1

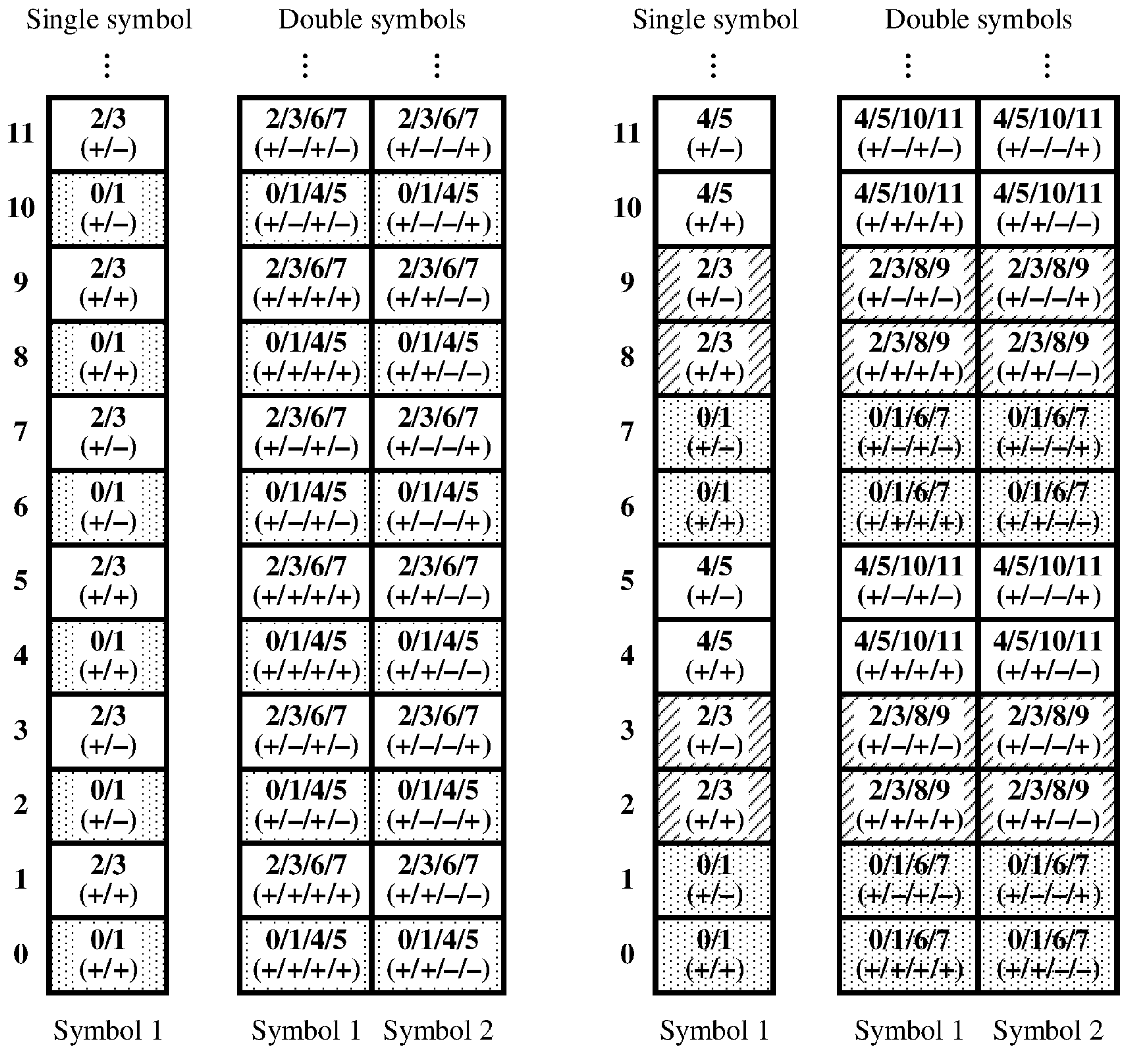
Single symbol
Double symbols
Single symbol
Double symbols
11
2/3 (+/−)
2/3/6/7 (+/−/+/−)
2/3/6/7 (+/−/−/+)
11
4/5 (+/−)
4/5/10/11 (+/−/+/−)
4/5/10/11 (+/−/−/+)
10
0/1 (+/−)
0/1/4/5 (+/−/+/−)
0/1/4/5 (+/−/−/+)
10
4/5 (+/+)
4/5/10/11 (+/+/+/+)
4/5/10/11 (+/+/−/−)
9
2/3 (+/+)
2/3/6/7 (+/+/+/+)
2/3/6/7 (+/+/−/−)
9
2/3 (+/−)
2/3/8/9 (+/−/+/−)
2/3/8/9 (+/−/−/+)
8
0/1 (+/+)
0/1/4/5 (+/+/+/+)
0/1/4/5 (+/+/−/−)
8
2/3 (+/+)
2/3/8/9 (+/+/+/+)
2/3/8/9 (+/+/−/−)
7
2/3 (+/−)
2/3/6/7 (+/−/+/−)
2/3/6/7 (+/−/−/+)
7
0/1 (+/−)
0/1/6/7 (+/−/+/−)
0/1/6/7 (+/−/−/+)
6
0/1 (+/−)
0/1/4/5 (+/−/+/−)
0/1/4/5 (+/−/−/+)
6
0/1 (+/+)
0/1/6/7 (+/+/+/+)
0/1/6/7 (+/+/−/−)
5
2/3 (+/+)
2/3/6/7 (+/+/+/+)
2/3/6/7 (+/+/−/−)
5
4/5 (+/−)
4/5/10/11 (+/−/+/−)
4/5/10/11 (+/−/−/+)
4
0/1 (+/+)
0/1/4/5 (+/+/+/+)
0/1/4/5 (+/+/−/−)
4
4/5 (+/+)
4/5/10/11 (+/+/+/+)
4/5/10/11 (+/+/−/−)
3
2/3 (+/−)
2/3/6/7 (+/−/+/−)
2/3/6/7 (+/−/−/+)
3
2/3 (+/−)
2/3/8/9 (+/−/+/−)
2/3/8/9 (+/−/−/+)
2
0/1 (+/−)
0/1/4/5 (+/−/+/−)
0/1/4/5 (+/−/−/+)
2
2/3 (+/+)
2/3/8/9 (+/+/+/+)
2/3/8/9 (+/+/−/−)
1
2/3 (+/+)
2/3/6/7 (+/+/+/+)
2/3/6/7 (+/+/−/−)
1
0/1 (+/−)
0/1/6/7 (+/−/+/−)
0/1/6/7 (+/−/−/+)
0
0/1 (+/+)
0/1/4/5 (+/+/+/+)
0/1/4/5 (+/+/−/−)
0
0/1 (+/+)
0/1/6/7 (+/+/+/+)
0/1/6/7 (+/+/−/−)
Symbol 1
Symbol 1
Symbol 2
Symbol 1
Symbol 1
Symbol 2

FIG. 2

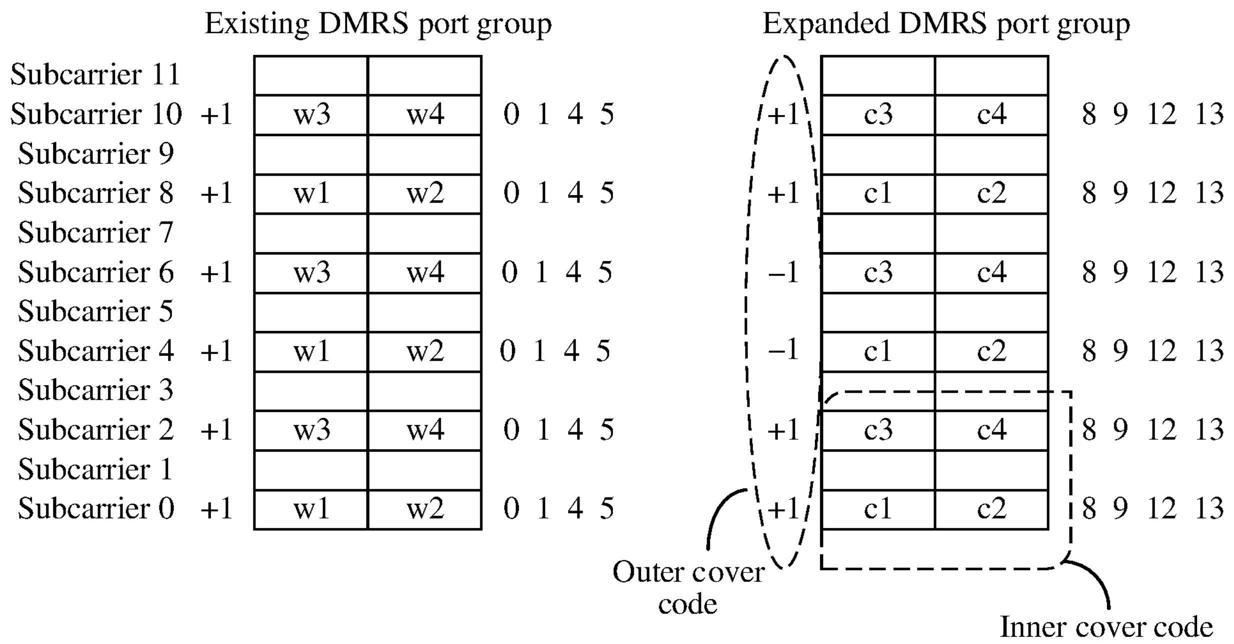
Existing DMRS port group
Expanded DMRS port group
Subcarrier 11
Subcarrier 10 +1 w3 w4 0 1 4 5
Subcarrier 9
Subcarrier 8 +1 w1 w2 0 1 4 5
Subcarrier 7
Subcarrier 6 +1 w3 w4 0 1 4 5
Subcarrier 5
Subcarrier 4 +1 w1 w2 0 1 4 5
Subcarrier 3
Subcarrier 2 +1 w3 w4 0 1 4 5
Subcarrier 1
Subcarrier 0 +1 w1 w2 0 1 4 5
+1 c3 c4 8 9 12 13
+1 c1 c2 8 9 12 13
−1 c3 c4 8 9 12 13
−1 c1 c2 8 9 12 13
+1 c3 c4 8 9 12 13
+1 c1 c2 8 9 12 13
Outer cover code
Inner cover code

FIG. 3

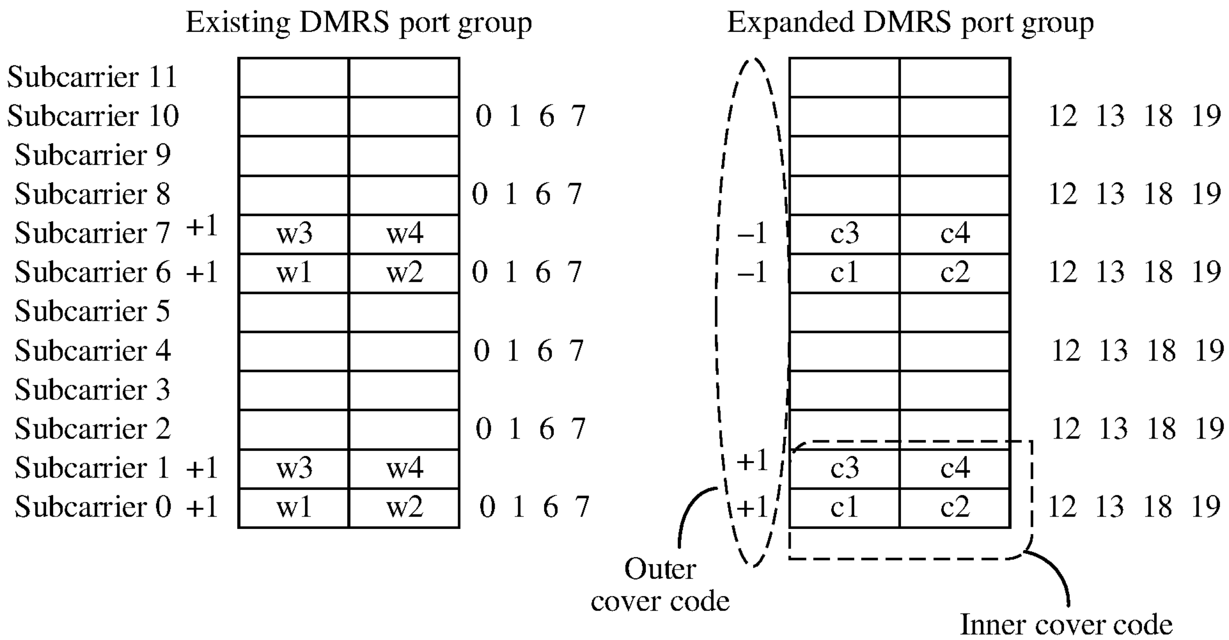
Existing DMRS port group
Expanded DMRS port group
Subcarrier 11
Subcarrier 10 0 1 6 7
Subcarrier 9
Subcarrier 8 0 1 6 7
Subcarrier 7 +1 w3 w4
Subcarrier 6 +1 w1 w2 0 1 6 7
Subcarrier 5
Subcarrier 4 0 1 6 7
Subcarrier 3
Subcarrier 2 0 1 6 7
Subcarrier 1 +1 w3 w4
Subcarrier 0 +1 w1 w2 0 1 6 7
12 13 18 19
12 13 18 19
−1 c3 c4
−1 c1 c2 12 13 18 19
12 13 18 19
12 13 18 19
+1 c3 c4
+1 c1 c2 12 13 18 19
Outer cover code
Inner cover code

FIG. 4

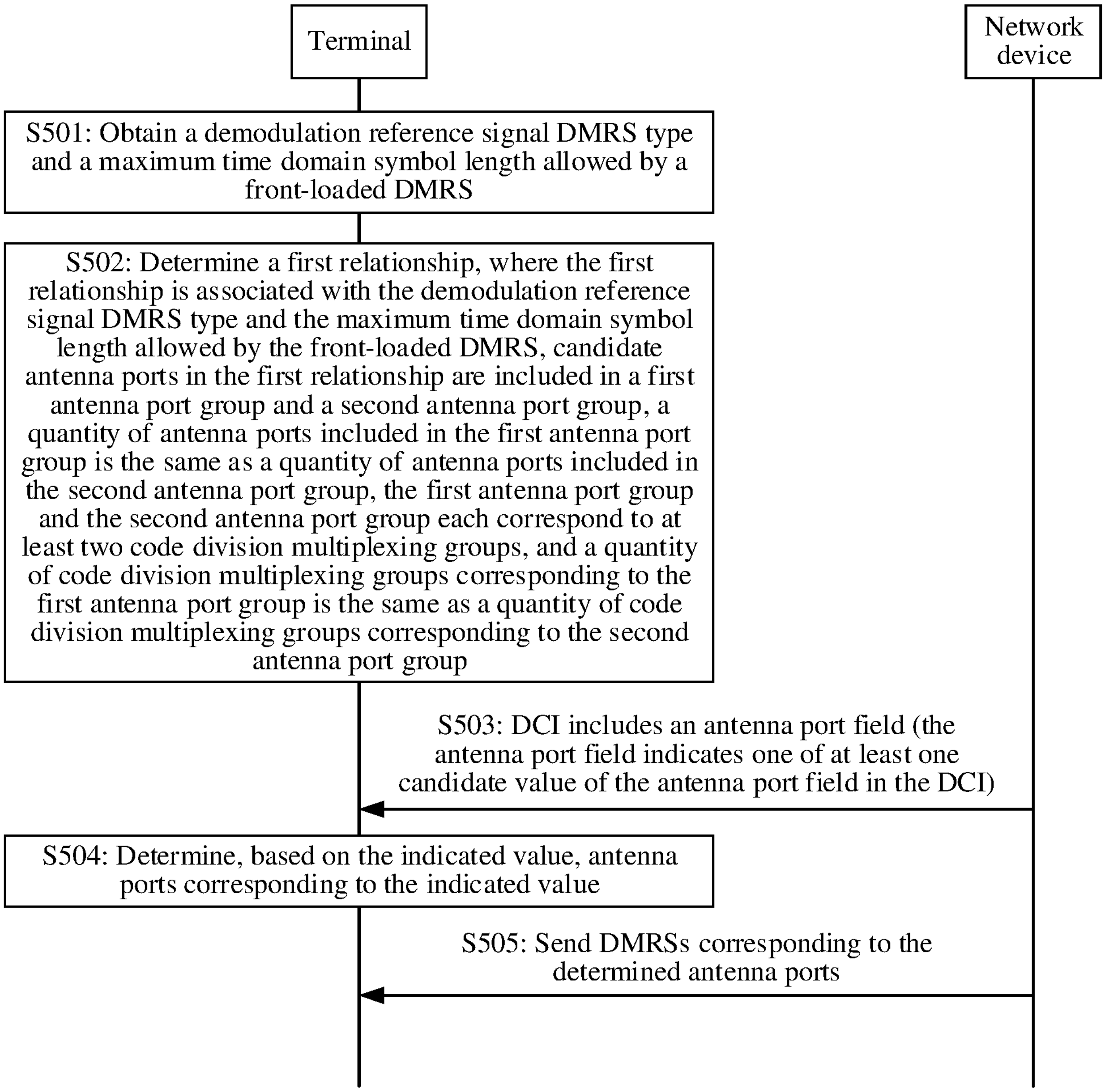
Terminal
Network device
S501: Obtain a demodulation reference signal DMRS type and a maximum time domain symbol length allowed by a front-loaded DMRS
S502: Determine a first relationship, where the first relationship is associated with the demodulation reference signal DMRS type and the maximum time domain symbol length allowed by the front-loaded DMRS, candidate antenna ports in the first relationship are included in a first antenna port group and a second antenna port group, a quantity of antenna ports included in the first antenna port group is the same as a quantity of antenna ports included in the second antenna port group, the first antenna port group and the second antenna port group each correspond to at least two code division multiplexing groups, and a quantity of code division multiplexing groups corresponding to the first antenna port group is the same as a quantity of code division multiplexing groups corresponding to the second antenna port group
S503: DCI includes an antenna port field (the antenna port field indicates one of at least one candidate value of the antenna port field in the DCI)
S504: Determine, based on the indicated value, antenna ports corresponding to the indicated value
S505: Send DMRSs corresponding to the determined antenna ports

FIG. 5

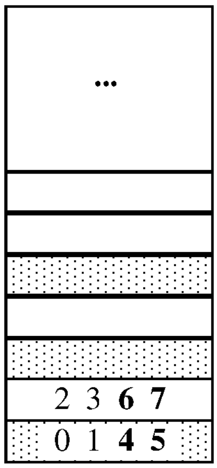
...
2 3 6 7
0 1 4 5

FIG. 6a

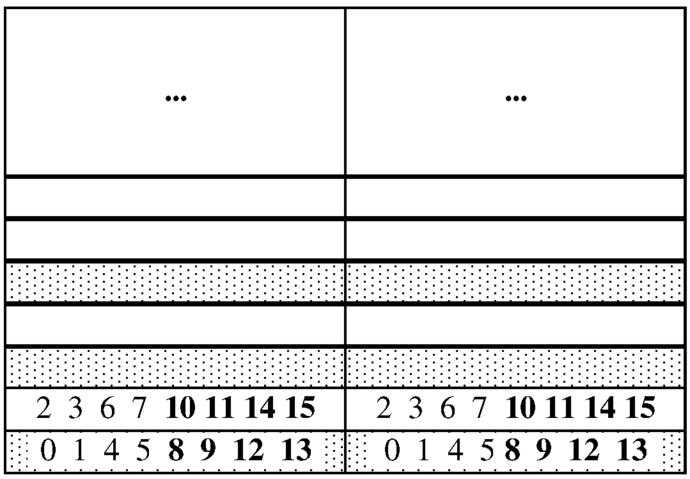
...
...
2 3 6 7 10 11 14 15
2 3 6 7 10 11 14 15
0 1 4 5 8 9 12 13
0 1 4 5 8 9 12 13

FIG. 6b

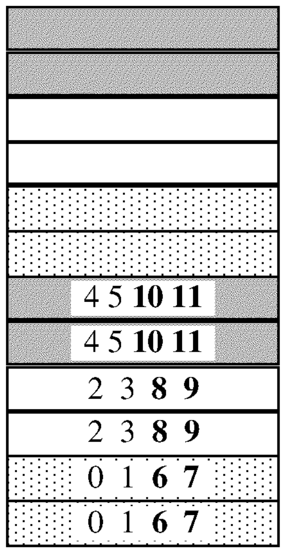
4 5 10 11
4 5 10 11
2 3 8 9
2 3 8 9
0 1 6 7
0 1 6 7

FIG. 7a

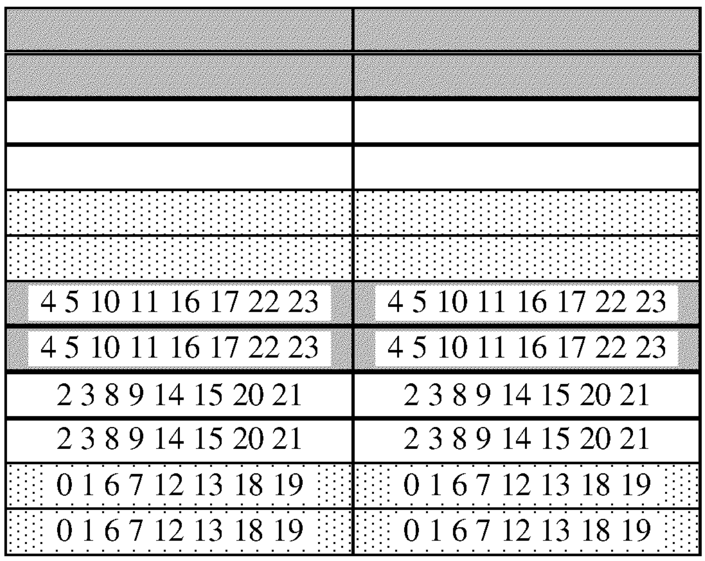
4 5 10 11 16 17 22 23
4 5 10 11 16 17 22 23
4 5 10 11 16 17 22 23
4 5 10 11 16 17 22 23
2 3 8 9 14 15 20 21
2 3 8 9 14 15 20 21
2 3 8 9 14 15 20 21
2 3 8 9 14 15 20 21
0 1 6 7 12 13 18 19
0 1 6 7 12 13 18 19
0 1 6 7 12 13 18 19
0 1 6 7 12 13 18 19

FIG. 7b

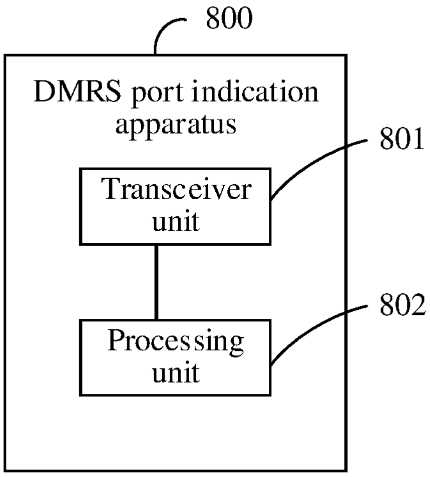
800
DMRS port indication apparatus
801
Transceiver unit
802
Processing unit

FIG. 8

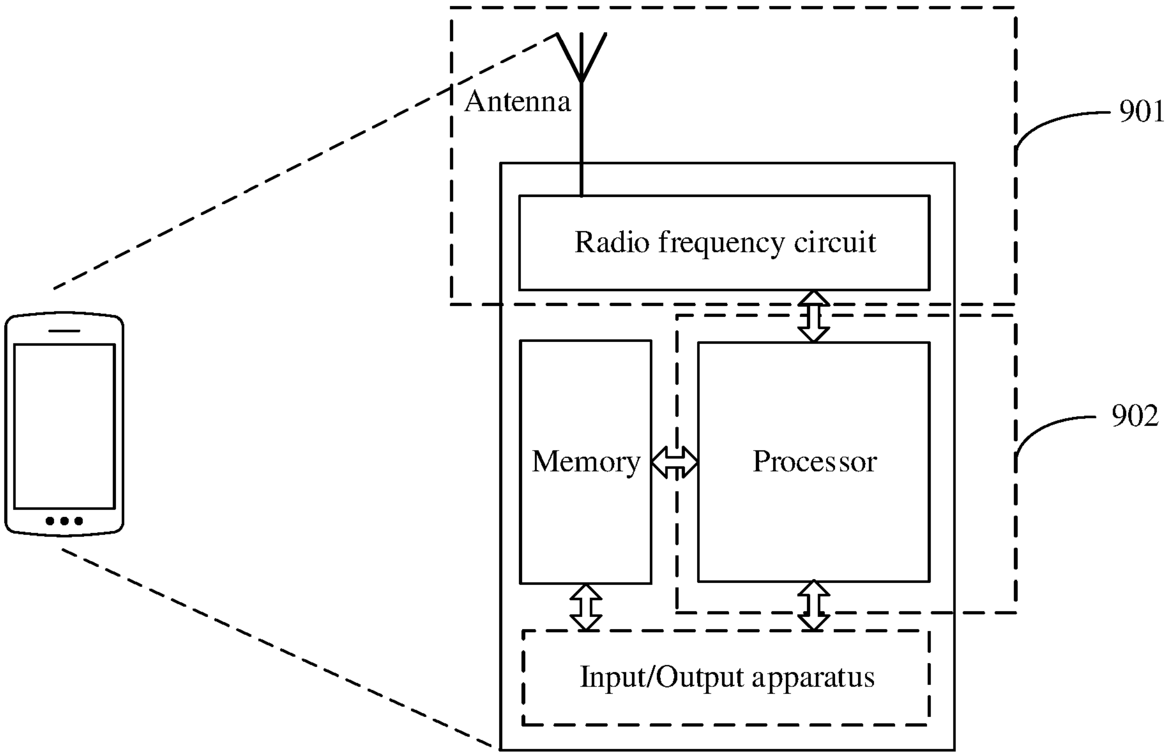
Antenna
901
Radio frequency circuit
902
Memory
Processor
Input/Output apparatus

FIG. 9

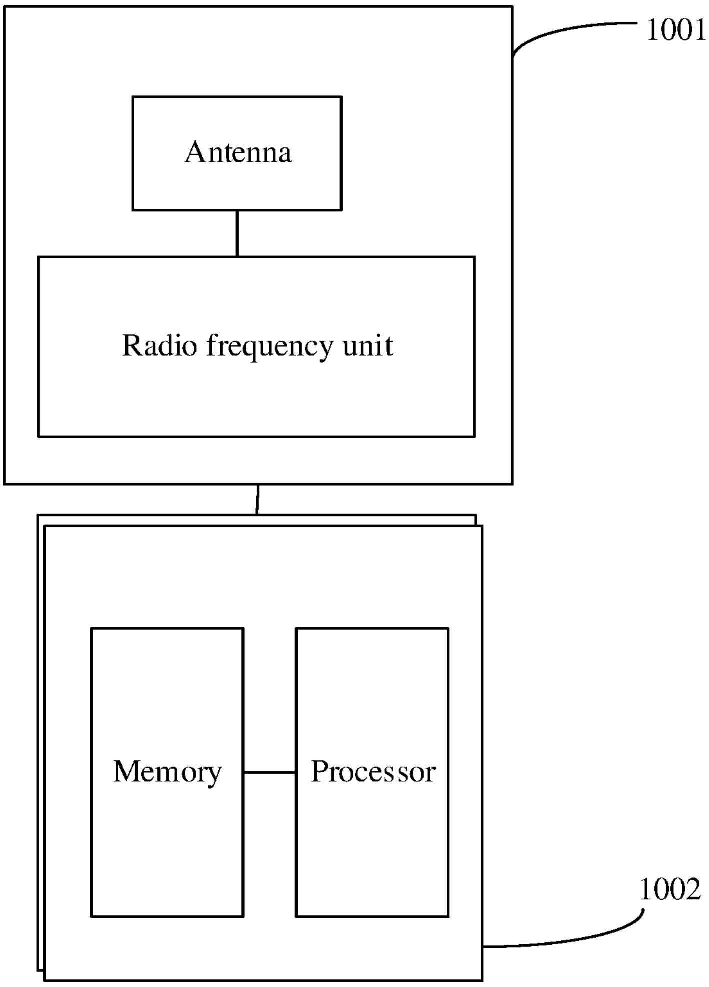
1001
Antenna
Radio frequency unit
Memory
Processor
1002

FIG. 10

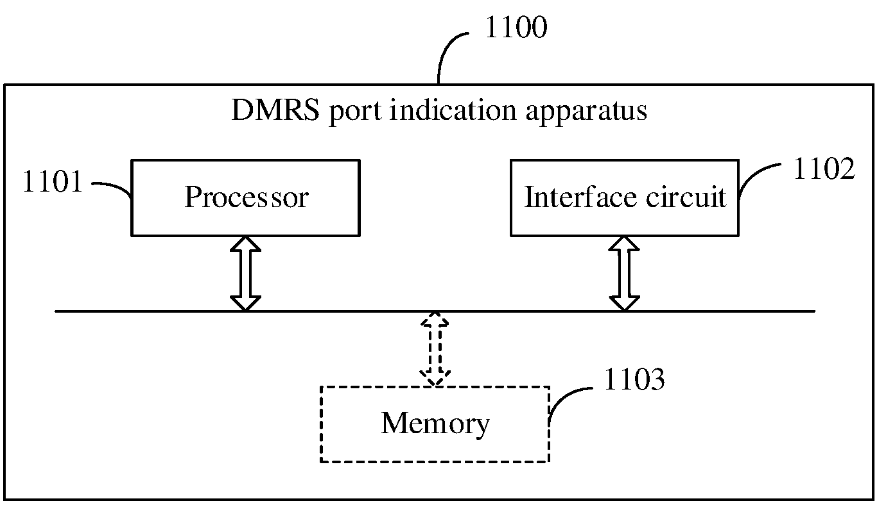
1100
DMRS port indication apparatus
1101
Processor
Interface circuit
1102
1103
Memory

FIG. 11

**INTERNATIONAL SEARCH REPORT**

International application No.
**PCT/CN2023/108632**

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, DWPI, ENTXT, 3GPP: 解调参考信号, DMRS, 端口, 指示, 最大时域符号长度, maxLength, 关联, 码分复用, 天线, 下行控制信息, DCI; Demodulation Reference Signal, Port, Indication, Maximum Time Domain Symbol Length, association, Code Division Multiplexing, antenna, Downlink Control Information

**C. DOCUMENTS CONSIDERED TO BE RELEVANT**

| Category* | Citation of document, with indication, where appropriate, of the relevant passages | Relevant to claim No. |
|---|---|---|
| A | CN 114731258 A (TELEFONAKTIEBOLAGET LM ERICSSON (PUBL)) 08 July 2022 (2022-07-08)<br>description, paragraph [0021] to paragraph [0048] | 1-34 |
| A | CN 111555850 A (RESEARCH INSTITUTE CHINA MOBILE COMMUNICATIONS CORP. et al.) 18 August 2020 (2020-08-18)<br>entire document | 1-34 |
| A | CN 111786757 A (TELECOMMUNICATIONS TECHNOLOGY RESEARCH INSTITUTE CO., LTD.) 16 October 2020 (2020-10-16)<br>entire document | 1-34 |
| A | WO 2020143609 A1 (SPREADTRUM SEMICONDUCTOR NANJING CO., LTD.) 16 July 2020 (2020-07-16)<br>entire document | 1-34 |
| A | Moderator (vivo). ""R1-2103817""<br>*3GPP tsg_ran\wg1_rl1,* 12 April 2021 (2021-04-12),<br>entire document | 1-34 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 November 2023** | **07 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/108632**

| Patent document cited in search report | Publication date (day/month/year) | Patent family member(s) | Publication date (day/month/year) |
|---|---|---|---|
| CN 114731258 A | 08 July 2022 | EP 4042627 A1 | 17 August 2022 |
| | | EP 4042627 B1 | 20 September 2023 |
| | | US 2022330254 A1 | 13 October 2022 |
| | | WO 2021064705 A1 | 08 April 2021 |
| CN 111555850 A | 18 August 2020 | None | |
| CN 111786757 A | 16 October 2020 | None | |
| WO 2020143609 A1 | 16 July 2020 | US 2022400050 A1 | 15 December 2022 |
| | | KR 20210126596 A | 20 October 2021 |
| | | JP 2022517999 A | 11 March 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210972325